(19) Europäisches Patentamt
European Patent Office
Office européen des brevets

(11) EP 2 893 545 B1

(12) # EUROPEAN PATENT SPECIFICATION

(45) Date of publication and mention of the grant of the patent:
**13.01.2016 Bulletin 2016/02**

(21) Application number: **13758853.9**

(22) Date of filing: **04.09.2013**

(51) Int Cl.:
***H01H 33/56*** *(2006.01)* ***H01H 33/22*** *(2006.01)*
***G01N 21/75*** *(2006.01)*

(86) International application number:
**PCT/EP2013/068276**

(87) International publication number:
**WO 2014/037395 (13.03.2014 Gazette 2014/11)**

(54) **METHOD FOR OPERATING AN ELECTRICAL APPARATUS AND ELECTRICAL APPARATUS**

VERFAHREN ZUM BETREIBEN EINER ELEKTRISCHEN VORRICHTUNG UND ELEKTRISCHE VORRICHTUNG

PROCÉDÉ PERMETTANT DE FAIRE FONCTIONNER UN APPAREIL ÉLECTRIQUE, ET APPAREIL ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.09.2012 PCT/EP2012/067219**
**19.06.2013 EP 13172591**

(43) Date of publication of application:
**15.07.2015 Bulletin 2015/29**

(73) Proprietor: **ABB Technology AG**
**8050 Zürich (CH)**

(72) Inventors:
- **PAUL, Thomas Alfred**
  **CH-8820 Wädenswil (CH)**
- **KRAMER, Axel**
  **CH-5430 Wettingen (CH)**
- **KILLER, Eric**
  **CH-5430 Wettingen (CH)**
- **MANTILLA, Javier**
  **CH-5400 Baden (CH)**
- **CLAESSENS, Max-Steffen**
  **CH-5417 Untersiggenthal (CH)**
- **GROB, Stephan**
  **CH-5400 Baden (CH)**
- **BRÄNDLE, Hubert**
  **CH-8102 Oberengstringen (CH)**
- **COSSALTER, Oliver**
  **CH-5442 Fislisbach (CH)**
- **BUERGLER, Mathias-Dominic**
  **CH-5405 Baden-Dättwil (CH)**

(74) Representative: **ABB Patent Attorneys**
**c/o ABB Schweiz AG**
**Intellectual Property CH-IP**
**Brown Boveri Strasse 6**
**5400 Baden (CH)**

(56) References cited:
**WO-A1-92/00515**
**DE-U1-202009 009 305**
**GB-A- 2 126 790**
**US-A- 4 052 555**
**US-A- 5 218 212**
**US-A1- 2002 095 262**
**US-A1- 2008 135 817**

- **KURTE R. ET AL: "Application of infrared spectroscopy to monitoring gas insulated high-voltage equipment: electrode material-dependent SF 6 decomposition", ANALYTICAL AND BIOANALYTICAL CHEMISTRY, vol. 373, no. 7, 13 April 2002 (2002-04-13), pages 639-646, XP055062264, ISSN: 1618-2642, DOI: 10.1007/s00216-002-1280-4 cited in the application**

EP 2 893 545 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to a method for operating a fluid-insulated electrical apparatus. Furthermore, it relates to such an electrical apparatus having an analysis and control unit implementing such a method and to a power transmission network comprising such an electrical apparatus.

Introduction and Background Art

Dielectric insulation media in liquid and/or gaseous states (i.e. fluids) are widely applied to insulate an electrically active part in a variety of electrical apparatuses, such as switchgear or transformers. For example, the electrically active part in medium-voltage or high-voltage metal-encapsulated switchgear is arranged in a gas-tight compartment which encloses an insulation gas with a pressure of several bars which electrically separates the compartment of the apparatus from the electrically active part. In other words, the insulation gas does not allow the passage of electrical current from the electrically active part to the compartment. A commonly used dielectric insulation gas is sulfur hexafluoride ($SF_6$), which exhibits excellent insulation and electric arc extinguishing capabilities. However, $SF_6$ is a strong contributor to the green-house effect and thus has a high global warming potential. Therefore alternative insulation fluids should be found.
Several alternative insulation fluids have been identified. Some of these alternatives comprise multi-component fluid mixtures, i.e. they comprise more than one molecular or atomic species. It is found that certain properties of such insulation fluid mixtures are viable for the safe operation of the electrical apparatus. As an example, the dielectric breakdown strength of the insulation fluid is strongly dependent on the concentration ratio of the mixture components and on the total fluid pressure. In order to maintain the mixture’s insulating features and thus the safety and functionality of the electrical apparatus, the concentrations of the different fluid components of the insulation fluid and the total number of particles in the fluid must remain constant or at least within certain boundaries. Furthermore, a certain level of purity of the insulation gas mixture needs to be ensured. For this, sensor devices are used for offline monitoring of the insulation fluid.
US 2002/0095262 A1 and US 7,184,895 B2 describe methods and devices for monitoring the proportion of a component in a gaseous insulation medium consisting of at least two components.
The publication "Application of infrared spectroscopy to monitoring gas insulated high-voltage equipment: electrode material-dependent SF6 decomposition" by R. Kurte et al., Anal. Bioanal. Chem. (2002) 373: 639-646 describes the usage of an infrared spectroscopy system to determine contaminants from electrical discharges in an $SF_6$-insulated discharge chamber.
US 5,218,212 A discloses a device for optically detecting a chemical change of a fluid.
US 2008/135817 A1 discloses a gaseous dielectric compound with low global warming potential.
US 4,052,555 A discloses gaseous dielectric compositions.
DE 20 2009 009 305 U1 discloses an electrical switchgear with an insulation medium.
GB 2 126 790 A discloses a three phase circuit-breaker panel.
The disclosed methods and devices have the disadvantage, however, that they do not monitor multicomponent insulation fluids and do not derive an operating state or various operating states of the electrical apparatus.

Disclosure of the Invention

Hence it is a general objective of the present invention to provide an improved method for operating an electrical apparatus. It is a further object of the invention to provide an electrical apparatus that implements such an operating method. Yet another objective of the invention is to provide a power transmission network comprising such an electrical apparatus. Yet another objective of the invention is to provide a computer program element that implements such a method.
These objectives are achieved by the method and devices of the independent claims.
Accordingly, a method for operating a fluid-insulated electrical apparatus (e.g. gas-insulated medium-voltage or high-voltage switchgear, a gas-insulated line, or a gas-insulated transformer) comprises the step of carrying out at least one optical measurement and/or at least one gas chromatographic measurement on an insulation fluid of the electrical apparatus. In the case of both an optical measurement and a gas chromatographic measurement, the measurements can be carried out simultaneously or one after another.
The term "optical measurement" herein relates to an experimental quantification of a physical property of the insulation fluid comprising interactions between atoms or molecules of the insulation fluid and photons. Examples are

- optical absorption measurements by means of, e.g., a multi-pass spectroscope at, e.g., at least one photon wavelength between 0.2 micrometer (μm) and 20 micrometer (μm), or

- fluorescence measurements, e.g., at at least one fluorescence excitation wavelength between 100 nm and 400 nm and/or at at least one fluorescence emission wavelength between 350 nm and 600 nm.
- photoacoustic measurements by means of optical excitation, e.g., in the range between 0.2 μm and 20 μm, followed by detection of the acoustic response of the insulation fluid using, e.g., a microphone.

The term "gas chromatographic measurement" herein relates to an experimental quantification of a physical property (e.g. a retention time) of at least one fluid component of the insulation fluid comprising interactions between atoms or molecules of the insulation fluid and a carrier fluid called the "mobile phase" and a fixed material called the "stationary phase". This stationary phase can, e.g., be located in a column of a gas chromatograph.

The insulation fluid comprises at least two fluid components A and B, i.e. it comprises a mixture of at least a first fluid component A and a second fluid component B. This/these fluid component(s) A and/or B can be liquid and/or gaseous under normal operating conditions (e.g. room temperature and pressure) of the electrical apparatus, e.g. fluid component B can be air or technical air and fluid component A can e.g. be one of the partially or fully fluorinated fluoroketones C5, C6, or C7 (see definitions below). The insulation fluid is enclosed in at least one compartment of the electrical apparatus for insulating, e.g., an electrically active part of the electrical apparatus.

In embodiments, a molecular weight of the first fluid component A differs from a molecular weight of the second fluid component B, in particular at least by a factor of 2, particularly at least by a factor of 5.

Then, a first concentration of the first fluid component A of the insulation fluid is derived using the optical measurement (first option). If a gas chromatographic measurement is used (second option, alternatively or in addition), a or the first concentration of the first fluid component A is derived using the gas chromatographic measurement.

Furthermore, a second concentration of the second fluid component B of the insulation fluid is derived.

The fluid components A and B are not contaminants (e.g. decomposition products from, e.g., the insulation fluid or other parts of the electrical apparatus), in particular they are intended ingredients of the insulation fluid. The term "contaminant" or "decomposition product" herein relates to a chemical substance or mixture that is not an a priori or desired ingredient of the insulation fluid. As an example, due to high voltage arcing or partial discharges during operation of the electrical apparatus, such contaminants can be produced from the originally present fluid components of the insulation fluid. In other words, contaminants are chemical substances that are not intentionally present in the insulation fluid of the electrical apparatus.

The term "concentration" herein defines

- a quantity (with units) which is indicative of an amount per volume unit, e.g. a particle number per volume unit, moles per volume unit, or a number density, or
- a number (without units) which is indicative of a ratio such as a mole fraction, a pressure-normalized partial pressure, a volume fraction, a mass fraction, or a density fraction.

Then, an operating state of the electrical apparatus is derived using the first concentration of the first fluid component of the insulation fluid mixture and using the second concentration of the second fluid component of the insulation fluid mixture.

The term "operating state" herein relates to a state of the electrical apparatus indicative of its availability for normal, i.e. undisturbed, operation. The operating states of the electrical apparatus can be selected from a plurality of possible operating states. Possible operating states of the electrical apparatus can, e.g., comprise "operational" and "failure". Thus, the current operating state of the electrical apparatus can be determined using the concentrations of the first and second fluid component of the insulation fluid, and optionally further measures (e.g. an emergency shutdown) can be taken depending on the operating state of the electrical apparatus.

In an embodiment, the method further comprises a step of at least partially filling or replenishing the compartment with the insulation fluid. This step can, e.g., be carried out during commissioning, i.e. installation, of the electrical apparatus, or during maintenance of the electrical apparatus. Then, the step of carrying out the optical measurement and/or the gas chromatographic measurement is or are carried out during and/or after the filling or replenishing of the compartment. Thus, the measurement(s) can be carried out on the insulation fluid which is used for actual operation of the electrical apparatus. Thus, potential measurement errors are reduced because the measurement(s) is or are taken within the electrical apparatus and not only on the insulation fluid before filling.

In an embodiment, the optical measurement and/or the gas chromatographic measurement, the deriving of the first concentration, the deriving of the second concentration, and the deriving of the operating state are carried out by the electrical apparatus itself. In other words, no separate sensor device or other measurement unit is necessary, but all the necessary sensors and processing units are permanent parts of the electrical apparatus. Thus, the electrical apparatus provides a "self-diagnostic" or "self-monitoring" functionality, thus reducing maintenance efforts and costs. Furthermore, less additional equipment needs to be carried to the site for commissioning or maintenance.

In another embodiment, at least one of or all of: the optical measurement and/or the gas chromatographic measurement, the deriving of the first concentration, the deriving of the second concentration, and the deriving of the operating state are carried out in an add-on device to the electrical apparatus. The add-on device may be installed permanently or temporarily at the electrical apparatus. The add-on device may also be a stand-alone device which is connectable to the electrical apparatus as may be required for measurement or monitoring, e.g. the add-on or stand-alone device may be fluidly connectable, i.e. connectable to extract a sample for analysis (e.g. in an exemplary embodiment via a self-sealing insulation fluid port), to at least one or each encapsulated compartment, and/or may be connectable electrically or via a data transmission line to a control unit of the electrical apparatus or GIS (gas-insulated switchgear), or substation.

In another embodiment, the second concentration of the second fluid component B of the insulation fluid is also derived using the optical measurement and/or using the gas chromatographic measurement. Thus, no further measurements are necessary and costs and complexity are reduced.

Alternatively or in addition, the second concentration of the second fluid component B of the insulation fluid is derived (or additionally derived to an already derived second concentration value) using a density measurement or using a pressure- and a temperature-measurement of the insulation fluid. Thus, an additional measurement principle is employed and second concentration values derived using different measurements can optionally be compared to each other. Thus, potential measurement errors can be reduced and reliability is enhanced.

In the case of a pressure- and/or temperature- and/or density-measurement, the step of deriving the second concentration can comprise the use of an equation of state (i.e. a "thermodynamic equation describing the state of matter under a given set of physical conditions" (from http://en.wikipedia.org/wiki/Equation_ of_state as accessed on May 03, 2012)) which is, e.g., selected from the group consisting of

- the ideal gas law, i.e. $pV = nRT$ with p being an absolute pressure, V being a volume, n being a number of molecules (usually expressed in moles), R being the ideal gas constant, and T being an absolute temperature,
- the van-der-Waals equation of state, i.e. $(p+a/V_m^2)(V_m-b)=RT$ with $V_m$ being a molar volume and a, b being substance-specific parameters for the respective insulation fluid component,
- the virial equation of state, i.e. $pV_m/(RT) = 1 + B(T)/V_m + C(T)/V_m^2 + D(T)/V_m^3 + \ldots$ with B(T), C(T), D(T), ... being temperature-dependent terms that correspond to interactions between molecules,
- the Beattie-Bridgeman equation of state, i.e. $p = R_uT/(V_m^2)(1-c/(V_mT^3))(V_m+B)-A/(V_m^2)$ with $A = A_0(1-a/V_m)$, $B = B_0(1-b/V_m)$, $R_u$ being a gas constant in the form $R_u$ = 8.314 kPa $m^3$/(kmol K), $V_m$ being a molar volume, and a, b, c, $A_0$, and $B_0$ being substance-specific parameters for the respective insulation fluid component, and
- the Peng-Robinson equation of state, i.e. $p = RT/(V_m-e) - d(T)/(V_m(V_m+e) + e(V_m-e))$ with d(T) and e being empirical parameters.

When an equation of state other than the ideal gas law is used, the behavior of a gas can be better predicted than with the ideal gas law alone and the prediction can be extended to liquids. This is possible by putting in terms to describe attractions and repulsions between molecules as well as the molecular volume itself which leads to a reduction in the molar volume.

In another embodiment, the operating state of the electrical apparatus is selected from a group of possible operating states consisting of

- normal, i.e. undisturbed, operation of the electrical apparatus,
- uniform leakage of the insulation fluid, i.e. fluid-component-independent loss of insulation fluid from the compartment of the electrical apparatus,
- preferential leakage of one fluid component (A or B) of the insulation fluid, i.e. increased loss of one fluid component compared to the other fluid component, thus leading to a change of a mixing ratio of the insulation fluid,
- condensation or preferential condensation of one fluid component of the insulation fluid, e.g. a state transition from gaseous to liquid state or vice versa of only one or at least preferentially one fluid component (A or B) of the insulation fluid,
- adsorption or preferential adsorption of one fluid component (A or B) of the insulation fluid, e.g. on a component of the electrical apparatus, e.g. on an inner surface of the compartment of the electrical apparatus,
- reaction or preferential reaction of one fluid component (A or B) of the insulation fluid, e.g. with a component of the electrical apparatus, e.g. with sealing material,
- appearance of at least one new fluid component in the insulation fluid, e.g. due to arcing, partial discharges, evaporation, light, high temperature, and/or reactions of at least one of the fluid components (A and/or B) with materials in the electrical apparatus, in particular wherein the new fluid component is a contaminant, and
- decomposition or preferential decomposition of at least one fluid component (A and/or B) of the insulation fluid, e.g. due to arcing, partial discharges, light, high temperature, and/or reactions of at least one of the fluid components

(A and/or B) with materials in the electrical apparatus.

Thus, a plurality of different fault scenarios for the electrical apparatus can be distinguished and troubleshooting in the case of malfunctions is simplified.

Other optional possible operating states are or comprise

- intermolecular reactions between molecules of the at least two fluid components (A, B) of the insulation fluid,
- removal of at least one of the at least two fluid components (A, B) of the insulation fluid, e.g. due to adsorption onto surfaces,
- inoperable because of a too high humidity level in the insulation fluid, and
- gas maintenance needed to reduce a humidity level in the insulation fluid.

The last two operating states require the knowledge of a humidity in the compartment of the electrical apparatus, e.g. obtained by a measurement.

Thus, even more fault scenarios for the electrical apparatus can be distinguished and troubleshooting in the case of malfunctions is improved and/or simplified.

In another embodiment, the optical measurement and/or the gas chromatographic measurement, the deriving of the first and second concentrations, and - optionally - the deriving of the operating state are carried out repeatedly, e.g. at least once a day, preferably at least four times a day, more preferably at least once an hour. Thus, it is possible to derive a trend over a longer period of time thereby improving and/or simplifying predictions of malfunctions and troubleshooting. Alternatively or additionally, in another embodiment of the method, the above mentioned steps are carried out after a triggering event is received by the electrical apparatus, e.g. from a higher-hierarchy monitoring device ("polling"). Thus, an on-demand query of the status of the electrical apparatus becomes possible.

In another embodiment of the method, the first fluid component A is selected from the group consisting of:

- sulfur hexafluoride,
- partially or fully fluorinated ethers, in particular hydrofluoroethers, hydrofluoro monoethers, hydrofluoro monoethers containing at least 3 carbon atoms, perfluoro monoethers, or perfluoro monoethers containing at least 4 carbon atoms, fluorooxiranes, perfluorooxiranes, hydrofluorooxiranes, perfluorooxiranes comprising from three to fifteen carbon atoms, hydrofluorooxiranes comprising from three to fifteen carbon atoms, and mixtures thereof,
- partially or fully fluorinated ketones, in particular hydrofluoro monoketones, perfluoro monoketones, perfluoro monoketones comprising at least 5 carbon atoms, or perfluoro monoketones comprising exactly 5 or 6 or 7 or 8 carbon atoms, and mixtures thereof,
- fluoroolefins; in particular: perfluoroole-fines, hydrofluoroolefins (HFO), hydrofluoroolefins (HFO) comprising at least three carbon atoms, hydrofluoroolefins (HFO) comprising exactly three carbon atoms, trans-1,3,3,3-tetrafluoro-1-propene (HFO-1234ze), 2,3,3,3-tetrafluoro-1-propene (HFO-1234yf), and mixtures thereof; and
- mixtures thereof.

The second fluid component B is selected from the group consisting of:

- nitrogen,
- oxygen,
- carbon dioxide,
- nitric oxide,
- nitrogen dioxide,
- nitrous oxide,
- argon,
- methanes, in particular partially or fully halogenated methanes, in particular tetrafluoromethane or trifluoroiodomethane,
- air, in particular technical air or synthetic air or natural air, and
- mixtures thereof.

Thus, an improved insulation performance can be achieved for the insulation fluid of the electrical apparatus.

In embodiments, the first fluid component A is selected from the group consisting of:

- cyclic and/or aliphatic fluoropentanones, preferably cyclic and/or aliphatic perfluoropentanones, more preferably 1,1,1,3,4,4,4-heptafluoro-3-(tri-fluoromethyl)butan-2-one,
- cyclic and/or aliphatic fluorohexanones, preferably cyclic and/or aliphatic perfluorohexanones, more preferably

1,1,1,2,4,4,5,5,5-nonafluoro-4-(trifluoromethyl)pentan-3-one,
- cyclic and/or aliphatic fluoroheptanones, preferably cyclic and/or aliphatic perfluoroheptanones,
- sulfur hexafluoride, and
- hydrofluoroethers.

Thus, an improved insulation performance can be achieved for the insulation fluid of the electrical apparatus.

In another embodiment, the second fluid component B consists of

nitrogen and oxygen with relative partial pressures between $p(N_2)/(p(O_2)+p(N_2))=0.7$, $p(O_2)/(p(O_2)+ p(N_2))=0.3$ and $p(N_2)/(p(O_2)+p(N_2))=0.95$, $p(O_2)/(p(O_2)^+ p(N_2))=0.05$ or

carbon dioxide and oxygen with relative partial pressures between $p(CO_2)/(p(O_2)+p(CO_2))=0.6$, $p(O_2)/(p(O_2)+p(CO_2))=0.4$ and $p(CO_2)/(p(O_2)+p(CO_2))=0.99$, $p(O_2)/ (p(O_2)+p(CO_2))=0.01$, or

carbon dioxide and nitrogen with relative partial pressures between $p(CO_2)/(p(N_2)+p(CO_2))=0.1$, $p(N_2)/(p(N_2)+p(CO_2))=0.9$ and $p(CO_2)/(p(N_2)+p(CO_2))=0.9$, $p(N_2)/(p(N_2)+p(CO_2))=0.1$.

The first fluid component A comprises at least one of the group consisting of:

1,1,1,3,4,4,4-heptafluoro-3-(tri-fluoromethyl)butan-2-one with a partial pressure between 0.1 bar and 0.7 bar at a temperature of 20°C (degrees Celsius),

1,1,1,2,4,4,5,5,5-nonafluoro-4-(trifluoromethyl)pentan-3-one with a partial pressure between 0.01 bar and 0.3 bar at a temperature of 20°C,

sulfur hexafluoride with a partial pressure between 0.1 bar and 2 bar at a temperature of 20°C, and

hydrofluoroethers with a partial pressure between 0.2 bar and 1 bar at a temperature of 20°C.

Thus, an improved insulation performance can be achieved for the insulation fluid of the electrical apparatus.

In another embodiment, the second fluid component B comprises

nitrogen and oxygen with relative partial pressures between $p(N_2)/(p(O_2)+p(N_2))=0.75$, $p(O_2)/(p(O_2) + p(N_2))=0.25$ and $p(N_2)/(p(O_2)+p(N_2))=0.90$, $p(O_2)/(p(O_2) + p(N_2))=0.10$ and

wherein the first fluid component (A) comprises 1,1,1,3,4,4,4-heptafluoro-3-(tri-fluoromethyl)butan-2-one with a partial pressure between 0.25 bar and 0.5 bar and/or the fluid component 1,1,1,2,4,4,5,5,5-nona-fluoro-4-(tri-fluoromethyl)pentan-3-one with a partial pressure between 0.02 bar and 0.3 bar at a temperature of 20°C.

Thus, an improved insulation performance can be achieved for the insulation fluid of the electrical apparatus.

The optical measurement is in an embodiment carried out on the insulation fluid in the compartment. In other words, no insulation fluid needs to be extracted from the compartment of the electrical apparatus for or prior to carrying out the optical measurement. Thus, no insulation fluid is lost for the optical measurement, costs are saved and operation periods without refilling insulation fluid can be prolonged.

In an alternative embodiment, an amount (e.g. a relatively small amount, e.g. 1 ml at 1 bar) of the insulation fluid is extracted from the compartment of the electrical apparatus prior to carrying out the optical measurement and/or the gas chromatographic measurement. Then, the optical measurement and/or the gas chromatographic measurement is or are carried out on the extracted amount of insulation fluid. Thus, the measurement or measurements can be carried out outside the compartment thus simplifying the setup of the electrical apparatus, because no measurement devices need to be introduced into the compartment.

Then, - after the measurement(s) - at least a part of the extracted amount of insulation fluid can optionally be re-injected into the compartment and/or be collected for disposal. Thus, the insulation fluid can (at least in part) be reused and/or disposed of in an environmentally friendly manner thus saving costs and reducing environmental impact.

In another embodiment, the optical measurement and/or the gas chromatographic measurement, the deriving of the first concentration, and the deriving of the second concentration are carried out for a plurality of compartments of the electrical apparatus. In other words, more than one compartment of the electrical apparatus encloses separate volumes of insulation fluid. The compartments are at least in part sealed with respect to each other. Then, the measurements are independently carried out for each of the compartments and the first concentrations and the second concentrations are independently derived for each of the compartments. Then, a single operating state of the electrical apparatus can be derived using the first and second concentrations in the different compartments. Thus, the monitoring of insulation fluid in multiple compartments becomes possible.

In embodiments, the optical measurement(s) is or are carried out by at least one optical sensor of the electrical apparatus and/or the gas chromatographic measurement (s) is or are carried out by at least one gas chromatograph of the electrical apparatus. Advantageously, the total number of optical sensors and gas chromatographs is smaller than or equal to the total number of compartments of the electrical apparatus. In other words, e.g. one optical sensor and/or gas chromatograph can be used for taking measurements of all compartments (multiplexing). Thus, complexity and costs are reduced.

In another embodiment of the method, the electrical apparatus comprises a or the optical sensor for carrying

out the optical measurement. For this, the optical sensor comprises one or more bulk optical component(s) (e.g. lenses, filters, mirrors, beam splitters, etc.) and/or one or more fiber optical component(s) (e.g. solid core optical fibers, hollow core optical fibers, light pipes, etc.) and a measurement cell for receiving an amount of the insulation fluid. Thus, a plurality of optical measurement principles can be employed on the insulation fluid, e.g. each of the above-mentioned compartments can comprise a fiber-optical fluorescence sensor for carrying out a fluorescence measurement on the insulation fluid in the respective compartment.

In embodiments, the measurement cell or - in case of a plurality of measurement cells - the measurement cells is or are at least in part formed by the compartment or compartments of the electrical apparatus. Thus, no separate measurement cells are necessary and the setup of the electrical apparatus is simplified.

In embodiments, at least one optical sensor is used for carrying out the optical measurement in the compartment or each of the compartments. Thus, the optical measurement on the insulation fluid in every compartment of the electrical apparatus can be carried out independently.

In other embodiments, in which the optical measurement is carried out by an optical sensor, at least a part of the optical sensor, in particular a measurement cell of the optical sensor, is separated from the compartment of the electrical apparatus by an insulation-fluid-permeable protective cover, in particular an insulation-fluid-permeable and particle-impermeable protective cover. This protective cover is adapted to protect the optical sensor from particle contamination. In addition, protective means such as gas adsorbers (e.g. comprising a zeolite) can be provided, if contaminants, e.g. decomposition gases, are created which may damage the optical sensor.

In embodiments with such a protective cover, the protective cover comprises at least one of the group of

* a sintered material,
* a porous material, for example a porous metal
* a gauze,
* a mesh,
* a membrane, in particular comprising a polymer material, and
* combinations thereof.

Thus, an insulation-fluid-permable and yet particle-impermeable protective cover is easier to realize.

In other embodiments, a or the optical measurement comprises an optical measurement channel at a first wavelength (e.g. that is modified, in particular absorbed, by the first fluid component (A)), and an optical reference channel at a second wavelength that is not modified, in particular not absorbed, by the first fluid component (A).

Thus, factors adversely affecting the optical measurement like

- light source emission drift (wavelength and intensity e.g. due to aging, internal temperature and surrounding temperature)
- optical fiber transmission changes (e.g. due to bending losses, physical movement of fibers, stresses, temperature)
- transmission changes at optical connectors (e.g. due to physical movement, mechanical shock, vibration, stresses, temperature)
- transmission changes at optical interfaces (e.g. due to contamination)
- optical detector instabilities (e.g. due to aging)
- analyzer electronics instabilities (e.g. affected by electromagnetic interference or due to aging)

are easier to correct for. Thus, the precision and reliability of the optical measurement can be improved.

In another embodiment, the insulation fluid is circulated for homogenizing densities and/or a mixture of its first and second fluid components, in particular before carrying out the optical measurement and/or the gas chromatographic measurement. Thus, a derivation of average fluid component concentrations which are less dependent on local concentration deviations is improved or simplified.

In another embodiment, the first fluid component and the second fluid component of the insulation fluid are mixed for homogenizing a mixture of the first and second fluid components, in particular before carrying out the optical measurement and/or the gas chromatographic measurement. Thus, the insulation properties are improved.

It should be noted here that it is possible to carry out this mixing method element during filling/refilling of the compartment of the electrical apparatus with the insulation fluid, i.e., the first and the second fluid components can be filled into the compartment in a parallel but unmixed or even in a sequential manner and mixed therein. As an alternative, the first and second fluid components can be premixed outside of the compartment of the electrical apparatus and filled into this compartment.

As an alternative or in addition, it is also possible to carry out the above described mixing method element during operation of the electrical apparatus, e.g. in a regular interval (e.g. once a day or once an hour) and/or after a specific action (e.g. after a switching action) has been taken. The mixing method element can also be triggered by certain

operation states, e.g. by a preferential condensation of one fluid component. Thus, the insulation fluid can be remixed for strengthening the insulation properties of the insulation fluid.

In an embodiment comprising such a mixing method element, the method element of mixing the at least two fluid components comprises a disturbing of a laminar flow of the at least two fluid components. Thus, a turbulence is introduced. In other words, a momentum is transferred to particles of the at least two fluid components, a laminar flow is consequently disturbed and a turbulence is created. As a consequence, the at least two fluid components are mixed more thoroughly which results in a more homogeneous mixture of the insulation fluid. Thus, the mixture in the compartment is homogenized and the insulation properties can be improved.

Advantageously, different means for disturbing the laminar flow ("mixing means"), i.e. for transferring the momentum, can be used. In embodiments, the creation of a turbulence is achieved by means of a gas blender comprising at least one of the group of

- a tube mixer, in particular comprising a baffle, particularly a plurality of baffles, and/or comprising a perforated dip tube,
- a rotating mixer, in particular comprising a fan, particularly a foldable fan,
- a convection mixer, in particular comprising a heater,
- a radiation mixer, in particular comprising a UV light source or an IR light source,
- a volumetric mixer, in particular comprising a expandable volume, particularly a pneumatically expandable volume,
- a bypass mixer, and
- combinations thereof.

In embodiments, other designs can for examples also rely on an impeller or analogous moving parts, a blade, a paddle, or a helix. Also static obstacles can herein be used which cause turbulence such as grids, meshes, deflectors, porous structures, a helix, etc.

All these mixing means can also be used to destratify the gas, and to remove concentration and temperature gradients.

In another embodiment, the method further comprises a method element of

- detecting and/or tracing at least one contaminant and/or a method element of
- distinguishing at least two contaminants. This is achieved using

    * the optical measurement and/or using
    * an additional optical measurement (e.g. at a different wavelength) and/or using
    * the gas chromatographic measurement and/or using
    * an additional gas chromatographic measurement (e.g. using at least one different column) and/or using
    * the or an additional gas chromatographic measurement combined with a mass spectrometric measurement (e.g. on the fluid components that have been separated by a or the additional gas chromatographic measurement).

Thus, contaminants can be more easily detected and/or discriminated and the operating state of the electrical apparatus can be more reliably derived taking into account this contaminant or these contaminants.

In an embodiment, the method further comprises a step of deriving a dielectric breakdown strength $E_{bd}$ of the insulation fluid using the first concentration and using the second concentration, e.g. by using the following equation

$$E_{bd} = S(c_A, c_B) \sum_{i=A,B} c_i E_{crit,i}$$

with $E_{crit,A}$ and $E_{crit,B}$ being fluid component specific critical field strengths of the first fluid component A and the second fluid component B; with $c_A$ and $c_B$ being the first and second concentrations of the first and second fluid components A and B; with $S(c_A, c_B)$ being a synergy parameter; and with i being an index for the fluid components A and B. Then, the operating state can advantageously be derived using the dielectric breakdown strength $E_{bd}$ of the insulation fluid. Thus, a more reliable derivation of the operating state becomes possible.

In another embodiment, the method further comprises a step of deriving at least a third concentration of at least a third fluid component C (which is not a contaminant, i.e. which is meant to be a component of the insulation fluid) of the insulation fluid using

* the optical measurement and/or using
* an additional optical measurement and/or using

* the gas chromatographic measurement and/or using
* an additional gas chromatographic measurement.

Thus, insulation fluids with more than two fluid components can be used.

In another embodiment, the optical measurement comprises an optical absorption measurement or an optical fluorescence measurement at at least one wavenumber (or wavelength), i.e. at a single wavenumber (or wavelength) or within a wavenumber regime (or wavelength regime). Depending on the optical properties of the fluid components, suitable wavenumbers (for IR) or wavelengths (for UV) are between 500 $cm^{-1}$ and 1500 $cm^{-1}$ and/or between 200 nm and 400 nm, respectively. Preferred wavenumbers for IR are between 600 $cm^{-1}$ and 800 $cm^{-1}$ and/or between 940 $cm^{-1}$ and 1050 $cm^{-1}$ and/or between 1100 $cm^{-1}$ and 1400 $cm^{-1}$ and/or between 1750 $cm^{-1}$ and 1850 $cm^{-1}$. Preferred UV wavelengths are between 225 nm and 375 nm. Preferred absorption signal full-widths-at-half-maximum (i.e. FWHM of the absorption signal) are between 40 $cm^{-1}$ and 120 $cm^{-1}$ for IR absorption measurements and/or between 50 nm and 100 nm for UV absorption measurements at insulation fluid pressures between 1 bar and 10 bar and at insulation fluid temperatures of 20°C. Thus, the derivation of the fluid component concentration or concentrations is simplified.

In embodiments, the absorption measurement can be carried out by means of a cavity ringdown spectroscope (see, e.g., http://en.wikipedia.org/wiki/Cavity_ ring-down_spectroscopy as accessed on May 3, 2012), a Lambert-Beer spectroscope (see, e.g., http://en.wikipedia.org/wiki/File:IR_spectroscopy_apparatus.svg as accessed on May 3, 2012), a multi-pass spectroscope, a single wavelength (non-continuum) ultraviolet spectroscope, a single wavelength (non-continuum) infrared spectroscope, a Fourier-transform infrared spectroscope (see, e.g., http://en.wikipedia.org/wiki/Fourier_transform_ spectroscopy as accessed on May 3, 2012), a Raman spectroscope (see, e.g., http://en.wikipedia.org/wiki/ Raman_spectroscopy as accessed on May 3, 2012) or a photoacoustic spectroscope (see, e.g., http://en.wikipedia .org/wiki/Photoacoustic_spectroscopy as accessed on June 6, 2012). All methods can be performed in dispersive and nondispersive mode. Thus, the optical absorption measurement is easier to carry out.

In another embodiment, the optical measurement comprises a fluorescence emission measurement, in particular at at least one fluorescence excitation wavelength between 200 nm and 400 nm and/or at at least one fluorescence emission wavelength between 350 nm and 600 nm. Thus, the derivation of the fluid component concentration or concentrations is simplified.

In principle, a burning arc between contacts of the electrically active part could also act as light source for the optical measurement, either in addition to a separate light source or as a sole light source. As an example, such a burning arc emits electromagnetic radiation in a broad wavelength range, also in the above-mentioned UV-regions.

In embodiments, the method is carried out during a regular operation of the electrical apparatus. The term "regular operation" or equivalently "live operation" herein relates to an operation condition of the electrical apparatus in which the electrical apparatus is available to perform its dedicated functionality, e.g. current conduction or high-voltage switching. In other words, the electrical apparatus is not shut-down or disconnected for maintenance. This has the advantage that the method can be applied online (i.e. during live operation) and that maintenance intervals can be increased.

In another embodiment, a pressure of the insulation fluid in the compartment during the optical measurement and/or the gas chromatographic measurement is an operating pressure (e.g. > 1 bar at 20°C, more particularly > 3 bar, most particularly > 5 bar) for the electrical apparatus. This has the advantage that the method can be carried out online or in an operation condition or during a regular operation of the electrical apparatus and that the electrical apparatus does not have to be shut down for maintenance to carry out the optical measurement and/or the gas chromatographic measurement.

In another embodiment, an operating voltage (e.g. > 1 kV or > 50 kV) is applied over primary contacts, e.g. high-voltage contacts, of the electrical apparatus during the optical measurement and/or the gas chromatographic measurement. This has the advantage that the method can be carried out online or in an operation condition or during a regular operation of the electrical apparatus and that the electrical apparatus does not have to be shut down for maintenance to carry out the optical measurement and/or the gas chromatographic measurement.

In another embodiment, the gas chromatographic measurement is carried out by means of a multicolumn gas chromatograph (see, e.g., Agilent 490 Micro GC, http://www.chem.agilent.com/Library/brochures/5990-6664EN_490%20Micro%20GC.pdf as accessed on June 20, 2012) comprising at least a first and a second column with a first and a second stationary phase. In particular, the first concentration of the first fluid component is then derived using the first column of the multicolumn gas chromatograph and the second concentration of the second fluid component is then derived using the second column of the multicolumn gas chromatograph. Thus, the fluid component concentrations can more easily be derived using the gas chromatographic measurement or measurements for fluid components that are not compatible with a single column gas chromatograph (see, e.g., Agilent 7820A GC, http://www.chem.agilent.com/Library/Brochures/5990-3326EN_web.pdf as accessed on June 20, 2012).

In another embodiment, the method further comprises at least one step of the group consisting of

- increasing the first concentration of the first fluid component by means of injecting an amount of the first fluid component from a component reservoir comprising the first fluid component into the compartment of the electrical apparatus,
- increasing the second concentration of the second fluid component by means of injecting an amount of the second fluid component from a component reservoir comprising the second fluid component into the compartment of the electrical apparatus,
- reducing a concentration of at least one contaminant (i.e. an unwanted substance in the insulation fluid) in the insulation fluid, in particular by means of a filter adsorbing the contaminant,
- evaporating a condensed amount of the first and/or the second fluid component, in particular by means of a heater, and
- condensing an amount of the first and/or the second fluid component and/or of a contaminant, in particular by means of a cooler.

Thus, a suitable mixing ratio for the insulation fluid can more easily be maintained.

In yet other embodiments, the method comprises an additional method element of

- measuring a humidity (i.e. a moisture level) in the compartment of the electrical apparatus.

Such moisture can have different sources:

- it can be desorbed from metallic and polymeric surfaces,
- it can stem from the atmosphere and enter the compartment through leaks and sealings,
- it can stem from the filled insulation fluid, and/or
- it can be desorbed from adsorbers.

However, it can be important to keep humidity levels in the compartment rather low. For example, condensation of water increases the risk of flashovers. As well, perfluorketones as insulation fluid components could be deteriorated or be decomposed in the presence of water, thereby forming various undesirable contaminants. As a consequence, the dielectric performance of the insulation gas may be reduced.

A humidity sensor or a method element of measuring the relative humidity is in particular embodied, as further detailed in connection with the figures, by at least one of the group of

* A capacitive humidity sensor;
* A resistive humidity sensor;
* An oscillating resonator coated with a hygroscopic layer;
* A thermal conductivity sensor;
* A or the optical sensor.

For all listed sensors, protection of the sensor can be necessary to avoid interference or even damage caused by the presence of undesired decomposition products or contaminants, e.g. HF. For that purpose, the sensors can be enclosed by a semipermeable membrane, e.g. a protective cover as disclosed herein, that restrict passage to only the nominal insulation gas components and water.

As another aspect of the invention, an electrical apparatus (e.g. gas-insulated medium-voltage or high-voltage switchgear) comprises at least one compartment enclosing an insulation fluid comprising at least a first fluid component with a first concentration and at least a second fluid component with a second concentration. The electrical apparatus furthermore comprises an optical sensor for carrying out an optical measurement on the insulation fluid indicative of the first concentration and/or a gas chromatograph for carrying out a gas chromatographic measurement on the insulation fluid indicative of the first concentration. Furthermore, the electrical apparatus comprises an analysis and control unit for carrying out the steps of a method as described above.

The electrical apparatus can in an embodiment be connectable to an insulation fluid filling device (i.e. filling apparatus or filling device) by an interface. Thus, the insulation fluid mixing ratio can be monitored during filling of the insulation fluid into the compartment, e.g. during commissioning of the electrical apparatus or during replenishing of insulation fluid during maintenance. Thus, less additional sensor devices are necessary.

In another embodiment, the electrical apparatus comprises an insulation fluid port, in particular a self-sealing insulation fluid port. The insulation fluid port is in a fluid communication with the compartment of the electrical apparatus. In other words, the optical sensor and/or gas chromatograph is or are connectable, in particular reversibly connectable, to the compartment and thus to the insulation fluid in the compartment of the electrical apparatus by means of the insulation fluid port. Thus, the optical measurement and/or the gas chromatographic measurement are easier to carry out without loosing a larger amount of insulation fluid from the compartment.

As another aspect of the invention, a computer program element comprising computer program code means for, when executed by a processing unit, implementing a method as described above is disclosed. This enables the integration of a method as described above into an electrical apparatus comprising an analysis and control unit.

As another aspect of the invention, a power transmission network is disclosed, in particular a medium-voltage or high-voltage power transmission network, which comprises an electrical apparatus as disclosed above.

The described embodiments and/or features similarly pertain to the apparatuses, the methods, and the computer program element. Synergetic effects may further arise from different combinations of these embodiments and/or features although they might not be described in detail.

Brief Description of the Drawings

The invention and its embodiments will be more fully appreciated by reference to the following detailed description of presently preferred but nonetheless illustrative embodiments in accordance with the present invention when taken in conjunction with the accompanying drawings.

Fig. 1 shows a schematic of an electrical apparatus according to a first embodiment of the invention, the electrical apparatus comprising two insulation fluid filled compartments with an optical sensor arranged in each compartment;
Fig. 2 shows a schematic of an optical fluorescence sensor as used in the electrical apparatus according to the first embodiment of the invention;
Fig. 3 shows a schematic of an electrical apparatus according to a second embodiment of the invention, the electrical apparatus comprising two insulation fluid filled compartments with an insulation fluid extractor arranged in each compartment and with a single optical sensor;
Fig. 4 shows a schematic of an optical absorbance sensor as used in the electrical apparatus according to the second embodiment of the invention;
Fig. 5 shows a schematic of an electrical apparatus according to a third embodiment of the invention, the electrical apparatus comprising two insulation fluid filled compartments with an insulation fluid extractor arranged in each compartment and with a single gas chromatograph;
Fig. 6 shows a schematic of a gas chromatograph as used in the electrical apparatus according to the third embodiment of the invention, wherein the gas chromatograph comprises two columns and a mass spectrometer behind one column;
Fig. 7 shows a chromatogram illustrating the separation of insulation fluid components "$N_2/O_2$" and "C5" and "C6";
Fig. 8 shows two chromatograms illustrating loss of a specific fluid component "gas 4";
Fig. 9 shows two chromatograms illustrating detection of a contaminant;
Fig. 10 shows a power transmission network comprising an electrical apparatus according to the invention;
Fig. 11 shows an absorption diagram illustrating characteristic optical absorbance signatures of insulation fluid components "C5" and "C6";
Fig. 12 shows absorption diagrams illustrating the detection of a contaminant "HF" of the insulation fluid;
Fig. 13 shows an absorption diagram in the near UV range for "acetone", "C5", and "C6";
Fig. 14 shows fluorescence emission spectra of the insulation fluid component "C6" for different pressures and temperatures;
Fig. 15 shows an infrared absorption spectrum illustrating characteristic optical absorbance signatures of an insulation fluid component "C5";
Fig. 16 shows infrared absorption spectra illustrating the characteristic optical absorbance signatures of the insulation fluid component "C5" of Fig. 15 as well as characteristic optical absorbance signatures of a contaminant "$CF_4$";
Fig. 17 shows infrared absorption spectra illustrating the characteristic optical absorbance signatures of the insulation fluid component "C5" of Fig. 15 as well as characteristic optical absorbance signatures of a contaminant hexafluoropropene "$CF_3CF=CF_2$";
Fig. 18 shows infrared absorption spectra illustrating the characteristic optical absorbance signatures of the insulation fluid component "C5" of Fig. 15 as well as characteristic optical absorbance signatures of a contaminant heptafluoropropane "$CF_3CFHCF_3$";
Fig. 19 shows a schematic of an optical absorbance measurement comprising a spectrometer;
Fig. 20 shows an "optical absorption" vs. "C5 pressure" diagram as recorded by an optical setup of Fig. 19;
Fig. 21 shows a schematic of an optical absorbance measurement comprising a non-dispersive photodetector and a band-pass filter;
Fig. 22 shows a "transmitted intensity" vs. "C5 pressure" diagram as recorded by an optical setup of Fig. 21;
Fig. 23 illustrates the dependence of UV absorption of the insulation fluid component "C5" on different insulation fluid mixtures and/or pressures;
Fig. 24 similarly to Fig. 13 shows reference data for acetone and an insulation fluid component "C6" and absorption

diagrams for the insulation fluid components "C5" and "C6" for wavelengths between 200 nm and 400 nm;

Fig. 25 similarly to Fig. 22 shows a "transflected intensity" vs. "C5 pressure" diagram as well as a relative error dI/I;

Fig. 26 similarly to Fig. 25 shows a "transflected intensity" vs. "C5 pressure" diagram as well as a relative deviation to a theoretical fit dI/I;

Fig. 27 shows absorption spectra of the insulation fluid components "C5", "$O_2$", and "$CO_2$", and of the contaminant "hexafluoropropene" for wavelengths between 200 nm and 500 nm;

Fig. 28 shows absorbance spectra for insulation fluid components "C5", "C6", "C7", and "$CO_2$" for wavelengths between 1350 nm and 1950 nm;

Fig. 29 shows a zoomed part of the spectra of Fig. 28 for wavelengths between 1850 nm and 1950 nm;

Fig. 30 shows an absorption spectrum of the insulation fluid component "C5" for wavenumbers between 500 $cm^{-1}$ and 2000 $cm^{-1}$;

Fig. 31 shows the C5 spectrum of Fig. 30 overlapped with spectra of insulation fluid components "$CO_2$" and contaminants "$H_2O$", "$CF_4$", "hexafluoropropene", and "heptafluoropropane" for wavenumbers between 500 $cm^{-1}$ and 2000 $cm^{-1}$; and a relative transmittance of carbon monoxide "CO" for wavenumbers between 2900 $cm^{-1}$ and 500 $cm^{-1}$;

Fig. 32 similarly to Fig. 1 shows a schematic of an electrical apparatus 1 according to a fourth embodiment of the invention, this electrical apparatus 1 comprising a humidity sensor 700, and/or a self-sealing insulation fluid port 600, and/or a gas blender 339 comprising a rotating mixer 305, and/or a gas blender 339 comprising a tube mixer 370;

Fig. 33 shows a tube mixer 370 with a plurality of baffles 371;

Fig. 34 shows a tube mixer 380 with a perforated dip tube 381;

Figs. 35a and 35b show a rotating mixer 305 arranged in a compartment 11, wherein the rotating mixer 305 comprises a foldable fan 305a;

Fig. 36 shows a radiation mixer 390 arranged in a compartment 11, wherein the radiation mixer 390 comprises a light source 391;

Fig. 37 shows a convection mixer 307 comprising a heater 52;

Figs. 38a and 38b show a volumetric mixer 400 arranged in a compartment 11, wherein the volumetric mixer 400 comprises a pneumatically expandable volume 401;

Fig. 39 shows a bypass mixer 410 connected to a compartment 11;

Figs. 40a - 40e show different optical and mounting options for an optical sensor 20;

Fig. 41 shows an optical sensor 20 with an optical measurement channel and an optical reference channel; and

Fig. 42 shows an optical sensor 20 connected to a self-sealing insulation fluid port 600.

## Modes for Carrying Out the Invention

*Description of the Figures:*

Fig. 1 shows a schematic of an electrical apparatus (high-voltage switchgear) according to a first embodiment of the invention. In the first embodiment, the electrical apparatus comprises two compartments 11 with electrically active parts 60 arranged inside the compartments 11. The compartments 11 are filled with an insulation fluid 10 for insulating the electrically active parts 60 from the walls of the compartment 11. The insulation fluid 10 comprises a first fluid component A (1,1,1,3,4,4,4-heptafluoro-3-(tri-fluoromethyl)butan-2-one) with a partial pressure of 0.3 bar (or equivalently a concentration $c_A$ of 0.3) at 20°C and a second fluid component B (nitrogen) with a partial pressure of 0.7 bar (or equivalently a concentration $c_B$ of 0.7) at 20°C. The fluid components A and B are intentional ingredients of the insulation fluid 10, i.e. they are not decomposition products or contaminants of the insulation fluid 10 that are created, e.g., during electrical discharge or other electrical stress.

An optical sensor 20 is arranged in each of the compartments 11 for carrying out an optical measurement on the insulation fluid 10 in the compartments 11 and - specifically - for deriving the concentrations $c_A$ and $c_B$ of the first and second components A and B, respectively. No insulation fluid 10 is extracted from the compartments 11, but the measurements are carried out on the insulation fluid 10 in the compartments 11 themselves. In this embodiment, the optical sensors 20 can be fluorescence sensors as described below with regard to Fig. 2. Fluorescence excitation light is guided to the optical sensors 20 from a single common light source 22 of the electrical apparatus through optical fibers 23. Measurement values indicative of the fluid component concentrations $c_A$ and $c_B$ are transmitted from the optical sensors to an analysis and control unit 40 of the electrical apparatus.

Furthermore, one of the compartments 11 can comprise an optional pTp sensor 70 (dotted) for additionally measuring the total pressure p, the temperature T, and the density $\rho$ of the insulation fluid 10 in the respective compartment 11. Values indicative of these parameters are also transmitted to the analysis and control unit 40. The control unit 40 can use these values to additionally derive fluid component concentrations $c_A$ and $c_B$ using an equation of state (see, e.g., US 7 184 895 B2 for detailed disclosure on how this can be achieved).

The control unit 40 then derives an operating state O of the electrical apparatus 1 using the first concentrations

$c_A$ and using the second concentrations $c_B$ of the insulation fluid components A and B in each compartment 11. Specifically, a dielectric breakdown strength $E_{bd}$ of the insulation fluid 10 can be derived according to

$$E_{bd} = S(c_A, c_B) \sum_{i=A,B} c_i E_{crit,i}$$

with $E_{crit,A}$ and $E_{crit,B}$ being known and preset fluid component specific critical field strengths of the fluid components A and B. $S(c_A, c_B)$ is a known and preset synergy parameter and i is an index running over the fluid components A and B. From this dielectric breakdown strength $E_{bd}$ of the insulation fluid 10, an operating state O is derived which is indicative of the availability of the electrical apparatus for normal operation, e.g. for high-voltage switching or for carrying nominal currents and/or nominal voltages.

The dielectric breakdown strength $E_{bd}$ of the insulation fluid 10, the fluid component concentrations $c_A$ and $c_B$ and the operating state O are also fed to an interface 41 which is adapted to be connectable to a separate insulation fluid filling device 42 (dotted). Such an insulation fluid filling device 42 can, e.g. during maintenance of the electrical apparatus, replenish insulation fluid 10 to one or both compartments 11 if necessary. As an example, if the total amount of insulation fluid 10 in one compartment 11 decreases below a threshold for safe operation of the electrical apparatus, the analysis and control unit 40 detects this "failure" operating state O of the electrical apparatus 10 (a too low dielectric breakdown strength $E_{bd}$ of the insulation fluid 10 in the respective compartment 11) and shuts down the electrical apparatus 1. Then, during maintenance, it triggers via the interface 41 (via a triggering event G) the insulation fluid filling device 42 to replenish insulation fluid 10 to the affected compartment 11 (dotted lines). As another example, it is also possible to provide feedback to the insulation fluid filling device 42 during commissioning of the electrical apparatus 1 to trigger a signal to the insulation fluid filling device 42 as soon as operating pressures and/or operating dielectric breakdown strengths $E_{bd}$ of the insulation fluid 10 in the compartments 11 are reached.

Fig. 2 shows a schematic of an optical fluorescence sensor 20 as it is useful in the electrical apparatus 1 according to the first embodiment of the invention (see above with regard to Fig. 1). Here, fluorescence excitation light from an external light source 22 (not shown) is guided to the optical sensor 20 through an optical fiber 23. The light emerging from the tip of the fiber 23 is then collimated by a lens 24 and passes a dichroic beam splitter 28. It then passes through the wall of a glass tube whose inner volume is connected to the compartment 11 of the electrical apparatus 1, is filled with to-be-measured insulation fluid 10, and forms the measurement cell 21 of the optical sensor 20. In another embodiment, the measurement cell 21 of the optical sensor 20 can be formed by the compartment 11 itself, i.e. fluorescence is then measured in the compartment 11 itself. The fluorescence excitation light then excites molecules of the insulation fluid 10 and resulting fluorescence emission light is in part travelling back towards the beam splitter 28. To increase light collection efficiency, a mirror 27 is arranged on a side of the glass tube opposing the beam splitter 28. Fluorescence emission photons are then deflected by the dichroic beam splitter 28, pass an emission filter 26 (which blocks leftover excitation light), and are focused onto a detector 25 (e.g. an avalanche photodiode or a photomultiplier tube) by a collection lens 24. The electrical fluorescence signal (indicative of $c_A$ and $c_B$) from the detector 25 is then read out, optionally preprocessed (not shown), and transmitted to the analysis and control unit 40 of the electrical apparatus 1 for further processing. It should be noted that different light sources and optical setups are possible, e.g. monochromatic light at one or more wavelengths (e.g. at 305 nm) from one or more laser(s) 22, narrow spectrum light from a narrow band LED light source 22 (e.g. in the near UV range), or polychromatic or white light (optionally with a monochromator such as a grating) from a conventional light source 22. It is also possible to use different optical sensors 20 for the different fluid components A and B.

Fig. 3 shows a schematic of an electrical apparatus according to a second embodiment of the invention. This embodiment is very similar to the first embodiment described above with regard to Fig. 1 except for the following differences: While in the first embodiment, the optical fluorescence measurements were carried out inside each compartment 11 by means of separate optical sensors 20 inside the compartments 11, here, a single common optical sensor 20 is used for carrying out the optical measurements one after another (multiplexing). For this, a small amount, e.g. 1 ml at 1 bar at room temperature, of the insulation fluid 10 is extracted from each compartment 11 by means of an insulation fluid extractor 80 arranged in each compartment 11. This insulation fluid 10 is then transferred to the common optical sensor 20 through tubings 81. After the optical measurements, the insulation fluid 10 is at least in part reinjected into the compartments 11. As another differences to the first embodiment, the measurement principle of the optical sensor 20 can also be different (e.g. can be an absorption measurement as described further below in connection with Fig. 4).

The insulation fluid 10 that is used in the second embodiment can be composed of a different fluid component mixture compared to the insulation fluid 10 of the first embodiment. Here, the first component A has a partial pressure of only 0.2 bar at 20°C wherein an additional third fluid component C (1,1,1,2,4,4,5,5,5-nonafluoro-4-(tri-fluoromethyl)pentan-3-one) has a partial pressure of 0.1 bar (or, equivalently, a concentration $c_C$ of 0.1) at 20°C. Measurement values indicative of the fluid component concentrations $c_A$, $c_B$, and $c_C$ are transmitted from the optical sensor 20 to an analysis

and control unit 40 of the electrical apparatus 1.

As another difference, a circulator 90 can be arranged in one compartment 11 near the insulation fluid extractor 80 for homogenizing the density and/or the mixture of the insulation fluid components A, B, and C prior to extracting the to-be-measured insulation fluid 10 and prior to carrying out the optical measurement.

As yet another difference the electrical apparatus 1 according to the second embodiment comprises an optional filter 51 (dotted) for reducing a concentration of at least one contaminant in the insulation fluid 10. Such a contaminant can, e.g., be created from electrical discharge or from any other sources or chemical processes. Furthermore, the electrical apparatus according to the second embodiment comprises an optional heater 52 (dotted) for evaporating a condensed amount of at least one fluid component, e.g. when the ambient temperature of the electrical apparatus 1 drops below a condensation threshold for the respective fluid component. Thus, the condensed fluid component can be brought back to its gaseous form and thus the mixing ratio of the insulation fluid 10 can be preserved. In addition, the electrical apparatus 1 according to the second embodiment comprises an optional cooler 53 (dotted) for intentionally condensing an amount of at least one fluid component and/or of a contaminant by reducing the insulation fluid temperature below a condensation threshold for the respective substance.

As another difference, the electrical apparatus 1 according to the second embodiment can comprise a component reservoir 50 which can replenish certain amounts of insulation fluid components A and/or B and/or C etc. to one or more compartments 11. As an example, when the analysis and control unit 40 detects a decrease in the fluid component concentration $c_A$ in one compartment 11, the right amount of fluid component A is replenished to the respective compartment 11 and thus the mixing ratio of the insulation fluid 10 is brought back to normal. Thus, normal operation of the electrical apparatus 1 can automatically be restored and apparatus downtime is reduced.

With regard to the first and second embodiment, advantages of using an optical sensor or optical measurement for deriving the fluid component concentrations $c_A$, $c_B$, and/or $c_C$ are (i) high specificity to individual fluid components, (ii) high sensitivity, and (iii) broad applicability to any insulation fluid mixture comprising optical absorption or fluorescence.

Fig. 4 shows a schematic of an optical absorbance sensor 20 as it is used in the electrical apparatus 1 according to the second embodiment of the invention (see above with regard to Fig. 3). Here, light is mono-chromized inside a light source 22 by a grating (only schematically shown) and split into two beams by a 50:50 beam splitter 28. One light beam is guided through a reference cell 21a with a known absorbance per wavelength. The other light beam is guided through a measurement cell 21 of the optical sensor into which the extracted amount of insulation fluid 10 is transferred prior to carrying out the optical measurement. After traveling through the measurement cell 21 or the reference cell 21a, respectively, both light beams are propagated through band-pass filters 29 and focused onto photodetectors 25 (e.g. avalanche photodiodes) by lenses 24. By tuning the wavelength from the light source 22, an absorbance spectrum of the insulation fluid 10 over wavelength which is indicative of the fluid component concentrations $c_A$, $c_B$, and $c_C$ is measured. As discussed above with regard to the fluorescence optical sensor 20, it should again be noted that different light sources and optical setups are possible, as well.

Fig. 5 shows a schematic of an electrical apparatus 1 according to a third embodiment of the invention. This embodiment is very similar to the first embodiment described above with regard to Fig. 1 and to the second embodiment described above with regard to Fig. 3. However, as a difference, a gas chromatograph 30 (see below with regard to Fig. 6) can be utilized for carrying out a gas chromatographic measurement on extracted amounts of insulation fluid 10 from compartments 11. Due to the measurement principle used, the extracted amount of insulation fluid 10 is not reinjected into the chamber after the measurement in the third embodiment. The gas chromatographic measurement again produces measurement values indicative of the fluid component concentrations $c_A$ and $c_B$ which are transmitted from the gas chromatograph 30 to the analysis and control unit 40 of the electrical apparatus 1 for further processing. Advantages of using a gas chromatographic measurement for deriving the fluid component concentrations $c_A$, $c_B$, and/or $c_C$ are (i) good separation and quantification capability to individual fluid components, (ii) very good sensitivity, and (iii) the ability to diagnose unknown contaminants, e.g. optionally using an additional mass spectrometer (see below).

Fig. 6 shows a schematic of a gas chromatograph 30 as useful in the electrical apparatus 1 according to the third embodiment of the invention as described with regard to Fig. 5. The gas chromatograph 30 comprises a carrier gas reservoir 31 and a sample injector 32 which accepts a small amount (e.g. 0.5 ml at 1 bar at 20°C) of the insulation fluid 10 (see description of Fig. 3 on details of the extraction of the sample from the compartments 11). This insulation fluid 10 is then injected into the flowing carrier gas and propagated through two columns 33 onto detectors 34 (e.g. thermal conductivity detector, flame ionization detector, or electron capture detector). Due to different retention times of the fluid components A, B, and C with a stationary phase in the columns, the concentrations values $c_A$, $c_B$, and $c_C$ can be measured. For example, the column Fluorocol from the company Supelco can separate a mixture of $N_2/O_2$ and C5/C6. A mass spectrometer 35 can optionally be arranged behind one column 33 for carrying out an additional mass spectrometric measurement for detecting and/or discriminating contaminants in the insulation fluid.

Fig. 7 shows a chromatogram (i.e. a chromatograph detector signal as a function of retention time in the column) illustrating the separation of insulation fluid components "$N_2/O_2$" (technical air) and "C5" and "C6", which all appear as single separate peaks in the chromatogram. A Fluorocol column (FC column) from the manufacturer Supelco can, e.g.,

be used for such a separation.

Fig. 8 shows two chromatograms illustrating electrical stress-induced loss of a specific fluid component (gas 4, peak drops, see arrow and dotted lines). An FC column can, e.g., be used for such a measurement.

Fig. 9 shows two chromatograms illustrating detection of a contaminant of the insulation fluid 10. An additional peak (arrow, dotted circle) appears after a fresh insulation gas mixture (fresh gas mixture) has undergone electrical stress (aged gas mixture). An FC column can, e.g., be used for such a measurement.

Fig. 10 shows a power transmission network 200 comprising an electrical apparatus 1 according to the invention. The electrical apparatus is exemplarily used for switching a high-voltage connection between two bus bars 201 and 202 of the power transmission network 200.

Fig. 11 shows an infrared absorption spectrum illustrating characteristic signatures of insulation fluid components C5 and C6. The use of infrared spectroscopy offers an easy, specific, and accurate method for the determination (type and concentration) and monitoring of the fluid components that make up the insulation fluid 10. Many molecules, such as C5 and C6, show characteristic spectral signatures (spectral fingerprint) in the infrared region which are, e.g., due to vibrational excitation. Specifically, measurements of the bands labeled C5-signature and C6-signature in the spectrum of the insulation fluid unambiguously indicate the presence and allow the concentration determination of C5 and/or C6, respectively. Note that the spectrum in the region 1200 $cm^{-1}$ to 1350 $cm^{-1}$ is partially saturated.

Fig. 12 shows absorption diagrams illustrating the detection of a contaminant "HF" of the insulation fluid 10. Specifically, after electrical stress induced aging of an insulation fluid component "C5", clear absorption signatures of the contaminant "HF" can be seen in the spectrum. An HF reference spectrum is given for comparison. Using calibrated HF spectra, the concentration of the contaminant HF can also be derived. Analogous procedures exist for other contaminants, as well.

Fig. 13 shows an absorption diagram in the UV range for acetone, C5, and C6 together with reference data for acetone.

Fig. 14 shows fluorescence emission spectra of C6 for different pressures and temperatures. By taking the pressure and temperature variations into account, a direct derivation of the insulation fluid pressure and temperature becomes possible. This figure is taken from J. Gustavsson, C. Segal, "Characterization of a Perfluorinated Ketone for LIF Applications", 46th AIAA Aerospace Sciences Meeting and Exhibit, 7-10 January 2008, Reno, Nevada, USA.

Fig. 15 shows an infrared absorption spectrum illustrating characteristic optical absorption signatures of an insulation fluid component "C5". It is found that the insulation fluid component "C5" shows absorption peaks that do not overlap with spectral signatures of contaminants (see, e.g., arrow, see below). Therefore, by selecting such an appropriate spectral signature, the insulation fluid component "C5" can unambiguously be monitored without cross-sensitivity to contaminants.

Fig. 16 shows infrared absorption spectra illustrating the characteristic optical absorbance signatures of the insulation fluid component "C5" of Fig. 15 as well as characteristic optical absorbance signatures of a contaminant "$CF_4$" (see arrow). Because these peaks do not overlap, they allow an unambiguous detection of the contaminant "$CF_4$", even in the presence of "C5".

Fig. 17 shows infrared absorption spectra illustrating the characteristic optical absorbance signatures of the insulation fluid component "C5" of Fig. 15 as well as characteristic optical absorbance signatures of a contaminant hexafluoropropene "$CF_3CF{=}CF_2$" (see arrows). Similar to the situation in Fig. 16, these signatures allow an unambiguous detection of the contaminant "$CF_3CF{=}CF_2$", even in the presence of "C5".

Fig. 18 shows infrared absorption spectra illustrating the characteristic optical absorbance signatures of the insulation fluid component "C5" of Fig. 15 as well as characteristic optical absorbance signatures of a contaminant heptafluoropropane "$CF_3CFHCF_3$". Similar to the situation in Figs. 16 and 17, these signatures allow an unambiguous detection of the contaminant heptafluoropropane "$CF_3CFHCF_3$", even in the presence of "C5".

Fig. 19 shows a schematic of an optical absorbance measurement comprising a spectrometer, i.e. a wavelength-discriminating or dispersive photodetector 25. Light from a light source 22 (e.g. a deuterium light source) is propagated through an optical fiber 23 and a measurement cell 21 comprising the insulation fluid 10. Then, a part of the light that has not been absorbed in the measurement cell 21 is detected by photodetector 25.

Fig. 20 shows an "optical absorption" vs. "C5 pressure" diagram as recorded by an optical setup of Fig. 19. In other words, absorption A in arbitrary units is plotted versus pressure p in mbar of pure insulation fluid component C5. The graph shows measured data (diamonds) together with a linear fit line (slope a = 0.009872, offset A_offset = -0.019615) as well as relative errors of measured values compared to the fit. Each data point corresponds to the area of the absorption peak for the respective "C5" concentration. The inset shows a typical absorption spectrum (i.e. wavelength in nm on x-axis, (wavelength-dependent) absorption in arbitrary units a.u. on y-axis, here for a partial pressure of C5-perfluoroketone of e.g. p(C5) = 91.5 mbar) of insulation fluid component "C5" where the hatched region (240 nm < $\lambda$ < 350 nm) represents the integration area which is used to measure an (integral) absorption A. The relative error $dA/A \leq \pm 2\%$ demonstrates that a concentration of insulation fluid component "C5" can be determined with high sensitivity and high precision by using simple calibration methods. The used equipment comprises: Light source 22: Deuterium light source, DT-MINI-2-GS, Ocean Optics. Gas cell 21: Stainless steel cell (with optical path length 47 cm) "Expando" from Solvias. Fiber-optic cables 23: length 0.5 m, core diameter 600 μm, UV-0.5m/1204191 from Solvias. Detector 25: High-resolution spectrometer, HR4000 from Ocean Optics.

Fig. 21 shows a schematic of an optical absorbance measurement comprising a non-dispersive photodetector 25 and a band-pass filter 29. Light from a light source 22 (e.g. a deuterium light source) is propagated through an optical fiber 23 and a measurement cell 21 comprising the insulation fluid 10. Then, a part of the light that has not been absorbed in the measurement cell 21 propagates through a band-pass filter 29 and is detected in a non-wavelength-discriminating-fashion by photodetector 25.

Fig. 22 shows a "transmitted intensity" vs. "C5 pressure" diagram as recorded by an optical setup of Fig. 21. In other words, transmitted intensity I in μW is plotted versus pressure p in mbar of pure insulation fluid component C5. The graph shows measured data (diamonds) together with exponential fit (line, Lambert-Beer law; with offset intensity I_offset = 21.9 μW, intensity coefficient I_0 = $I_0$ = 35.8 μW, and exponential coefficient $\varepsilon$ = 0.0032 1/mbar) and relative error dI/I of measurement I compared to fit. Each data point corresponds to the total integrated intensity I measured by the silicon photodetector 25. Most of the light of the Deuterium light source 22 which has a larger wavelength than the insulation fluid components' absorption peaks is blocked by a filter 29 (the light which is not blocked contributes to the offset $I_{offset}$). The relative error dI/I $\leq \pm 1\%$ demonstrates that concentration of insulation fluid component "C5" can be determined with high sensitivity and high precision.

The used equipment comprises: Light source 22: Deuterium light source, DT-MINI-2-GS, Ocean Optics. Gas cell 21: Stainless steel cell (with optical path length 47cm) «Expando» from Solvias. Fiber-optic cables 23: length 0.5 m, core diameter 600 μm, UV-0.5m/1204191 from Solvias. Filter 29, UG-11 from Schott. Detector 25: Si Photodiode, UV-818 from Newport.

Fig. 23 illustrates the dependence of UV absorption of the insulation fluid component "C5" from insulation fluid mixtures and/or from insulation fluid pressure. In other words, the absorption of pure insulation fluid component "C5" in gaseous form and of two different insulation fluid mixtures consisting of insulation fluid component "C5" and insulation fluid component "synthetic air" with different mixture ratios and total pressures is acquired with the optical setup of Fig. 19. The absolute amount of insulation fluid component "C5" for all 3 samples (i.e. 3 graphs, only two are distinguishable here) is constant: p(C5)=91.5 mbar. The amount of synthetic air differs between 0 and 5775 mbar. The graph illustrates that absorption values for all 3 insulation fluid mixtures do not or not significantly deviate for high or low pressures when synthetic air is added to the insulation fluid component "C5". This shows that a concentration of an insulation fluid component "C5" using a C5 UV-absorption peak can be determined independently from the admixture of synthetic air. No effect is observed even up to a total insulation fluid pressure of p_tot = 8.9 bar (data not shown).

The used equipment comprises: Light source 22: Deuterium light source, DT-MINI-2-GS, Ocean Optics. Gas cell 21: Stainless steel cell (with optical path length 47cm) "Expando" from Solvias. Fiber-optic cables 23: length 0.5 m, core diameter 600 μm, UV-0.5m/1204191 from Solvias. Detector 25: High-resolution spectrometer, HR4000 from Ocean Optics.

Fig. 24 similarly to Fig. 13 shows reference absorption data for acetone and the insulation fluid component "C6" on the left hand side and measured absorption diagrams for the insulation fluid components "C5" and "C6" on the right hand side. An optical path length of 20 mm at temperatures in the range between 23.5°C and 24.2°C was used. Specifically, it can be concluded from the spectral measurements on the right hand side of Figure 24 that the absorption peak of C5 is shifted by about 5 nm to the blue and that it is reduced by a factor of around 0.6. No absorption features were apparent in the wavelength regime between 400 nm and 1100 nm (data not shown for clarity).

Fig. 25 similarly to Fig. 22 shows a "transflected intensity" vs. "C5 pressure" diagram. In other words, transmitted intensity I in μW is plotted versus pressure p in mbar of an insulation fluid component C5. The graph shows measured data (diamonds) together with an exponential fit (line, Lambert-Beer law) and relative errors dI/I of measurements I compared to the fit (right y-axis). The results demonstrate a very good agreement of the measured data with theory (Lambert-Beer law) with relative errors of smaller than 0.2% over a large C5 concentration range. A sensitivity of the measurement at a typical nominal C5 concentration (around 400 mbar) was evaluated as dI/dp=-0.5 μW/mbar (cf. the black triangle $\Delta I/\Delta p$). Assuming a signal fluctuation (due to the stability of the light source, detector and interfaces in the optical system) of dI/I= $\pm 1\%$, this value results in an overall pressure sensitivity of $\pm 6$ mbar.

The used equipment comprises: Light source: Sandhouse 293 nm LED from Ocean Optics. Gas cell: Optical insertion probe 661.686-UVS from Hellma with an optical path length of 20 mm inserted into a pressure vessel from Swagelok. Detector: Si-Photodiode, 818-UV from Newport in combination with power meter 2931-C.

Fig. 26 similarly to Fig. 25 shows a "transflected intensity" vs. "C5 partial pressure" diagram. In other words, transmitted intensity I in V [here measured in volts as detector output, 1 V corresponds to an intensity of 17.72 nW] is plotted versus pressure p in bar of an insulation fluid component C5. The graph shows measured data (open circles) together with an exponential fit (line, Lambert-Beer law) and relative deviations dI/I between the measured data and the theoretical fit (triangles). The results demonstrate a very good agreement of the measured data with theory (Lambert-Beer law) with a relative deviation of smaller than $\pm 0.5\%$ over a large C5 concentration range. The sensitivity of this

measurement at a typical nominal C5 concentration (e.g., around 400 mbar) was evaluated as dI/dp= -0.4 V/bar = -7.1 nW/bar. The signal-to-noise ratio is approximately SNR = I/dI = 1000 at an integration time of ≈1s. These values result in a pressure sensitivity of $\Delta p = \Delta I/(dI/dp) = [\pm I(400mbar)/ (SNR)]/(0.4V/bar) = \pm 0.4$ mbar.

The used equipment comprises: Light source: LED LLS290, $\lambda_{peak}$ = 293 nm, Ocean Optics. Gas cell: Optical insertion probe TI-300-UV-VIS from Ocean Optics with an optical path length of 20 mm inserted into a pressure vessel with a volume of 3.6 liters. Detector: Si-photodiode 818-UV from Newport in combination with power meter 2931-C. Measurements were carried out at temperatures between 25.3°C and 25.6°C.

Fig. 27 shows absorption spectra of the insulation fluid components "C5", "$O_2$", and "$CO_2$" and of the contaminant "hexafluoropropene" for wavelengths between 200 nm and 500 nm. The spectra of $O_2$ and $CO_2$ are from reference datasets while those of C5 and hexafluoropropene were measured. The spectral signatures of the contaminants "$CF_4$" and "heptafluoropropane" were also measured and did not show any spectral overlap with the UV absorption of "C5" (data not shown for clarity). As a conclusion, an optical absorbance measurement in the UV range is not hampered by these contaminants to a large degree, in particular if a narrow-band light source (e.g., an LED at around 300 nm with a full width at half maximum FWHM = 12 nm) is used.

Fig. 28 shows absorbance spectra for insulation fluid components "C5", "C6", "C7", and "$CO_2$" in the near infrared (NIR) region, specifically between 1350 nm and 1970 nm. A spectrometer from Axsun (Analyzer XLP910) was used for the spectral characterizations. The spectrometer is capable of recording the absorbance in the above-referenced wavelength region with a resolution of 3 $cm^{-1}$ which is equivalent to a wavelength resolution of about 1 nm.

Fig. 29 shows a zoomed part of the spectra of Figure 28 for wavelengths between 1850 nm and 1950 nm. As evident from Figures 28 and 29, the insulation fluid component "C6" shows an absorption peak at 1891 nm. The insulation fluid components "C5" and "C7" show two overlapping absorption peaks at 1873 nm / 1882 nm and at 1894 nm / 1903 nm, respectively. These absorption bands are presumably second overtones of a C=O stretch vibration. $CO_2$ data on the right hand side of Figures 28 and 29 is reference data for comparison. Please note that the data in Figure 29 are normalized to equal number densities of molecules (i.e., $p_{C5}$=974 mbar).

Since the insulation fluid can be a gas mixture of insulation fluid components including "C5", "$CO_2$", and "$O_2$" and since a specific analysis method for "C5" is advantageous, potential cross interference of the C5 absorption bands with those of $CO_2$ in the NIR region were checked for. $O_2$ does not have a permanent dipole moment and therefore does not exhibit a vibration spectrum in the NIR region. $CO_2$ shows a significant band at 1960 nm and around 2000 nm. These features, however, do not overlap with the C5 carbonyl band discussed above.

Thus, in summary, the identified absorption bands of C5 at 1873 nm / 1882 nm represent a possible basis for a C5-specific NIR optical absorption measurement.

Fig. 30 shows an absorption spectrum of the insulation fluid component "C5" for wavenumbers between 500 $cm^{-1}$ (wavelength 20 $\mu$m) and 2000 $cm^{-1}$ (wavelength 5 $\mu$m), i.e. in the mid infrared (MIR) region.

For acquisition of the MIR spectra, a Fourier Transform Infrared Spectroscope (FTIR spectrometer, Digilab FTS-40 Pro, 0.5 $cm^{-1}$ resolution, 400-4000 $cm^{-1}$, 11.25 m path length, cell volume 0.005 $m^3$ = 5 liters) was used. To obtain a good spectral separation of individual peaks and to avoid saturation, the pressures were reduced to several thousand Pa.

The infrared absorption of the insulation fluid component C5 in the spectral region between 4000 $cm^{-1}$ (2.5 $\mu$m) and 600 $cm^{-1}$ (16.6 $\mu$m) shows absorption bands between 600 $cm^{-1}$ and 1900 $cm^{-1}$. These absorption band presumably stem from vibrational transitions of the carbon framework (below about 1100 $cm^{-1}$), of the C-F bonds (1100 $cm^{-1}$ to 1400 $cm^{-1}$), and of the C=O carbonyl group (1800 $cm^{-1}$). In the spectral region from 2000 $cm^{-1}$ to 4000 $cm^{-1}$, C5 does not display any absorption features (data not shown).

Some of the above discussed bands can be used for quantification of the insulation fluid component C5 by IR absorption, for example by using a broad-band, incandescent light source and a notch filter permitting the transmission of only a selected wavelength that interrogates a narrow spectral region in which only C5 absorbs. For a measurement like this to work, cross-sensitivity to other insulation fluid components and contaminants that may be present should be excluded. As an example, insulation fluid components $O_2$ and $CO_2$ can be present. In addition, water vapor "$H_2O$" and the contaminants "HF", "$CF_4$", "hexafluoropropene", and "heptafluoropropane" may appear (note that there may be further contaminants that are not shown here). Further note that molecular oxygen does not have an infrared spectrum due to its lack of a permanent dipole moment (data not shown).

Fig. 31 shows the C5 spectrum of Fig. 30 overlapped with spectra of insulation fluid components "CO2" (Fig. 31a), of "$H_2O$" (Fig. 31b), and of contaminants "$CF_4$" (Fig. 31c), "hexafluoropropene" (Fig. 31d), and "heptafluoropropane" (Fig. 31e). Furthermore, Figure 31f shows a relative transmittance of "CO" as a function of wavenumbers between 2900 $cm^{-1}$ and 500 $cm^{-1}$ as a reference spectrum.

It is noted that infrared absorption measurements are well suited to track for example water vapor content without interference of the C5 content. This is, because here are infrared absorption bands of water available that do not overlap with those of C5 and these can be addressed for monitoring (see Figure 31b).

Not shown in Figure 31 is the data of the contaminant "HF": The lowest vibrational transition of HF lies around

4000 $cm^{-1}$ and pure rotational transitions above 500 $cm^{-1}$ carry extremely small intensities at ambient temperatures.

The use of infrared spectroscopy for C5 detection is therefore herewith proven. However, great care shall be taken to avoid cross-sensitivities to other gas species by choice of appropriate spectral signatures. One suitable band for cross-interference-free C5 characterization is around 990 $cm^{-1}$. In addition, the absorption intensities and band shapes may vary slightly with temperature because of the temperature-dependence of the population of the rovibrational ground states given by the Boltzmann distribution. These effects should be taken into account.

Fig. 32 similarly to Fig. 1 shows a schematic of an electrical apparatus 1 according to a fourth embodiment of the invention. While being rather similar in terms of setup and operation, as one modification to the embodiment shown in Fig. 1, here only one compartment 11 is present in the electrical apparatus 1. Furthermore, the optical sensor 20 is not arranged inside the compartment 11 in a fixed manner, but it is in a fluid communication with the insulation fluid 10 in the compartment 11 via a self-sealing insulation fluid port 600. Thus, maintenance of the optical sensor 20 is simplified.

In embodiments, a humidity sensor 700, e.g. a capacitive humidity sensor 700, can be arranged inside the compartment 11 for measuring a humidity level in the compartment 11 of the electrical apparatus 1. The measured humidity level is also transmitted to the analysis and control unit 40. Thus, operating states can also be selected depending on the humidity level inside the compartment 11 of the electrical apparatus 1.

The humidity sensor 700 or a method element of measuring the relative humidity can in particular be embodied using at least one of the group of:

* A capacitive humidity sensor 700: Here, a variation of the dielectric constant of an appropriate hydrophilic material with water content is used as an indicator for the moisture level in the compartment. The dielectric can be composed of metal oxides (e.g. $Al_2O_3$) or polymeric materials. As a prerequisite for material compatibility with, e.g., a fluoroketone in an insulation fluid component, polymeric sensing media must be immune for interaction with the insulation fluid components. This is also the case for dielectrics based on metal oxides.
* A resistive humidity sensor 700: The variation of resistance or conductivity of humidity sensitive materials is addressed. With an increasing humidity, the resistance of the hygroscopic material decreases. Again, necessary precautions to avoid interference with the insulation fluid components must be taken, e.g. by functionalization of the used material.
* An oscillating resonator humidity sensor 700 coated with a hygroscopic layer: In the presence of humidity, the mass loading on the oscillator changes, thus leading to a change in resonance frequency. The resonator coating must be chosen to only adsorb water, e.g. using silica gel or through direct surface functionalization (e.g. providing -OH groups that can engage in H-bonding with water).
* A thermal conductivity humidity sensor 700: Absolute humidity can be quantified via a thermal conductivity of a reference insulation fluid (i.e. a dry insulation fluid) compared to the insulation fluid in the compartment which contains moisture. Considering that the insulation fluid is not supposed to change in composition during operation of the electrical apparatus, humidity measurements are relatively easy to carry out as long as the only change in thermal conductivity will be induced by moisture. Otherwise, concentration changes can be accounted for by other measurements, in particular the optical measurement and/or the gas chromatographic measurement as disclosed herein.
* A or the optical sensor 700; 20: As an example, infrared absorption measurements are well suited to track water vapor content without interfering with most insulation fluid components (see spectra below). As an example, there are infrared absorption bands of water available that do not overlap with those of the perfluoroketone C5 as insulation fluid component. These bands can be used for measuring the humidity in the compartment 11.

As other embodiments, a gas blender 339 comprising a rotating mixer 305 can be arranged inside the compartment 11 of the electrical apparatus 1. This rotating mixer 305 is adapted to mix the first fluid component A with the second fluid component B inside the compartment 11 for homogenizing a mixture of the first and second fluid components A,B. As an example, a dielectric breakdown strength can be improved by providing a re-mixing opportunity, e.g. after a condensation event has occurred in the insulation fluid 10.

An additional gas blender 339 comprising a tube mixer 370 is arranged in the insulation fluid filling line (dotted line) for mixing the insulation fluid 10 which is filled into the compartment 11 from the insulation fluid filling device 42 (see description above with regard to Fig. 1 for examples).

Reasons for providing the gas blenders 339 in the fluid filling device 30 and/or in the electrical apparatus 1 are that the fluid components A and B are advantageously thoroughly mixed for ensuring a good dielectric breakdown strength $E_{bd}$. Otherwise, the fluid components A and B could suffer from incomplete mixing which could reduce the reliability of dielectric performance of the electrical apparatus 1. For example:

(1) The more easily condensable fluid component A (e.g. C5) and the less easily condensable fluid component B (e.g $CO_2$ and $O_2$) shall be mixed with care to avoid or reduce diffusion times, that otherwise would be needed to mix the fluid components A and B diffusively without additional the mixing means or gas blender 339 being present.

Similarly, a diffusive mixing of a first amount to be filled into the compartment 11 with a second amount already present in the compartment 11 would last longer without additional gas blenders 339 being present. Thus, the additional mixing means, in particular the gas blender 339 or gas blenders 339, allow to reduce or eliminate a waiting time after filling the first amount M1 until it is safe to start operation of the electrical apparatus 1.
(2) The homogeneity of the insulation fluid 10 could change even after the insulation fluid 10 has been filled, e.g. due to a decrease in partial pressure or density of one dielectric insulation fluid component. Such cases may occur for various reasons, for example:

- In case of a condensation event (e.g. of C5), subsequent reevaporation (e.g. of C5) can safely be achieved by additional mixing means, in particular by gas blender 339 or gas blenders 339, inside the electrical apparatus 1 and in particular compartment 11, and a waiting time until it is safe to switch on or to restart the electrical apparatus 1 can again be reduced or eliminated.
- After a switching or circuit breaking event of the electrical apparatus 1, local concentration gradients of e.g. C5 could develop: In an arc, C5 might be consumed so that the C5 number density of the insulation fluid 10 in the arcing zone and in the vicinity of the arcing zone could be lowered. A waiting time until the electrical apparatus 1 is operable again, e.g. for opening or closing or reclosing or circuit breaking, can again be reduced or eliminated by providing additional mixing means, in particular gas blender 339 or gas blenders 339, inside the electrical apparatus 1.

Providing the gas blenders 339 in the electrical apparatus 1 also allows to fill the first and second insulation fluid components A and B of the insulation fluid 10 in parallel or sequentially into the compartment 11 of the electrical apparatus 1 (i.e. without outside premixing) and then mix them inside the compartment 11. Thus, the insulation fluid filling device 42 could be simplified. Specifically, it would be possible to inject the first insulation fluid component A (e.g. C5) into the evacuated compartment 11 in liquid form before addition of the carrier gas (i.e. the second insulation fluid component B). As well, liquid insulation fluid component A can be injected after filling the carrier gas. This requires application of the necessary filling pressure, e.g. by a piston or syringe type of injector, to overcome the counter-pressure of the carrier gas. In embodiments, liquid first insulation fluid component A (e.g. C5) is preferentially injected so that the liquid evaporates and does not collect in liquid form in the compartment 2 of the electrical apparatus 1. This can for example be accomplished by spraying the liquid into the compartment 2 through nozzles. It may also be nebulized by an ultrasonically driven piezo transducer located at the injection point to aid vaporization. To ensure that the right amount is injected, the injected mass or the mass flow can be tracked.

Fig. 33 shows a tube mixer 370 with a plurality of baffles 371. Such a tube mixer 370 can e.g. be comprised in a gas blender 339 as used in the electrical apparatus 1 of Fig. 32. When combining a stream of a gaseous fluid component A with a stream of a gaseous fluid component B, adequate turbulence should be provided to thoroughly mix the fluid components A and B. Otherwise, the fluid components A and B could at least in part remain segregated, e.g. owing to their rather different molecular masses. For mixing two streams of different fluid components A and B, a tube mixer 370 can be used: The tube mixer 370 consists of a large bore tube with a series of internal baffles 371 (fixed or static alternating right and left hand helical mixing elements) which create turbulence in the streams by transferring momentum to the particles of the fluid components A and B. Thus, a more rapid and more thorough mixing to a more homogenous stream and a more thoroughly mixed insulation fluid 10 is achieved.

Fig. 34 shows a tube mixer 380 with a perforated dip tube 381. Such a tube mixer 380 can e.g. be used in a gas blender 339 as used in the fluid filling device 30 and/or in the electrical apparatus 1 of Fig. 32. Here, the first gaseous fluid component A (e.g. C5) enters a large bore tube which encloses a perforated dip tube 381 through which the second gaseous fluid component B enters. The fluid components A and B can then circulate turbulently as momentum is transferred to their particles before exiting the tube mixer 380 as mixed insulation fluid 10. In embodiments, the gas blender 339 can additionally comprise a heater 52 to avoid condensation that may occur in regions of high dynamic pressure (dotted). Thus, a more rapid and more thorough mixing to a homogenous stream and a more thoroughly mixed insulation fluid 10 is achieved.

Alternatively, when sequentially filling one gas after the other into a compartment 11 of the electrical apparatus 1, a dip tube 381 can be used (e.g. at the entrance of the compartment 2) which provides more circulation in the compartment 11, particularly when the light gas is injected into the heavy gas (not shown).

Figs. 35a and 35b show a rotating mixer 305 in the compartment 11 of an electrical apparatus 1, the rotating mixer 305 comprising a foldable fan 305a. While Fig. 35a shows the foldable fan 305a in a parking position (e.g. like a retracted umbrella) in which it does not or only negligibly interfere with the operation of the electrical apparatus 1, in Fig. 35b the foldable fan 305a is in an active position (e.g. like a stretched umbrella). A rotating mixer 305 can, e.g., be used in a gas blender 339 (see Fig. 32) as it provides forced convection by mechanically transferring momentum to the particles of the insulation fluid components A and B. Thus, a more rapid and more thorough mixing to a homogenous stream and a more thoroughly mixed insulation fluid 10 is achieved.

When the or a gas blender 339 is arranged inside the compartment 11 of the electrical apparatus 1, the fan 305a must be arranged in a region that offers the best compromise between high insulation fluid agitation and minimum interference with the operation of the electrical apparatus 1, i.e. it should not negatively affect the dielectric insulation performance (i.e. the fan 305a should be placed in an electric field shadow, and fan materials should be compatible with insulation fluid mixture, etc.). A foldable fan 305a need not be installed within each compartment permanently, but can be removable. This may require a "foldable" fan 305a that can be introduced through an opening and be retracted after use without causing gas loss from the compartment 11.

In embodiments, a small recess or bulge (as indicated e.g. in Fig. 35a, 35b) for housing the folded fan 305a (e.g. permanently or temporarily) is provided at the compartment encapsulation 11.

In embodiments, the fan housing can also be mounted using a self-sealing connector 600 through which the foldable fan 305a protrudes into and retracts out of the compartment 11 of the electrical apparatus 1. When removing the fan housing from the compartment 11 after having mixed the insulation fluid 10, only a small amount of insulation fluid 10 (i.e. that which is contained in the housing volume) is removed from the compartment 11.

Fig. 36 shows a radiation mixer 390 arranged in a compartment 11, wherein the radiation mixer 390 comprises a light source 391. Here, momentum is transferred to the particles of the insulation fluid 10 radiatively, i.e. by using an IR or UV light source 391 arranged outside of the compartment 11 and shining in through a window (not shown) of the compartment.

Fig. 37 shows a convection mixer 307 arranged in or at the compartment 11 of the electrical apparatus 1 and comprising a heater 52. Forced convection of the insulation fluid 10 is provoked through generation of thermal gradients, i.e. by heating the compartment 11 from one side, for example by using a resistive heating pad or a chemical heater pad for one-time use.

Figs. 38a and 38b show a volumetric mixer 400 arranged in a compartment 11 of the electrical apparatus 1, the volumetric mixer 400 comprising a pneumatically expandable volume 401. By expanding the expandable volume 401 (Fig. 38b), mechanical energy can be transferred to the insulation fluid particles pneumatically, i.e. by having an expandable volume 401 that can be inflated and deflated rapidly from outside the compartment (e.g. by bellows).

Fig. 39 shows a bypass mixer 410 connected to a compartment 11 of the electrical apparatus 1. The bypass mixer 410 comprises e.g. two valves 337 and a pump 303. Bypass circulation mixing of the insulation fluid 10 can be used to force the insulation fluid components A and B to mix more thoroughly. The bypass mixer 410 comprises a pump 303 connected to the compartment 11 at two ports and which circulates the insulation fluid 10 therebetween. In embodiments, the bypass mixer 410 can be removable (e.g. using self-sealing insulation fluid ports 600, e.g. as shown in Fig. 42) so that a single unit can be used to mix many compartments 11 one after the other. A combination with other mixing means, e.g. with a tube mixer 370, is also possible.

Figs. 40a - 40e show various embodiments of optical and mounting options for an optical sensor 20. In particular, various optical and mounting layouts are shown which can be operated by injecting and retrieving light through optical fibers or by directly connecting a light source and detector to the at least one optical sensor 20.

Fig. 40 (a) and Fig. 40 (b) are based on insertion probes, which can be of the transflexion type or the transmission type. The cavity forming the gas-open measurement cell 21 is arranged inside the measurement space (e.g. the compartment 11 of the electrical apparatus 1, or the insulation fluid filling device 30). In embodiments, it can be protected from particle contamination by an-insulation-fluid-permeable protective cover 500, e.g. made from a sintered material, a gauze, a mesh, a porous material, a porous metal, or thin membranes of PTFE. In addition, protective means such as gas adsorbers (e.g. a zeolite) can be provided, if contaminants, e.g. decomposition gases, are created which may damage the optical sensor (not shown).

The design given in Fig. 40 (a) is advantageously simple, but requires installation in a position located in the electric field shadow so that no arcing in the vicinity of the optical sensor 20 occurs. Also, the location must be chosen so that the protruding optical probe does not interfere with the mechanical motion of other parts in the electrical apparatus 1.

Fig. 40 (b) shows an alternative embodiment in which the insertion probe is positioned in a bulge of the compartment 11 that is separated from its main volume by a protective cover 500.

Fig. 40 (c) and Fig. 40 (d) show designs which rely on optical collimators that act as optical feedthroughs into a bulge of the main volume of the compartment 11 in a transmission configuration (Fig. 40 (c)) and a transflexion configuration (Fig. 40 (d)). In embodiments, a self-sealing connector 600 or self-sealing fluid part 600 can be used (e.g. a DILO connector, not shown) to plug-in and pull-out the measurement cell 21 to and from the compartment 11 of the electrical apparatus 1. This allows e.g. cleaning optical surfaces, exchanging particle protection tubes 500 or windows 500, calibration, removal or replacement of the optical sensors 20 without taking out of service and depressurizing the electrical apparatus 1.

The protective cover 500 (e.g. of any of Fig. 40 (a) - 40 (e)) can be in the form of a protective cover plate 500, e.g. a plate separating the measurement cell 21 and/or reference cell 21a of the optical sensor 20 (as shown) or of a gas chromatograph 30, or can be in the form of a protective cover tube 500 (not explicitly shown), e.g. a tube enclosing the optical sensor 20 or at least some of its optical elements 21-29 and/or beam paths, in particular beam paths of a

measurement channel and/or reference channel. Any other form suitable to separate the optical sensor 20 and/or gas chromatograph from particles in the compartment 11 is possible, as well.

Fig. 40 (e) shows another alternative configuration, in which light source and detector are arranged inside the compartment 11 of the electrical apparatus 1, and thus within the insulation fluid filled volume. For this concept, electrical feedthroughs which are mechanically much less demanding and of lower cost are used and optical feedthroughs are eliminated. This design can also be applied to configurations using a self-sealing type connector 600, as described above.

As a further embodiment, the optical sensor 20 can be arranged (also e.g. via optical fiber) at a viewing port of the electrical apparatus 1. Thus, the viewing port forms not only part of the compartment 11 of the electrical apparatus 1, but also part of the optical sensor 20. The viewing port window shall be transmissive at the measurement wavelength, and possibly also at the reference wavelength, e.g. by using glass with transmission in the near infrared or UV-transmitting material, such as quartz or sapphire, or mid infrared transmitting material, such as potassium bromide (KBr). In embodiments, a mirror or a reflective coating or another viewing port for receiving transmitted light can be present in the compartment 11.

Fig 41 shows an embodiment of an optical sensor 20 with an optical measurement channel or beam at a first wavelength (e.g. that is modified, in particular absorbed, by the first fluid component (A)), and an optical reference channel or beam at a second wavelength that is not modified, in particular not absorbed, by the first fluid component (A), such as a fluoroketone. This helps to secure the long-term stability of an optical sensor 20. Several factors could adversely affect the measurements:

- light source emission drift (wavelength and intensity e.g. due to aging, internal temperature and surrounding temperature)
- optical fiber transmission changes (e.g. due to bending losses, physical movement of fibers, stress, temperature)
- transmission changes at optical connectors (e.g. due to physical movement, mechanical shock, vibration, stress, temperature)
- transmission changes at optical interfaces (e.g. due to contamination)
- optical detector stability (e.g. due to aging)
- analyzer electronics (e.g. affected by electromagnetic interference or e.g. due to ageing).

The first five factors can be mitigated by using an optical reference channel integrated into the optical sensor 20.

A blue light source BS emitting at around 293 nm (open rectangles), i.e. within the absorption band of e.g. C5 as first insulation fluid component A, is coupled to an optical fiber (not shown) which delivers the light to an optical probe (sensor head). Alternatively, the blue light source BS is directly mounted to an optical feedthrough directing the light through the measurement cell 21 in fluid communication with the compartment 11 of the electrical apparatus 1 (see above).

Prior to being coupled into the optical fiber or the measurement cell 21, part of the light from the blue light source BS is split off using an optical beam splitter BSP1 and is send to a blue reference detector BRD which measures the stability of the emitted light intensity of the blue light source BS.

To eliminate artifacts in the transmitted signal (such as changes in the fiber bending losses or the presence of particle contamination on the optical interfaces within the compartment), a reference channel is used.

Light at a slightly red-shifted wavelength (black beams) which is not absorbed by e.g. C5 as first insulation fluid component A, i.e. at wavelengths $\lambda$ > 360 nm, emitted by a red light source RS is used to interrogate the optical path for optical transmission changes. The emission stability of RS is recorded by a red reference detector RRD using a second beam splitter BSP2.

The red and blue light is combined (e.g. by a first dichroic mirror DM1). The red light traverses the same optical path (hatched beams) as the blue light, but is not absorbed by the insulation fluid component A (e.g. C5). When the red light returns from the sensor head, it is split off using a second dichroic mirror DM2 to the red light detector RD. To ensure that none of the red light falls onto the blue light detector BD and vice versa, a short pass filter FSP is arranged in front of the blue light detector BD and a long pass filter FLP is arranged in front of the red light detector RD.

The number density of the insulation fluid component A (e.g. C5) can be obtained from the transmitted intensities, and at the same time losses introduced in the optical paths and variations in the intensity of the light sources can be corrected for. In particular the following formula can be used:

$$I_{\mathrm{tr}}^{(b)} = t_{\mathrm{SP}} t_{\mathrm{DM}}^{(b)} \left\{ \left[ \frac{t_{\mathrm{DM}}^{(b)} t_{\mathrm{BS}}^{(b)} I_{\mathrm{ref}}^{(b)}}{1 - t_{\mathrm{BS}}^{(b)}} + \frac{k}{2} \left( \frac{I_{\mathrm{tr}}^{(r)}}{t_{\mathrm{LP}} r_{\mathrm{DM}}^{(r)}} - \frac{r_{\mathrm{DM}}^{(r)} t_{\mathrm{BS}}^{(r)} I_{\mathrm{ref}}^{(r)}}{1 - t_{\mathrm{BS}}^{(r)}} \right) \right] e^{-\sigma l N} + \frac{k}{2} \left( \frac{I_{\mathrm{tr}}^{(r)}}{t_{\mathrm{LP}} r_{\mathrm{DM}}^{(r)}} - \frac{r_{\mathrm{DM}}^{(r)} t_{\mathrm{BS}}^{(r)} I_{\mathrm{ref}}^{(r)}}{1 - t_{\mathrm{BS}}^{(r)}} \right) \right\}$$

with

$I_{tr}^{(b)}$ = transmitted blue light intensity (falling onto blue light detector BD)

$t_{SP}$ = transmissivity of short pass filter FSP
$t_{DM}^{(b)}$ = transmissivity of dichroic mirror DM1, DM2 for blue light
$t_{BS}^{(b)}$ = transmissivity of beam splitter BSP1 for reference blue light (to blue reference detector BRD)
$I_{ref}^{(b)}$ = reference blue light intensity (falling onto blue reference detector BRD)
k = conversion factor for wavelength dependence of optical losses, defined by $k = \Delta I_{loss}^{(b)}/\Delta I_{loss}^{(r)}$ with
$\Delta I_{loss}^{(b)}$ = blue light intensity losses on forward optical path to the gas (i.e. reduction of blue light intensity after BSP1 and DM1 by losses up to gas) and on the backward optical path from the gas to the detector BD (i.e. reduction of sensor return blue light intensity by losses) and
$\Delta I_{loss}^{(r)}$ = red light intensity losses on forward optical path to the gas (i.e. reduction of red light intensity after BSP1 and DM1 by losses up to gas) and on backward optical path from the gas to the detector RD (i.e. reduction of sensor return red light intensity by losses)
$I_{tr}^{(r)}$ = transmitted red light intensity (falling onto red light detector RD)
$t_{LP}$ = transmissivity of long pass filter FLP
$r_{DM}^{(r)}$ = reflectivity of dichroic mirror DM1, DM2 for red light
$t_{BS}^{(r)}$ = transmissivity of beam splitter BSP2 for reference red light (to red reference detector RRD)
$I_{ref}^{(r)}$ = reference red light intensity (falling onto red reference detector RRD)
$\sigma$ = absorption cross section of dielectric insulation fluid component A (e.g. C5)
l = absorption path length (in gas; in absorbing gas at at least one wavelength)
N = number density of dielectric insulation fluid component A (e.g. C5).

A periodic measurement, e.g. a pulsed measurement, is preferable to minimize temperature-induced drift effects on the light sources. In this context, it is practical to alternate between the red and the blue channel. Then, by time-gated detection (e.g. via a lock-in amplifier), the red light detector RD, one dichroic mirror and the filters FLP and FSP can be omitted using just one common detector for both beams, given that detector sensitivity at the different wavelengths is sufficient or similar and the ratio of those sensitivities is known.

Electronics, i.e. light source and detector, can be arranged at the optical components. In this case, proper shielding from electromagnetic radiation is necessary. If electronics cannot be shielded from electromagnetic radiation from the electrical apparatus 1, a fiber optic link can be used. In that case the reference channel setup is particularly useful, if the fibers cannot be held rigidly in place. Alternatively or in addition, they can be immobilized in a duct. In any case, whether the system requires fiber optic links depends on whether electromagnetic interference is critical or not or can be shielded or not.

Fig. 42 shows an optical sensor 20 connected to a self-sealing insulation fluid port 600. Such a self-sealing insulation fluid port 600 (e.g. DILO) is useful to simplify removing or exchanging an optical sensor 20, e.g. for maintenance work. Otherwise, such a maintenance work could require a depressurization of the compartment 11 of the electrical apparatus 1. The insulation fluid port 600 is in a fluid communication with the compartment 11 of the electrical apparatus 1 and it enables an insulation fluid connection between the optical sensor 20 and the compartment 11 of the electrical apparatus 1. Thus, the insulation fluid port 600 allows maintenance work on the optical sensor 20 (e.g. cleaning of optical surfaces, exchanging particle protection tubes or protective covers 500 or for calibration) without depressurizing the compartment 11 of the electrical apparatus 1.

*Definitions:*

The term "air" herein shall include "technical air", i.e. pressurized and dried ambient air, or "synthetic air", i.e. mixtures of nitrogen ($N_2$) and oxygen ($O_2$) with various mixing ratios, or ambient air.

The term "aliphatic" herein shall relate to both "linear aliphatic" and "branched aliphatic".

The term "fluid" herein shall relate to "a substance, such as a liquid [and/] or gas, that can flow, has no fixed shape, and offers little resistance to an external stress" (from http://www.thefreedictionary.com/ fluid, accessed on 9/11/2011).

The term "high-voltage" herein shall relate to voltages larger than 50 kV.

The term "medium-voltage" herein shall relate to voltages larger than 1 kV.

As it is apparent from the description above, the term "method for *operating* a fluid-insulated electrical apparatus" herein relates to a method for making the electrical apparatus available and/or maintaining the operation of the electrical apparatus.

The compound class "hydrofluoroethers" herein relates to specific partially or fully fluorinated ethers as, e.g., available from 3M.

The compound "C5" herein particularly relates to a fluoroketone selected from the group consisting of the compounds defined by the following structural formulae in which at least one hydrogen atom, preferably all hydrogen atoms, is or are substituted with a fluorine atom or fluorine atoms:

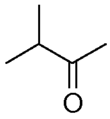 (Ia),

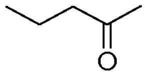 (Ib),

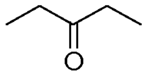 (Ic),

and

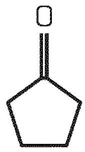 (Id).

The compound "C6" herein particularly relates to a fluoroketone selected from the group consisting of the compounds defined by the following structural formulae in which at least one hydrogen atom, preferably all hydrogen atoms, is/are substituted with a fluorine atom/ fluorine atoms:

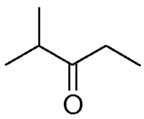 (IIa),

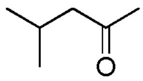 (IIb),

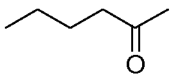 (IIc),

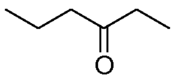 (IId),

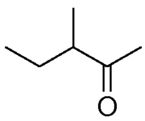 (IIe),

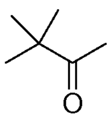 (IIf),

and

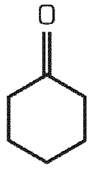 (IIg);

The compound "C7" herein particularly relates to a fluoroketone selected from the group consisting of the compounds defined by the following structural formulae in which at least one hydrogen atom, preferably all hydrogen atoms, is/are substituted with a fluorine atom or fluorine atoms:

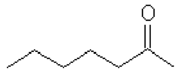 (IIIa),

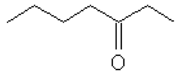 (IIIb),

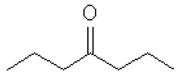 (IIIc),

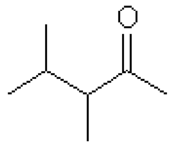 (IIId),

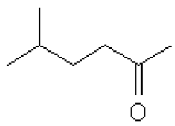 (IIIe),

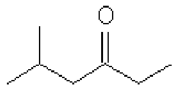 (IIIf),

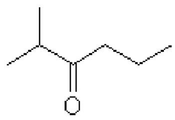 (IIIg),

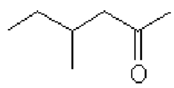 (IIIh),

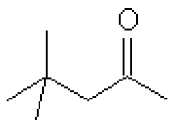 (IIIi),

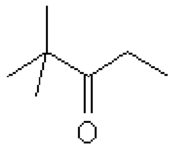

(IIIj),

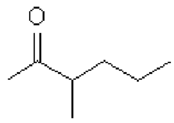

(IIIk),

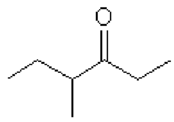

(IIIl),

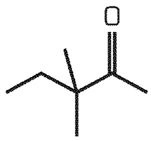

(IIIm),

and

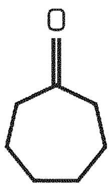

(IIIn).

*Note:*

C5 or "C5", C6 or "C6", C7 or "C7" etc. denote partially or fully fluorinated fluoroketones that have 5, 6, 7 etc. interconnected carbon atoms.

While there are shown and described embodiments or presently preferred or advantageous embodiments of the invention, it is to be distinctly understood that the invention is not limited thereto but may be otherwise variously embodied and practiced within the scope of the following claims. In particular, disclosed device features also disclose the corresponding method features, and disclosed method features also disclose the corresponding device features.

Reference numbers

**[0197]**

| | |
|---|---|
| 1: | electrical apparatus |
| 10: | insulation fluid |
| 11: | compartment of the electrical apparatus 1 |
| A, B, C: | fluid components of the insulation fluid 10 |
| $c_A$,$c_B$,$c_C$: | fluid component concentrations |
| O: | operating state of the electrical apparatus 1 |
| $E_{bd}$: | dielectric breakdown strength |
| 20: | optical sensor |
| 21: | measurement cell of optical sensor 20 |
| 21a: | reference cell of optical sensor 20 |

| | |
|---|---|
| 22: | light source |
| 23: | optical fiber |
| 24: | lens |
| 25: | photodetector of optical sensor 20 |
| 26: | emission filter |
| 27: | mirror |
| 28: | beam splitter |
| 29: | band-pass filter |
| 30: | gas chromatograph |
| 31: | carrier gas reservoir |
| 32: | sample injector |
| 33: | column of gas chromatograph 30 |
| 34: | detector of gas chromatograph 30 |
| 35: | mass spectrometer |
| 40: | analysis and control unit |
| 41: | interface |
| 42: | insulation fluid filler, filling device |
| 50: | component reservoir |
| 51: | filter |
| 52: | heater |
| 53: | cooler |
| 60: | electrically active part |
| 70: | pTp sensor |
| G: | triggering event |
| 80: | insulation fluid extractor |
| 81: | tubing |
| 90: | circulator |
| 200: | power transmission network |
| 201, 202: | bus bars |
| 303: | pump |
| 305: | rotating mixer |
| 305a: | foldable fan |
| 307: | convection mixer |
| 337: | valve |
| 339: | gas blender |
| 370, 380: | tube mixer |
| 371: | baffle |
| 381: | perforated dip tube |
| 390: | radiation mixer |
| 391: | light source |
| 400: | volumetric mixer |
| 401: | expandable volume |
| 410: | bypass mixer |
| 500: | protective cover, protective cover plate(s), protective cover tube(s) |
| 600: | insulation fluid port, self-sealing connector |
| 700: | humidity sensor |
| BS: | blue light source |
| RS: | red light source |
| BRD: | blue reference detector |
| RRD: | red reference detector |
| BSP1, BSP2 | beam splitter |
| DM2, DM1: | dichroic mirrors |
| RD: | red light detector |
| BD: | blue light detector |
| FLP: | long pass filter |
| FSP: | short pass filter |

## Claims

1. A method for operating a fluid-insulated electrical apparatus (1), in particular a gas-insulated medium-voltage or high-voltage switchgear (1), wherein an insulation fluid (10) in at least one compartment (11) of the electrical apparatus (1) comprises at least a first fluid component (A) and at least a second fluid component (B), the method comprising method elements of:

   - carrying out at least one optical measurement on the insulation fluid (10) and deriving a first concentration ($c_A$) of the first fluid component (A) using the optical measurement and/or
   - carrying out at least one gas chromatographic measurement and deriving a or the first concentration ($c_A$) of the first fluid component (A) using the gas chromatographic measurement,
   - deriving a second concentration ($c_B$) of the second fluid component (B),
   - wherein the first fluid component (A) and the second fluid component (B) are not contaminants, and
   - wherein the method elements of carrying out the optical measurement and/or the gas chromatographic measurement, of deriving the first concentration ($c_A$), and of deriving the second concentration ($c_B$) are carried out for a plurality of compartments (11) of the electrical apparatus (1), and the first concentration ($c_A$) and the second concentration ($c_B$) are derived for each of the compartments (11),
   - wherein the method further comprises a method element of deriving by a control unit (40) an operating state (O) of the electrical apparatus 1 using the first concentrations ($c_A$) and using the second concentrations ($c_B$) of the insulation fluid components A and B in each compartment (11).

2. The method of claim 1, further comprising a method element of

   - deriving a dielectric breakdown strength $E_{bd}$ of the insulation fluid (10) using the first concentration ($c_A$) and using the second concentration ($c_B$) according to equation

$$E_{bd} = S(c_A, c_B) \sum_{i=A,B} c_i E_{crit,i}$$

   with $E_{Crit,A}$ and $E_{crit,B}$ being fluid-component-specific critical field strengths of the fluid components A and B; with $c_A$ and $c_B$ being the first and second concentrations of the first and second fluid components A and B; with $S(c_A, c_B)$ being a synergy parameter; and with i being an index for the fluid components A and B, and wherein the operating state (O) is derived using the dielectric breakdown strength $E_{bd}$ of the insulation fluid (10).

3. The method of any of the preceding claims, further comprising a method element of

   - filling an amount of the insulation fluid (10) into the compartment (11) of the electrical apparatus (1), wherein the method element of carrying out the optical measurement and/or the gas chromatographic measurement is or are carried out during and/or after the method element of filling the compartment (11) with the insulation fluid (10).

4. The method of any of the preceding claims, wherein the second concentration ($c_B$) is derived using the optical measurement, using the gas chromatographic measurement, and/or using a density measurement and/or using a pressure- and a temperature-measurement of the insulation fluid (10).

5. The method of any of the preceding claims, wherein the operating state (O) of the electrical apparatus (1) is selected from a group of possible operating states consisting of:

   - normal operation,
   - uniform leakage of all fluid components (A, B) of the insulation fluid (10),
   - preferential leakage of a fluid component (A, B) of the insulation fluid (10),
   - condensation or preferential condensation of a fluid component (A, B) of the insulation fluid (10),
   - adsorption or preferential adsorption of a fluid component (A,B) of the insulation fluid (10),
   - reaction or preferential reaction of one fluid component (A or B) of the insulation fluid (10),
   - decomposition or preferential decomposition of a fluid component (A, B) of the insulation fluid (10), and
   - appearance of at least an additional fluid component (D) in the insulation fluid (10), in particular wherein the

additional component (D) is a contaminant.

6. The method of any of the preceding claims, wherein the first fluid component (A) is selected from the group consisting of:

- sulfur hexafluoride,
- partially or fully fluorinated ethers, in particular hydrofluoroethers, hydrofluoro monoethers, hydrofluoro monoethers containing at least 3 carbon atoms, perfluoro monoethers, or perfluoro monoethers containing at least 4 carbon atoms, fluorooxiranes, perfluorooxiranes, hydrofluorooxiranes, perfluorooxiranes comprising from three to fifteen carbon atoms, hydrofluorooxiranes comprising from three to fifteen carbon atoms, and mixtures thereof;
- partially or fully fluorinated ketones, in particular hydrofluoro monoketones, perfluoro monoketones, perfluoro monoketones comprising at least 5 carbon atoms, or perfluoro monoketones comprising exactly 5 or 6 or 7 or 8 carbon atoms, and mixtures thereof;
- fluoroolefins; in particular: perfluoroolefines, hydrofluoroolefins (HFO), hydrofluoroolefins (HFO) comprising at least three carbon atoms, hydrofluoroolefins (HFO) comprising exactly three carbon atoms, trans-1,3,3,3-tetrafluoro-1-propene (HFO-1234ze), 2,3,3,3-tetrafluoro-1-propene (HFO-1234yf), and mixtures thereof; and
- mixtures thereof, and

the second fluid component (B) is selected from the group consisting of:
- nitrogen,
- oxygen,
- carbon dioxide,
- nitric oxide,
- nitrogen dioxide,
- nitrous oxide,
- argon,
- methanes, in particular partially or fully halogenated methanes, in particular tetrafluoromethane or trifluoroiodomethane,
- air, in particular technical air or synthetic air, and
- mixtures thereof;

in particular wherein the first fluid component (A) is selected from the group consisting of:
- cyclic and/or aliphatic fluoropentanones, preferably cyclic and/or aliphatic perfluoropentanones, more preferably 1,1,1,3,4,4,4-heptafluoro-3-(tri-fluoromethyl)butan-2-one,
- cyclic and/or aliphatic fluorohexanones, preferably cyclic and/or aliphatic perfluorohexanones, more preferably 1,1,1,2,4,4,5,5,5-nonafluoro-4-(trifluoromethyl)pentan-3-one,
- cyclic and/or aliphatic fluoroheptanones, preferably cyclic and/or aliphatic perfluoroheptanones,
- sulfur hexafluoride, and
- hydrofluoroethers.

7. The method of the claim 6, wherein the second fluid component (B) consists of nitrogen and oxygen with relative partial pressures between $p(N_2)/(p(O_2)+p(N_2))=0.7$, $p(O_2)/(p(O_2) + p(N_2))=0.3$ and $p(N_2)/(p(O_2)+p(N_2))=0.95$, $p(O_2)/(p(O_2)+ p(N_2))=0.05$ or carbon dioxide and oxygen with relative partial pressures between $p(CO_2)/(p(O_2)+p(CO_2))=0.6$, $p(O_2) / (p(O_2)+p(CO_2))=0.4$ and $p(CO_2)/(p(O_2)+p(CO_2))=0.99$, $p(O_2)/(p(O_2)+ p(CO_2))=0.01$, or carbon dioxide and nitrogen with relative partial pressures between $p(CO_2)/(p(N_2)+p(CO_2))=0.1$, $p(N_2)/(p(N_2)+p(CO_2))=0.9$ and $p(CO_2)/(p(N_2)+p(CO_2))=0.9$, $p(N_2)/(p(N_2)+p(CO_2))=0.1$, and the first fluid component (A) comprises at least one of the group consisting of:

1,1,1,3,4,4,4-heptafluoro-3-(tri-fluoromethyl)butan-2-one with a partial pressure between 0.1 bar and 0.7 bar at a temperature of 20°C,
1,1,1,2,4,4,5,5,5-nonafluoro-4-(trifluoromethyl)pentan-3-one with a partial pressure between 0.01 bar and 0.3 bar at a temperature of 20°C,
sulfur hexafluoride with a partial pressure between 0.1 bar and 2 bar at a temperature of 20°C, and
hydrofluoroethers with a partial pressure between 0.2 bar and 1 bar at a temperature of 20°C;, or wherein the second fluid component (B) comprises
nitrogen and oxygen with relative partial pressures between $p(N_2)/(p(O_2)+p(N_2))=0.75$, $p(O_2)/(p(O_2)+ p(N_2))=0.25$ and $p(N_2)/(p(O_2)+p(N_2))=0.90$, $p(O_2)/(p(O_2)+ p(N_2))=0.10$, and
the first fluid component (A) comprises 1,1,1,3,4,4,4-heptafluoro-3-(tri-fluoromethyl)bu-tan-2-one with a partial

pressure between 0.25 bar and 0.5 bar and/or the fluid component 1,1,1,2,4,4,5,5,5-nona-fluoro-4-(tri-fluoromethyl)pentan-3-one with a partial pressure between 0.02 bar and 0.3 bar at a temperature of 20°C.

**8.** The method of any of the preceding claims,
wherein the optical measurement is carried out on the insulation fluid (10) in the compartment (11);
or wherein the method comprises a method element of extracting, in particular by means of the electrical apparatus (1), an amount of the insulation fluid (10) from the compartment (11) prior to carrying out the optical measurement and/or the gas chromatographic measurement, wherein the optical measurement and/or the gas chromatographic measurement is or are carried out on the extracted amount of the insulation fluid (10) and in particular wherein the method further comprises a method element of

- reinjecting, in particular by means of the electrical apparatus (1), at least a part of the extracted amount of the insulation fluid (10) into the compartment (11) after carrying out the optical and/or the gas chromatographic measurement.

**9.** The method of any one of the preceding claims, wherein the method element of carrying out the optical measurement is carried out by at least one optical sensor (20), and/or wherein the method element of carrying out the gas chromatographic measurement is carried out by at least one gas chromatograph (30), and in particular wherein a total number of optical sensors (20) and gas chromatographs (30) is smaller than or equal to a total number of the compartments (11).

**10.** The method of any of the preceding claims, wherein the electrical apparatus (1) comprises a or the optical sensor (20) for carrying out the optical measurement, wherein the optical sensor (20) comprises a measurement cell (21) for receiving at least a part of the insulation fluid (10), and wherein the optical sensor (20) further comprises one or more bulk optical components and/or one or more fiber optical components, in particular wherein the measurement cell (21) of the optical sensor (20) is at least in part formed by a part of the compartment (11) of the electrical apparatus (1).

**11.** The method of any one of the preceding claims, wherein the optical measurement is carried out by an optical sensor (20) and at least a part of the optical sensor (20), in particular a measurement cell (21) of the optical sensor (20), is separated from the compartment (11) of the electrical apparatus (1) by an insulation-fluid-permeable protective cover (500), in particular an insulation-fluid-permeable and particle-impermeable protective cover (500), preferably in the form of a protective cover plate (500) or protective cover tube, in particular wherein the protective cover (500) comprises at least one of the group consisting of:

* a sintered material,
* a porous material, in particular a porous metal,
* a gauze,
* a mesh,
* a membrane, in particular comprising a polymer material, and
* combinations thereof.

**12.** The method of any of the preceding claims wherein a or the optical measurement comprises: an optical measurement beam at a first wavelength, and an optical reference beam at a second wavelength that is not absorbed by the first fluid component (A), in particular fluoroketone.

**13.** The method of any of the preceding claims, further comprising a method element of

- circulating the insulation fluid (10) for homogenizing densities of the first and second fluid components (A,B), in particular before carrying out the optical measurement and/or the gas chromatographic measurement; or the method further comprising a method element of
- mixing the first fluid component (A) with the second fluid component (B) for homogenizing a mixture of the first and second fluid components (A, B), in particular before carrying out the optical measurement and/or the gas chromatographic measurement, in particular wherein the method element of mixing the at least two fluid components (A, B) comprises a disturbing of a laminar flow of the at least two fluid components (A,B) for introducing a turbulence or wherein the disturbing of the laminar flow is carried out by means of a gas blender (339) comprising at least one of the group of
- a tube mixer (370,380), in particular comprising a baffle (371), particularly a plurality of baffles (371), and/or

comprising a perforated dip tube (381),
- a rotating mixer (305), in particular comprising a fan (305a), particularly a foldable fan (305a),
- a convection mixer (307), in particular comprising a heater (52),
- a radiation mixer (390), in particular comprising a UV light source (391) or an IR light source (391),
- a volumetric mixer (400), in particular comprising an expandable volume (401), particularly a pneumatically expandable volume (401),
- a bypass mixer (410) ), and
- combinations thereof.

**14.** The method of any of the preceding claims, further comprising a method element of

- detecting and/or tracing at least one contaminant and/or a method element of
- distinguishing at least two contaminants, thereby using at least one of the group consisting of:

  * the optical measurement,
  * an additional optical measurement,
  * the gas chromatographic measurement,
  * an additional gas chromatographic measurement, and
  * the or an additional gas chromatographic measurement combined with a mass spectrometric measurement.

**15.** The method of any of the preceding claims, wherein the insulation fluid (10) comprises at least a third fluid component (C) which is not a contaminant, and wherein the method further comprises a method element of deriving a third concentration ($c_C$) of the third fluid component (C) by using at least one of the group consisting of:

* the optical measurement,
* an additional optical measurement,
* the gas chromatographic measurement, and
* an additional gas chromatographic measurement.

**16.** The method of any of the preceding claims, **characterized in that**, for the optical measurement, cross-sensitivity to other insulation fluid components and contaminants is excluded and that, for the gas chromatographic measurement, insulation fluid components appear as single separate peaks in the chromatogram.

**17.** The method of claim 16, wherein

- for the gas chromatographic measurement, insulation fluid components "C5", "C6", and "$N_2/O_2$" appear as single separate peaks in the chromatogram and a contaminant is detected as an additional peak in the chromatogram, and/or
- for the optical measurement, a concentration of an insulation fluid component "C5" using a C5 UV-absorption peak can be determined independently from the admixture of synthetic air and the spectral signatures of the contaminants "$CF_4$" and "hexafluoropropene" do not show spectral overlap with the UV absorption of "C5", and/or
- for the optical measurement, cross-sensitivity to insulation fluid components $O_2$, $CO_2$ and water vapor "$H_2O$" and the contaminants "HF", "$CF_4$", "hexafluoropropene", "hexafluoropropane", and "HF" is excluded.

**18.** The method of any of the preceding claims, wherein the optical measurement comprises an absorption measurement, in particular at at least one wavenumber between 500 $cm^{-1}$ and 1500 $cm^{-1}$ and/or at at least one wavelength between 200 nm and 400 nm, preferably at at least one wavenumber between 600 $cm^{-1}$ and 800 $cm^{-1}$ and/or between 940 $cm^{-1}$ and 1050 $cm^{-1}$ and/or between 1100 $cm^{-1}$ and 1400 $cm^{-1}$ and/or between 1750 $cm^{-1}$ and 1850 $cm^{-1}$ and/or at at least one wavelength between 225 nm and 375 nm or
in particular at at least one wavelength between 1350 nm to 1970 nm or at absorption peaks 1873 nm / 1882 nm and at 1894 nm / 1903 nm.

**19.** The method of claim 18, wherein the absorption measurement is carried out by means of a cavity ringdown spectroscope, a Lambert-Beer spectroscope, a multi-pass spectroscope, a single wavelength ultraviolet spectroscope, a single wavelength infrared spectroscope, a Fourier-transform infrared spectroscope, a Raman spectroscope, or a photoacoustic spectroscope.

**20.** The method of any of the claims 18 to 19, wherein an absorption signal full-width-at-half-maximum is between 40 $cm^{-1}$ and 120 $cm^{-1}$ and/or between 50 nm and 100 nm at an insulation fluid pressure between 1 bar and 10 bar and at an insulation fluid temperature of 20°C.

**21.** The method of any of the preceding claims, wherein the optical measurement comprises a fluorescence emission measurement, in particular at at least one fluorescence emission wavelength between 350 nm and 600 nm.

**22.** The method of any of the preceding claims, wherein the method is carried out during a regular operation of the electrical apparatus (1), in particular wherein an operating voltage, in particular > 1 kV, preferably > 50 kV, is applied over an electrically active part (60) of the electrical apparatus (10) during the carrying out the optical measurement and/or the gas chromatographic measurement.

**23.** The method of any of the preceding claims, wherein a pressure of the insulation fluid (10) in the compartment (11) during the carrying out the optical measurement and/or the gas chromatographic measurement is an operating pressure for the electrical apparatus (10), and in particular wherein the pressure of the insulation fluid is > 1 bar, more particularly > 3 bar, most particularly > 5 bar, at an insulation fluid temperature of 20°C.

**24.** The method of any of the preceding claims, wherein the gas chromatographic measurement is carried out by means of a multicolumn gas chromatograph (30).

**25.** The method of any of the preceding claims, further comprising at least one method element of the group consisting of:

- increasing the first concentration ($c_A$) of the first fluid component (A) by means of injecting an amount of the first fluid component (A) from a component reservoir (50) into the compartment (11),
- increasing the second concentration ($c_B$) of the second fluid component (B) by means of injecting an amount of the second fluid component (B) from a component reservoir (50) into the compartment (11),
- reducing a concentration of at least one contaminant in the insulation fluid (10), in particular by means of a filter (51),
- evaporating a condensed amount of the first and/or the second fluid component (A, B), in particular by means of a heater (52), and
- condensing an amount of the first and/or the second fluid component (A, B) and/or of a contaminant, in particular by means of a cooler (53).

**26.** The method of any of the preceding claims wherein the first fluid component (A) and the second fluid component (B) are intended ingredients of the insulation fluid (10).

**27.** The method of any of the preceding claims, comprising an additional method element of

- measuring a humidity in the compartment (11) of the electrical apparatus (1),
in particular using at least one of the group of

  * a capacitive humidity sensor (700),
  * a resistive humidity sensor (700),
  * an oscillating resonator (700) coated with a hygroscopic layer,
  * a thermal conductivity sensor (700),
  * a or the optical sensor (700, 20),
  * and combinations thereof.

**28.** The method of claim 5 and of claim 27, wherein the group of possible operating states additionally comprises

- inoperable because of too high humidity level in the insulation fluid (10), and
- gas maintenance needed to reduce humidity level in insulation fluid (10).

**29.** An electrical apparatus (1), in particular gas-insulated medium-voltage or high-voltage switchgear, comprising
at least one compartment (11) filled with an insulation fluid (10) comprising at least a first fluid component (A) with a first concentration ($c_A$) and at least a second fluid component (B) with a second concentration ($c_B$),
an optical sensor (20) for carrying out an optical measurement indicative of the first concentration ($c_A$) and/or a gas chromatograph (30) for carrying out a gas chromatographic measurement indicative of the first concentration ($c_A$), and

an analysis and control unit (40) for carrying out the steps of a method of any of the preceding claims 1-28, in particular wherein the electrical apparatus (1) further comprises an interface (41) for connecting the electrical apparatus (1) to an external insulation fluid filling device (42) and for transmitting the first and second concentrations ($c_A$, $c_B$) to the insulation fluid filling device (42).

**30.** The electrical apparatus (1) of claim 29, further comprising an insulation fluid port (600), in particular a self-sealing insulation fluid port (600),
wherein the insulation fluid port (600) is in a fluid communication with the compartment (11) of the electrical apparatus (1), and
wherein the optical sensor (20) and/or the gas chromatograph (30) is or are adapted to be connectable, in particular reversibly connectable, to the compartment (11) of the electrical apparatus (1) by the insulation fluid port (600).

**Patentansprüche**

**1.** Verfahren zum Betreiben einer mit einem Fluid isolierten elektrischen Vorrichtung (1), insbesondere einer gasisolierten Mittelspannungs- oder Hochspannungsschaltanlage (1), wobei ein Isolationsfluid (10) in mindestens einer Kammer (11) der elektrischen Vorrichtung (1) mindestens eine erste Fluidkomponente (A) und mindestens eine zweite Fluidkomponente (B) umfasst, wobei das Verfahren Verfahrenselemente von Folgendem umfasst:

- Ausführen mindestens einer optischen Messung auf dem Isolationsfluid (10) und Ableiten einer ersten Konzentration ($c_A$) der ersten Fluidkomponente (A) unter Verwendung der optischen Messung und/oder
- Ausführen mindestens einer gaschromatographischen Messung und Ableiten einer oder der ersten Konzentration ($c_A$) der ersten Fluidkomponente (A) unter Verwendung der gaschromatographischen Messung,
- Ableiten einer zweiten Konzentration ($c_B$) der zweiten Fluidkomponente (B),
- wobei die erste Fluidkomponente (A) und die zweite Fluidkomponente (B) keine Zersetzungsprodukte sind, und
- wobei die Verfahrenselemente des Ausführens der optischen Messung und/oder der gaschromatographischen Messung, des Ableitens der ersten Konzentration ($c_A$) und des Ableitens der zweiten Konzentration ($c_B$) für mehrere Kammern (11) der elektrischen Vorrichtung (1) ausgeführt werden, und wobei die erste Konzentration ($c_A$) und die zweite Konzentration ($c_B$) für jede der Kammern (11) abgeleitet werden,
- wobei das Verfahren ferner ein Verfahrenselement des Ableitens eines Betriebszustands (0) der elektrischen Vorrichtung (1) durch eine Steuereinheit (40) umfasst unter Verwendung der ersten Konzentration ($c_A$) und unter Verwendung der zweiten Konzentration ($c_B$) der Isolationsfluidkomponenten A und B in jeder Kammer (11).

**2.** Verfahren nach Anspruch 1, das ferner ein Verfahrenselement von Folgendem umfasst:

- Ableiten einer dielektrischen Durchschlagsfestigkeit $E_{bd}$ des Isolationsfluids (10) unter Verwendung der ersten Konzentration ($c_A$) und unter Verwendung der zweiten Konzentration ($c_B$) gemäß der Gleichung

$$E_{bd} = S(c_A, c_B) \sum_{i=A,B} c_i E_{crit,i}$$

wobei $E_{crit,A}$ und $E_{crit,B}$ fluidkomponentenspezifische kritische Feldstärken der Fluidkomponenten A und B sind; wobei $c_A$ und $c_B$ die erste und die zweite Konzentration der ersten und der zweiten Fluidkomponente A und B sind; wobei $S(c_A, c_B)$ ein Synergieparameter ist; und wobei i ein Index für die Fluidkomponenten A und B ist, und wobei der Betriebszustand (0) unter Verwendung der dielektrischen Durchschlagsfestigkeit $E_{bd}$ des Isolationsfluids (10) abgeleitet ist.

**3.** Verfahren nach einem der vorhergehenden Ansprüche, das ferner ein Verfahrenselement von Folgendem umfasst:

- Einfüllen einer Menge des Isolationsfluids (10) in die Kammer (11) der elektrischen Vorrichtung (1),
wobei das Verfahrenselement des Ausführens der optischen Messung und/oder der gaschromatographischen Messung während und/oder nach dem Verfahrenselement des Auffüllens der Kammer (11) mit dem Isolationsfluid (10) ausgeführt wird oder ausgeführt werden.

**4.** Verfahren nach einem der vorhergehenden Ansprüche, wobei die zweite Konzentration ($c_B$) unter Verwendung der

optischen Messung, unter Verwendung der gaschromatographischen Messung und/oder unter Verwendung einer Dichtemessung und/oder unter Verwendung einer Druck- und einer TemperaturMessung des Isolationsfluids (10) abgeleitet wird.

**5.** Verfahren nach einem der vorhergehenden Ansprüche, wobei der Betriebszustand (0) der elektrischen Vorrichtung (1) ausgewählt ist aus einer Gruppe von möglichen Betriebszuständen, die aus Folgendem besteht:

- normaler Betrieb,
- uniforme Leckage von allen Fluidkomponenten (A, B) des Isolationsfluids (10),
- vorrangige Leckage einer Fluidkomponente (A, B) des Isolationsfluids (10),
- Kondensation oder vorrangige Kondensation einer Fluidkomponente (A, B) des Isolationsfluids (10),
- Adsorption oder vorrangige Adsorption einer Fluidkomponente (A, B) des Isolationsfluids (10),
- Reaktion oder vorrangige Reaktion einer Fluidkomponente (A oder B) des Isolationsfluids (10),
- Zersetung oder vorrangige Zersetung einer Fluidkomponente (A, B) des Isolationsfluids (10), und
- Auftreten von mindestens einer zusätzlichen Fluidkomponente (D) in dem Isolationsfluid (10), wobei insbesondere die zusätzliche Komponente (D) ein Zersetzungsprodukt ist.

**6.** Verfahren nach einem der vorhergehenden Ansprüche, wobei die erste Fluidkomponente (A) ausgewählt ist aus der Gruppe, die aus Folgendem besteht:

- Schwefelhexafluorid,
- teilweise oder vollständig fluorierte Ether, insbesondere Hydrofluorether, Hydrofluormonoether, Hydrofluormonoether, die mindestens 3 Kohlenstoffatome enthalten, Perfluormonoether, oder Perfluormonoether, die mindestens 4 Kohlenstoffatome enthalten, Fluoroxirane, Perfluoroxirane, Hydrofluoroxirane, Perfluoroxirane, die von drei bis fünfzehn Kohlenstoffatome umfassen, Hydrofluoroxirane, die von drei bis fünfzehn Kohlenstoffatome umfassen, und Mischungen davon;
- teilweise oder vollständig fluorierte Ketone, insbesondere Hydrofluormonoketone, Perfluormonoketone, Perfluormonoketone, die mindestens 5 Kohlenstoffatome umfassen, oder Perfluormonoketone, die genau 5 oder 6 oder 7 oder 8 Kohlenstoffatome umfassen, und Mischungen davon;
- Fluorolefine; insbesondere: Perfluorolefine, Hydrofluorolefine (HFO), Hydrofluorolefine (HFO), die mindestens drei Kohlenstoffatome umfassen, Hydrofluorolefine (HFO), die genau drei Kohlenstoffatome umfassen, Trans-1,3,3,3-tetrafluor-1-propen (HFO-1234ze), 2,3,3,3-Tetrafluor-1-propen (HFO-1234yf), und Mischungen davon; und
- Mischungen davon, und

wobei die zweite Fluidkomponente (B) ausgewählt ist aus der Gruppe, die besteht aus:

- Stickstoff,
- Sauerstoff,
- Kohlenstoffdioxid,
- Stickoxid,
- Stickstoffdioxid,
- Lachgas (Distickstoffmonoxid),
- Argon,
- Methanen, insbesondere teilweise oder vollständig halogenierte Methane, insbesondere Tetrafluormethan oder Trifluoriodomethan,
- Luft, insbesondere technische Luft oder synthetische Luft, und
- Mischungen davon;

wobei insbesondere die erste Fluidkomponente (A) ausgewählt ist aus der Gruppe, die besteht aus:

- zyklischen und/oder aliphatischen Fluorpentanonen, vorzugsweise aus zyklischen und/oder aliphatischen Perfluorpentanonen, stärker bevorzugt aus 1,1,1,3,4,4,4-Heptafluor-3-(tri-fluor-methyl)butan-2-on,
- zyklischen und/oder aliphatischen Fluorhexanonen, vorzugsweise zyklischen und/oder aliphatischen Perfluorhexanonen, stärker bevorzugt 1,1,1,2,4,4,5,5,5-Nonafluor-4-(trifluormethyl)pentan-3-on,
- zyklischen und/oder aliphatischen Fluorheptanonen, vorzugsweise aus zyklischen und/oder aliphatischen Perfluorheptanonen,
- Schwefelhexafluorid, und
- Hydrofluorether.

**7.** Verfahren nach Anspruch 6, wobei die zweite Fluidkomponente (B) aus Folgendem besteht:

Stickstoff und Sauerstoff mit relativen Partialdrücken zwischen $p(N_2)/(p(O_2) + p(N_2)) = 0{,}7$, $p(O_2)/(p(O_2) + p(N_2)) = 0{,}3$ und $p(N_2)/(p(O_2) + p(N_2)) = 0{,}95$, $p(O_2)/(p(O_2) + p(N_2)) = 0{,}05$ oder
Kohlenstoffdioxid und Sauerstoff mit relativen Partialdrücken zwischen $p(CO_2)/(p(O_2) + p(CO_2)) = 0{,}6$, $p(O_2)/(p(O_2) + p(CO_2)) = 0{,}4$ und $p\ (CO_2)/(p(O_2) + p(CO_2)) = 0{,}99$, $p(O_2)/(p(O_2) + p(CO_2)) = 0{,}01$, oder
Kohlenstoffdioxid und Stickstoff mit relativen Partialdrücken zwischen $p(CO_2)/(p(N_2) + p(CO_2)) = 0{,}1$, $p(N_2)/(p(N_2) + p(CO_2)) = 0{,}9$ und $p(CO_2)/(p(N_2) + p(CO_2)) = 0{,}9$, $p(N_2)/(p(N_2) + p(CO_2)) = 0{,}1$, und
die erste Fluidkomponente (A) mindestens eine der folgenden Verbindungen aus der Gruppe enthält, die besteht aus:

1,1,1,3,4,4,4-Heptafluor-3-(tri-fluor-methyl)butan -2-on mit einem Partialdruck zwischen 0,1 bar und 0,7 bar bei einer Temperatur von 20 °C,
1,1,1,2,4,4,5,5,5-Nonafluor-4-(tri-fluormethyl)-pentan-3-one mit einem Partialdruck zwischen 0,01 bar und 0,3 bar bei einer Temperatur von 20 °C,
Schwefelhexafluorid mit einem Partialdruck zwischen 0,1 bar und 2 bar bei einer Temperatur von 20 °C, und Hydrofluorether mit einem Partialdruck zwischen 0,2 bar und 1 bar bei einer Temperatur von 20 °C; oder wobei die zweite Fluidkomponente (B) umfasst
Stickstoff und Sauerstoff mit relativen Partialdrücken zwischen $p(N_2)/(p(O_2) + p(N_2)) = 0{,}75$, $p(O_2)/(p(O_2) + p(N_2)) = 0{,}25$ und $p(N_2)/(p(O_2) + p(N_2)) = 0{,}90$, $p(O_2)/(p(O_2) + p(N_2)) = 0{,}10$, und
wobei die erste Fluidkomponente (A) 1,1,1,3,4,4,4-Heptafluor-3-(tri-fluormethyl)butan-2-on mit einem Partialdruck zwischen 0,25 bar und 0,5 bar und/oder die Fluidkomponente 1,1,1,2,4,4,5,5,5-Nona-fluor-4-(tri-fluormethyl)pentan-3-on mit einem Partialdruck zwischen 0,02 bar und 0,3 bar bei einer Temperatur von 20 °C umfasst.

**8.** Verfahren nach einem der vorhergehenden Ansprüche, wobei die optische Messung auf dem Isolationsfluid (10) in der Kammer (11) ausgeführt wird;
oder wobei das Verfahren ein Verfahrenselement des Extrahierens, insbesondere mittels der elektrischen Vorrichtung (1), einer Menge des Isolationsfluids (10) aus der Kammer (11) vor dem Ausführen der optischen Messung und/oder der gaschromatographischen Messung umfasst, wobei die optische Messung und/oder die gaschromatographische Messung auf der extrahierten Menge des Isolationsfluids (10) ausgeführt wird oder ausgeführt werden und wobei das Verfahren insbesondere ferner ein Verfahrenselement von Folgendem umfasst:

- erneutes Einspeisen, insbesondere mittels der elektrischen Vorrichtung (1), mindestens eines Teils der extrahierten Menge des Isolationsfluids (10) in die Kammer (11) nach dem Ausführen der optischen und/oder der gaschromatographischen Messung.

**9.** Verfahren nach einem der vorhergehenden Ansprüche, wobei das Verfahrenselement des Ausführens der optischen Messung durch mindestens einen optischen Sensor (20) ausgeführt wird, und/oder wobei das Verfahrenselement des Ausführens der gaschromatographischen Messung durch mindestens einen Gaschromatographen (30) ausgeführt wird, und wobei insbesondere eine Gesamtanzahl an optischen Sensoren (20) und Gaschromatographen (30) gleich oder kleiner als eine Gesamtanzahl der Kammern (11) ist.

**10.** Verfahren nach einem der vorhergehenden Ansprüche, wobei die elektrische Vorrichtung (1) einen oder den optischen Sensor (20) zum Ausführen der optischen Messung umfasst, wobei der optische Sensor (20) eine Messzelle (21) umfasst, um mindestens einen Teil des Isolationsfluids (10) aufzunehmen, und wobei der optische Sensor (20) ferner eine oder mehrere optische Komponenten aus dem Massenstandardangebot und/oder eine oder mehrere faseroptische Komponenten umfasst, wobei insbesondere die Messzelle (21) des optischen Sensors (20) mindestens teilweise durch einen Teil der Kammer (11) der elektrischen Vorrichtung (1) gebildet wird.

**11.** Verfahren nach einem der vorhergehenden Ansprüche, wobei die optische Messung durch einen optischen Sensor (20) ausgeführt wird, und wobei mindestens ein Teil des optischen Sensors (20), insbesondere eine Messzelle (21) des optischen Sensors (20), von der Kammer (11) der elektrischen Vorrichtung (1) durch eine für das Isolationsfluid durchlässige Schutzabdeckung (500) getrennt wird, insbesondere eine für das Isolationsfluid durchlässige und für Partikel undurchlässige Schutzabdeckung (500), vorzugsweise in der Form einer Schutzabdeckungsplatte (500) oder eines Schutzabdeckungsrohrs, wobei insbesondere die Schutzabdeckung (500) mindestens eines aus der Gruppe umfasst, die besteht aus:

* einem gesinterten Material,
* einem porösen Material, insbesondere einem porösen Metall,
* einem feinen Drahtgeflecht,
* einem Netz,
* einer Membran, die insbesondere ein Polymermaterial umfasst, und
* Kombinationen davon.

**12.** Verfahren nach einem der vorhergehenden Ansprüche, wobei eine oder die optische Messung umfasst:

einen optischen Messstrahl bei einer ersten Wellenlänge, und einen optischen Referenzstrahl bei einer zweiten Wellenlänge, der nicht von der ersten Fluidkomponente (A), insbesondere von Fluorketonen, absorbiert wird.

**13.** Verfahren nach einem der vorhergehenden Ansprüche, das ferner ein Verfahrenselement von Folgendem umfasst:

- Zirkulieren des Isolationsfluids (10) für ein Homogenisieren der Dichten der ersten und der zweiten Fluidkomponenten (A, B), insbesondere vor einem Ausführen der optischen Messung und/oder der gaschromatographischen Messung; oder das Verfahren umfasst ferner ein Verfahrenselement von Folgendem:
- Mischen der ersten Fluidkomponente (A) mit der zweiten Fluidkomponente (B), um eine Mischung der ersten und der zweiten Fluidkomponente (A, B) zu homogenisieren, insbesondere vor dem Ausführen der optischen Messung und/oder der gaschromatographischen Messung, wobei insbesondere das Verfahrenselement des Mischens der mindestens zwei Fluidkomponenten (A, B) ein Stören einer laminaren Strömung der mindestens zwei Fluidkomponenten (A, B) umfasst, um eine Turbulenz einzuführen oder wobei das Stören der laminaren Strömung mittels eines Gasmischers (339) ausgeführt wird, der mindestens eines aus der folgenden Gruppe umfasst
- einen Rohrmischer (370, 380), der insbesondere ein Ablenkblech (371), insbesondere mehrere Ablenkbleche (371), umfasst und/oder ein perforiertes Tauchrohr (381) umfasst,
- eine drehende Mischtrommel (305), die insbesondere einen Lüfter (305a), insbesondere einen klappbaren Lüfter (305a), umfasst,
- einen Konvektionsmischer (307), der insbesondere eine Heizvorrichtung (52) umfasst,
- einen Strahlungsmischer (390), der insbesondere eine UV-Lichtquelle (391) oder eine IR-Lichtquelle (391) umfasst,
- ein volumetrischer Mischer (400), der insbesondere ein ausdehnbares Volumen (401), insbesondere ein pneumatisch ausdehnbares Volumen (401) umfasst,
- einen Bypass-Mischer (410), und
- Kombinationen davon.

**14.** Verfahren nach einem der vorhergehenden Ansprüche, das ferner ein Verfahrenselement von Folgendem umfasst

- Detektieren und/oder Nachverfolgen mindestens eines Zersetzungsprodukts und/oder ein Verfahrenselement des
- Unterscheidens mindestens zweier Zersetzungsprodukte, dabei Verwenden von mindestens einer Messung aus der Gruppe, die besteht aus:

  * der optischen Messung,
  * einer zusätzlichen optischen Messung,
  * der gaschromatographischen Messung,
  * einer zusätzlichen gaschromatographischen Messung, und
  * der oder einer zusätzlichen gaschromatographischen Messung, die mit einer massenspektrometrischen Messung kombiniert ist.

**15.** Verfahren nach einem der vorhergehenden Ansprüche, wobei das Isolationsfluid (10) mindestens eine dritte Fluidkomponente (C) umfasst, die kein Zersetzungsprodukt ist, und wobei das Verfahren ferner ein Verfahrenselement des Ableitens einer dritten Konzentration ($c_C$) der dritten Fluidkomponente (C) umfasst, indem mindestens eines von Folgendem aus der Gruppe verwendet wird, die besteht aus:

* der optischen Messung,
* einer zusätzlichen optischen Messung,
* der gaschromatographischen Messung, und

* einer zusätzlichen gaschromatographischen Messung.

**16.** Verfahren nach einem der vorhergehenden Ansprüche, **dadurch gekennzeichnet, dass** für die optische Messung eine Querempfindlichkeit zu anderen Isolationsfluidkomponenten und Zersetzungsprodukten ausgeschlossen ist und dass für die gaschromatographische Messung Isolationsfluidkomponenten als einzelne separate Scheitelwerte in dem Chromatogramm erscheinen.

**17.** Verfahren nach Anspruch 16, wobei

- für die gaschromatographische Messung die Isolationsfluidkomponenten "C5", "C6", und "$N_2/O_2$" als einzelne separate Scheitelwerte in dem Chromatogramm erscheinen und ein Zersetzungsprodukt als ein zusätzlicher Scheitelwert in dem Chromatogramm detektiert wird, und/oder
- für die optische Messung eine Konzentration einer Isolationsfluidkomponente "C5" unter Verwendung eines C5 UV-Absorptionsscheitelwerts unabhängig von der Zumischung von synthetischer Luft bestimmt werden kann und die spektralen Signaturen der Zersetzungsprodukte "$CF_4$" und "Hexafluorpropen" keine spektrale Überlappung mit der UV-Absorption von "C5" zeigen, und/oder
- für die optische Messung eine Querempfindlichkeit zu Isolationsfluidkomponenten $O_2$, $CO_2$ und zu Wasserdampf "$H_2O$" und zu den Zersetzungsprodukten "HF", "$CF_4$", "Hexafluorpropen", "Hexafluorpropan", und "HF" ausgeschlossen ist

**18.** Verfahren nach einem der vorhergehenden Ansprüche, wobei die optische Messung eine Absorptionsmessung umfasst,
insbesondere bei mindestens einer Wellenzahl zwischen 500 $cm^{-1}$ und 1500 $cm^{-1}$ und/oder bei mindestens einer Wellenlänge zwischen 200 nm und 400 nm, vorzugsweise bei mindestens einer Wellenzahl zwischen 600 $cm^{-1}$ und 800 $cm^{-1}$ und/oder zwischen 940 $cm^{-1}$ und 1050 $cm^{-1}$ und/oder zwischen 1100 $cm^{-1}$ und 1400 $cm^{-1}$ und/oder zwischen 1750 $cm^{-1}$ und 1850 $cm^{-1}$ und/oder bei mindestens einer Wellenlänge zwischen 225 nm und 375 nm oder insbesondere bei mindestens einer Wellenlänge zwischen 1350 nm bis 1970 nm oder bei Absorptionsscheitelwerten 1873 nm / 1882 nm und bei 1894 nm / 1903 nm.

**19.** Verfahren nach Anspruch 18, wobei die Absorptionsmessung mittels eines Cavity-Ringdown- Spektroskops, eines Lambert-Beer-Spektroskops, eines Mehrfachspektroskops, eines Ultravioletspektroskops einer einzelnen Wellenlänge, eines Infrarotspektroskops einer einzelnen Wellenlänge, eines Infrarotspektroskops mit einer Fouriertransformation, eines Ramanspektroskops oder eines photoakustischen Spektroskops ausgeführt wird.

**20.** Verfahren nach einem der Ansprüche 18 bis 19, wobei ein Absorptionssignal voller Breite bei einem halben Maximum zwischen 40 $cm^{-1}$ und 120 $cm^{-1}$ und/oder zwischen 50 nm und 100 nm bei einem Isolationsfluiddruck zwischen 1 bar und 10 bar und bei einer Isolationsfluidtemperatur von 20 °C liegt.

**21.** Verfahren nach einem der vorhergehenden Ansprüche, wobei die optische Messung eine Fluoreszenzemissionsmessung insbesondere bei mindestens einer Fluoreszenzemissionswellenlänge zwischen 350 nm und 600 nm umfasst.

**22.** Verfahren nach einem der vorhergehenden Ansprüche, wobei das Verfahren während eines regulären Betriebs der elektrischen Vorrichtung (1) ausgeführt wird, wobei insbesondere eine Betriebsspannung, insbesondere > 1 kV, vorzugsweise > 50 kV, über einem elektrisch aktiven Teil (60) der elektrischen Vorrichtung (10) während des Ausführens der optischen Messung und/oder der gaschromatographischen Messung angelegt wird.

**23.** Verfahren nach einem der vorhergehenden Ansprüche, wobei ein Druck des Isolationsfluids (10) in der Kammer (11) während des Ausführens der optischen Messung und/oder der gaschromatographischen Messung ein Betriebsdruck für die elektrische Vorrichtung (10) ist, und wobei insbesondere der Druck des Isolationsfluids > 1 bar, stärker bevorzugt > 3 bar, am stärksten bevorzugt > 5 bar, bei einer Isolationsfluidtemperatur von 20 °C ist.

**24.** Verfahren nach einem der vorhergehenden Ansprüche, wobei die gaschromatographische Messung mittels eines Mehrkanal-Gaschromatographen (30) ausgeführt wird.

**25.** Verfahren nach einem der vorhergehenden Ansprüche, das ferner mindestens ein Verfahrenselement der Gruppe umfasst, die besteht aus:

- Erhöhen der ersten Konzentration ($c_A$) der ersten Fluidkomponente (A) mittels des Einspeisens einer Menge der ersten Fluidkomponente (A) von einem Komponentenreservoir (50) in die Kammer (11),
- Erhöhen der zweiten Konzentration ($c_B$) der zweiten Fluidkomponente (B) mittels des Einspeisens einer Menge der zweiten Fluidkomponente (B) von einem Komponentenreservoir (50) in die Kammer (11),
- Vermindern einer Konzentration von mindestens einem Zersetzungsprodukt in dem Isolationsfluid (10), insbesondere mittels eines Filters (51),
- Verdampfen einer kondensierten Menge der ersten und/oder der zweiten Fluidkomponente (A, B), insbesondere mittels einer Heizvorrichtung (52), und
- Kondensieren einer Menge der ersten und/oder der zweiten Fluidkomponente (A, B) und/oder eines Zersetzungsprodukts, insbesondere mittels einer Kühlvorrichtung (53).

**26.** Verfahren nach einem der vorhergehenden Ansprüche, wobei die erste Fluidkomponente (A) und die zweite Fluidkomponente (B) beabsichtigte Inhaltsstoffe des Isolationsfluids (10) sind.

**27.** Verfahren nach einem der vorhergehenden Ansprüche, das ein zusätzliches Verfahrenselement von Folgendem umfasst:

- Messen einer Feuchtigkeit in der Kammer (11) der elektrischen Vorrichtung (1), insbesondere unter Verwendung mindestens eines Messinstruments aus der Gruppe von:

  * einem kapazitiven Feuchtigkeitssensor (700),
  * einem resistiven Feuchtigkeitssensor (700),
  * einem Schwingungsresonator (700), der mit einer hygroskopischen Schicht beschichtet ist,
  * einem thermischen Leitfähigkeitssensor (700),
  * einem oder dem optischen Sensor (700, 20),
  * und Kombinationen davon.

**28.** Verfahren nach Anspruch 5 und 27, wobei die Gruppe von möglichen Betriebszuständen außerdem umfasst:

- nicht betriebsfähig, weil ein zu hoher Feuchtigkeitsgehalt in dem Isolationsfluid (10) vorliegt, und
- Gaswartung, die erforderlich ist, um den Feuchtigkeitsgehalt in dem Isolationsfluid (10) zu verringern.

**29.** Elektrische Vorrichtung (1), insbesondere eine gasisolierte Mittelspannungs- oder Hochspannungsschaltanlage, die Folgendes umfasst:

mindestens eine Kammer (11), die mit einem Isolationsfluid (10) gefüllt ist, das mindestens eine erste Fluidkomponente (A) mit einer ersten Konzentration ($c_A$) und mindestens eine zweite Fluidkomponente (B) mit einer zweiten Konzentration ($c_B$) umfasst,
einen optischen Sensor (20) zum Ausführen einer optischen Messung, die einen Hinweis auf die erste Konzentration ($c_A$) gibt, und/oder ein Gaschromatograph (30) zum Ausführen einer gaschromatographischen Messung, die einen Hinweis auf die erste Konzentration ($c_A$) gibt, und
eine Analyse und Steuereinheit (40) zum Ausführen der Schritte eines Verfahrens nach einem der vorhergehenden Ansprüche 1 bis 28, wobei insbesondere die elektrische Vorrichtung (1) ferner eine Schnittstelle (41) umfasst, um die elektrische Vorrichtung (1) mit einer äußeren Isolationsfluidfüllvorrichtung (42) zu verbinden und um die erste und zweite Konzentration ($c_A$, $c_B$) an die Isolationsfluidfüllvorrichtung (42) zu übertragen.

**30.** Elektrische Vorrichtung (1) nach Anspruch 29, die ferner einen Isolationsfluidanschluss (600), insbesondere einen selbstschließenden Isolationsfluidanschluss (600), umfasst,
wobei der Isolationsfluidanschluss (600) in Fluidkommunikation mit der Kammer (11) der elektrischen Vorrichtung (1) steht, und
wobei der optische Sensor (20) und/oder der Gaschromatograph (30) dafür ausgelegt ist oder sind, mit der Kammer (11) der elektrischen Vorrichtung (1) durch den Isolationsfluidanschluss (600) verbunden werden zu können, insbesondere reversibel verbunden werden zu können.

## Revendications

**1.** Procédé permettant de faire fonctionner un appareil électrique isolé par un fluide (1), notamment un appareillage

de commutation à moyenne tension ou haute tension isolé par un gaz (1), dans lequel un fluide d'isolation (10) se trouvant dans au moins un compartiment (11) de l'appareil électrique (1) comprend au moins un premier constituant fluide (A) et au moins un deuxième constituant fluide (B), le procédé comprenant les étapes de procédé consistant à :

- effectuer au moins une mesure optique sur le fluide d'isolation (10) et déterminer une première concentration ($c_A$) du premier constituant fluide (A) en utilisant la mesure optique et/ou
- effectuer au moins une mesure chromatographique en phase gazeuse et déterminer une ou la première concentration ($c_A$) du premier constituant fluide (A) en utilisant la mesure chromatographique en phase gazeuse,
- déterminer une deuxième concentration ($c_B$) du deuxième constituant fluide (B),
- dans lequel le premier constituant fluide (A) et le deuxième constituant fluide (B) ne sont pas des contaminants, et
- dans lequel les étapes de procédé consistant à effectuer la mesure optique et/ou la mesure chromatographique en phase gazeuse, à déterminer la première concentration ($c_A$), et à déterminer la deuxième concentration ($c_B$) sont effectuées pour une pluralité de compartiments (11) de l'appareil électrique (1), et la première concentration ($c_A$) et la deuxième concentration ($c_B$) sont déterminées pour chacun des compartiments (11),
- dans lequel le procédé comprend en outre une étape de procédé consistant à faire en sorte qu'une unité de commande détermine (40) un état de fonctionnement (0) de l'appareil électrique (1) en utilisant les premières concentrations ($c_A$) et en utilisant les deuxièmes concentrations ($c_B$) des constituants fluides d'isolation A et B dans chaque compartiment (11).

2. Procédé selon la revendication 1, comprenant en outre une étape de procédé consistant à

- déterminer une résistance au claquage diélectrique $E_{bd}$ du fluide d'isolation (10) en utilisant la première concentration ($c_A$) et en utilisant la deuxième concentration ($c_B$) conformément à l'équation

$$E_{bd} = S(c_A, c_B) \sum_{i=A,B} c_i E_{crit,i} ,$$

$E_{crit,A}$ et $E_{crit,B}$ étant des intensités de champ critiques spécifiques des constituants fluides des constituants fluides A et B ; $c_A$ et $c_B$ étant les première et deuxième concentrations des premier et deuxième constituants fluides A et B ; $S(c_A, c_B)$ étant un paramètre de synergie ; et i étant un indice pour les constituants fluides A et B, et dans lequel l'état de fonctionnement (0) est déterminé en utilisant la résistance au claquage diélectrique $E_{bd}$ du fluide d'isolation (10).

3. Procédé selon l'une quelconque des revendications précédentes, comprenant en outre une étape de procédé consistant à

- remplir le compartiment (11) de l'appareil électrique (1) avec une certaine quantité du fluide d'isolation (10), dans lequel l'étape de procédé consistant à effectuer la mesure optique et/ou la mesure chromatographique en phase gazeuse est ou sont effectuée(s) pendant et/ou après l'étape de procédé consistant à remplir le compartiment (11) avec le fluide d'isolation (10).

4. Procédé selon l'une quelconque des revendications précédentes, dans lequel la deuxième concentration ($c_B$) est déterminée en utilisant la mesure optique, en utilisant la mesure chromatographique en phase gazeuse, et/ou en utilisant une mesure de densité et/ou en utilisant une mesure de densité et de température du fluide d'isolation (10).

5. Procédé selon l'une quelconque des revendications précédentes, dans lequel l'état de fonctionnement (0) de l'appareil électrique (1) est sélectionné dans un groupe d'états de fonctionnement possibles comprenant :

- un fonctionnement normal,
- une fuite uniforme de tous les constituants fluides (A, B) du fluide d'isolation (10),
- une fuite préférentielle d'un constituant fluide (A, B) du fluide d'isolation (10),
- une condensation ou une condensation préférentielle d'un constituant fluide (A, B) du fluide d'isolation (10),
- une adsorption ou une adsorption préférentielle d'un constituant fluide (A, B) du fluide d'isolation (10),
- une réaction ou une réaction préférentielle d'un constituant fluide (A ou B) du fluide d'isolation (10),
- une décomposition ou une décomposition préférentielle d'un constituant fluide (A, B) du fluide d'isolation (10), et

- l'apparition d'au moins un constituant fluide supplémentaire (D) dans le fluide d'isolation (10), notamment dans lequel le constituant supplémentaire (D) est un contaminant.

6. Procédé selon l'une quelconque des revendications précédentes, dans lequel le premier constituant fluide (A) est sélectionné dans le groupe comprenant :

- l'hexafluorure de soufre,
- des éthers partiellement ou entièrement fluorés, notamment des hydrofluoro éthers, des hydrofluoro monoéthers, des hydrofluoro monoéthers contenant au moins 3 atomes de carbone, des perfluoro monoéthers, ou des perfluoro monoéthers contenant au moins 4 atomes de carbone, des fluoro-oxyranes, des perfluoro-oxyranes, des hydrofluoro-oxyranes, des perfluoro-oxyranes comprenant de trois à quinze atomes de carbone, des hydrofluoro-oxyranes comprenant de trois à quinze atomes de carbone, et des mélanges de ceux-ci ;
- des cétones partiellement ou entièrement fluorées, notamment des hydrofluoro monocétones, des perfluoro monocétones, des perfluoro monocétones comprenant au moins 5 atomes de carbone, ou des perfluoro monocétones comprenant exactement 5 ou 6 ou 7 ou 8 atomes de carbone, et des mélanges de ceux-ci ;
- des fluorooléfines ; notamment :des perfluorooléfines, des hydrofluorooléfines (HFO), des hydrofluorooléfines (HFO) comprenant au moins trois atomes de carbone, des hydrofluorooléfines (HFO) comprenant exactement trois atomes de carbone, le trans-1,3,3,3-tétrafluoro-1-propène (HFO-1234ze), le 2,3,3,3-tétrafluoro-1-propène (HFO-1234yf), et des mélanges de ceux-ci ; et
- des mélanges de ceux-ci, et

le deuxième constituant fluide (B) est sélectionné dans le groupe comprenant :

- l'azote,
- l'oxygène,
- le dioxyde de carbone,
- l'oxyde nitrique,
- le dioxyde d'azote,
- l'oxyde nitreux,
- l'argon,
- des méthanes, notamment des méthanes partiellement ou entièrement halogénés, notamment le tétrafluorométhane ou le trifluoroiodométhane,
- de l'air, notamment de l'air technique ou de l'air synthétique, et
- des mélanges de ceux-ci ;

notamment dans lequel le premier constituant fluide (A) est sélectionné dans le groupe comprenant :

- des fluoropentanones cycliques et/ou aliphatiques, de préférence des perfluoropentanones cycliques et/ou aliphatiques, de façon plus préférable la 1,1,1,3,4,4,4-heptafluoro-3-(trifluorométhyl) butan-2-one,
- des fluorohexanones cycliques et/ou aliphatiques, de préférence des perfluorohexanones cycliques et/ou aliphatiques, de façon plus préférable la 1,1,1,2,4,4,5,5,5-nonafluoro-4-(trifluorométhyl) pentan-3-one,
- des fluoroheptanones cycliques et/ou aliphatiques, de préférence des perfluoroheptanones cycliques et/ou aliphatiques,
- l'hexafluorure de soufre, et
- des hydrofluoroéthers.

7. Procédé selon la revendication 6, dans lequel le deuxième constituant fluide (B) est constitué d'azote et d'oxygène avec des pressions partielles relatives comprises entre $p(N_2)/(p(O_2)+p(N_2))=0,7$, $p(O_2)/(p(O_2)+p(N_2))=0,3$ et $p(N_2)/(p(O_2)+p(N_2))=0,95$, $p(O_2)/(p(O_2)+p(N_2))=0,05$ ou de dioxyde de carbone et d'oxygène avec des pressions partielles relatives comprises entre $p(CO_2)(p(O_2)+p(CO_2))=0,6$, $p(O_2)/(p(O_2)+p(CO_2))=0,4$ et $p(CO_2)/(p(O_2)+p(CO_2))=0,99$, $p(O_2)/(p(O_2)+p(CO_2))=0,01$, ou de dioxyde de carbone et d'azote avec des pressions partielles relatives comprises entre $p(CO_2)/(p(N_2)+p(CO_2))=0,1$, $p(N_2)/(p(N_2)+p(CO_2))=0,9$ et $p(CO_2)/(p(N_2)+p(CO_2))=0,9$, $p(N_2)/(p(N_2)+p(CO_2))=0,1$, et le premier constituant fluide (A) comprend au moins l'un des éléments du groupe comprenant :

la 1,1,1,3,4,4,4-heptafluoro-3-(trifluorométhyl) butan-2-one sous une pression partielle comprise entre 0,1 bar et 0,7 bar à une température de 20°C,
la 1,1,1,2,4,4,5,5,5-nonafluoro-4-(trifluorométhyl)pentan-3-one sous une pression partielle comprise entre 0,01 bar et 0,3 bar à une température de 20°C,
l'hexafluorure de soufre sous une pression partielle comprise entre 0,1 bar et 2 bars à une température de 20°C, et des hydrofluoroéthers sous une pression partielle comprise entre 0,2 bar et 1 bar à une température de 20°C ;

ou dans lequel le deuxième constituant fluide (B) comprend
de l'azote et de l'oxygène avec des pressions partielles relatives comprises entre $p(N_2)/(p(O_2)+p(N_2))=0{,}75$, $p(O_2)/(p(O_2)+p(N_2))=0{,}25$ et $p(N_2)/(p(O_2)+p(N_2))=0{,}90$, $p(O_2)/(p(O_2)+p(N_2))=0{,}10$, et
le premier constituant fluide (A) comprend de la 1,1,1,3,4,4,4-heptafluoro-3-(trifluorométhyl)butan-2-one sous une pression partielle comprise entre 0,25 bar et 0,5 bar et/ou le constituant fluide 1,1,1,2,4,4,5,5,5-nona-fluoro-4-(trifluorométhyl)pentan-3-one sous une pression partielle comprise entre 0,02 bar et 0,3 bar à une température de 20°C.

**8.** Procédé selon l'une quelconque des revendications précédentes,
dans lequel la mesure optique est effectuée sur le fluide d'isolation (10) dans le compartiment (11) ;
ou dans lequel le procédé comprend une étape de procédé consistant à extraire, notamment au moyen de l'appareil électrique (1), une certaine quantité du fluide d'isolation (10) du compartiment (11) avant d'effectuer la mesure optique et/ou la mesure chromatographique en phase gazeuse, dans lequel la mesure optique et/ou la mesure chromatographique en phase gazeuse est ou sont effectuée(s) sur la quantité extraite du fluide d'isolation (10) et notamment dans lequel le procédé comprend en outre une étape de procédé consistant à

- réinjecter, notamment au moyen de l'appareil électrique (1), au moins une partie de la quantité extraite du fluide d'isolation (10) dans le compartiment (11) après avoir effectué la mesure optique et/ou chromatographique en phase gazeuse.

**9.** Procédé selon l'une quelconque des revendications précédentes, dans lequel l'étape de procédé consistant à effectuer la mesure optique est effectuée par au moins un capteur optique (20), et/ou dans lequel l'étape de procédé consistant à effectuer la mesure chromatographique en phase gazeuse est effectuée par au moins un chromatographe en phase gazeuse (30), et notamment dans lequel le nombre total de capteurs optiques (20) et de chromatographes en phase gazeuse (30) est inférieur ou égal au nombre total des compartiments (11).

**10.** Procédé selon l'une quelconque des revendications précédentes, dans lequel l'appareil électrique (1) comprend un ou le capteur optique (20) pour effectuer la mesure optique, dans lequel le capteur optique (20) comprend une cellule de mesure (21) permettant de recevoir au moins une partie du fluide d'isolation (10), et dans lequel le capteur optique (20) comprend en outre un ou plusieurs composants optiques massifs et/ou un ou plusieurs composants de fibres optiques, notamment dans lequel la cellule de mesure (21) du capteur optique (20) est au moins en partie formée par une partie du compartiment (11) de l'appareil électrique (1).

**11.** Procédé selon l'une quelconque des revendications précédentes, dans lequel la mesure optique est effectuée par un capteur optique (20) et au moins une partie du capteur optique (20), notamment une cellule de mesure (21) du capteur optique (20), est séparée du compartiment (11) de l'appareil électrique (1) par un capot de protection perméable au fluide d'isolation (500), notamment un capot de protection perméable au fluide d'isolation et perméable aux particules (500), de préférence sous la forme d'une plaque formant capot de protection (500) ou d'un tube formant capot de protection, notamment dans lequel le capot de protection (500) comprend au moins l'un des éléments du groupe comprenant :

* un matériau fritté,
* un matériau poreux, notamment un métal poreux,
* une gaze,
* un treillis,
* une membrane, comprenant notamment un matériau polymère, et
* des combinaisons de ceux-ci.

**12.** Procédé selon l'une quelconque des revendications précédentes dans lequel une ou la mesure optique comprend : un faisceau de mesure optique à une première longueur d'onde, et un faisceau de référence optique à une deuxième longueur d'onde qui n'est pas absorbée par le premier constituant fluide (A), notamment une fluorocétone.

**13.** Procédé selon l'une quelconque des revendications précédentes, comprenant en outre une étape de procédé consistant à

- faire circuler le fluide d'isolation (10) pour homogénéiser les densités des premier et deuxième constituants fluides (A, B), notamment avant d'effectuer la mesure optique et/ou la mesure chromatographique en phase gazeuse ; ou le procédé comprenant en outre une étape de procédé consistant à

- mélanger le premier constituant fluide (A) au deuxième constituant fluide (B) pour homogénéiser un mélange des premier et deuxième constituants fluides (A, B), notamment avant d'effectuer la mesure optique et/ou la mesure chromatographique en phase gazeuse, notamment dans lequel l'étape de procédé consistant à mélanger les au moins deux constituants fluides (A, B) comprend une perturbation d'un écoulement laminaire des au moins deux constituants fluides (A, B) pour introduire une turbulence ou dans lequel la perturbation de l'écoulement laminaire est effectuée au moyen d'un mélangeur à gaz (339) comprenant au moins l'un des éléments du groupe comprenant
- un mélangeur à tube (370, 380), comprenant notamment une chicane (371), en particulier une pluralité de chicanes (371), et/ou comprenant un tube plongeur perforé (381),
- un mélangeur rotatif (305), comprenant notamment un ventilateur (305a), en particulier un ventilateur pliant (305a),
- un mélangeur à convection (307), comprenant notamment un élément chauffant (52),
- un mélangeur à rayonnement (390), comprenant notamment une source de lumière UV (391) ou une source de lumière IR (391),
- un mélangeur volumétrique (400), comprenant notamment un volume expansible (401), en particulier un volume expansible pneumatiquement (401),
- un mélangeur à dérivation (410)), et
- des combinaisons de ceux-ci.

**14.** Procédé selon l'une quelconque des revendications précédentes, comprenant en outre une étape de procédé consistant à

- détecter et/ou rechercher au moins un contaminant et/ou une étape de procédé consistant à
- distinguer au moins deux des contaminants,

en utilisant ainsi au moins l'un des éléments du groupe comprenant :

* la mesure optique,
* une mesure optique supplémentaire,
* la mesure chromatographique en phase gazeuse,
* une mesure chromatographique en phase gazeuse supplémentaire, et
* la ou une mesure chromatographique en phase gazeuse supplémentaire combinée à une mesure spectrométrique de masse.

**15.** Procédé selon l'une quelconque des revendications précédentes, dans lequel le fluide d'isolation (10) comprend au moins un troisième constituant fluide (C) qui n'est pas un contaminant, et dans lequel le procédé comprend en outre une étape de procédé consistant à déterminer une troisième concentration ($c_C$) du troisième constituant fluide (C) en utilisant au moins l'un des éléments du groupe comprenant :

* la mesure optique,
* une mesure optique supplémentaire,
* la mesure chromatographique en phase gazeuse, et
* une mesure chromatographique en phase gazeuse supplémentaire.

**16.** Procédé selon l'une quelconque des revendications précédentes, **caractérisé en ce que**, pour la mesure optique, la sensibilité croisée à d'autres constituants fluides d'isolation et aux contaminants est exclue et **en ce que**, pour la mesure chromatographique en phase gazeuse, les constituants fluides d'isolation apparaissent sous la forme de pics distincts uniques dans le chromatogramme.

**17.** Procédé selon la revendication 16, dans lequel,

- pour la mesure chromatographique en phase gazeuse, les constituants fluides d'isolation "C5", "C6", et "$N_2/O_2$" apparaissent sous la forme de pics distincts uniques dans le chromatogramme et un contaminant est détecté sous la forme d'un pic supplémentaire dans le chromatogramme, et/ou
- pour la mesure optique, une concentration d'un constituant fluide d'isolation "C5", en utilisant un pic d'absorption UV C5, peut être déterminée indépendamment de l'addition de l'air synthétique et les signatures spectrales des contaminants "$CF_4$" et "hexafluoropropène" ne présentent pas de chevauchement spectral avec l'absorption UV de "C5", et/ou
- pour la mesure optique, la sensibilité croisée à des constituants fluides d'isolation comprenant $O_2$, $CO_2$ et de

la vapeur d'eau "$H_2O$" et aux contaminants "HF", "$CF_4$", "hexafluoropropène", "hexafluoropropane", et "HF" est exclue.

**18.** Procédé selon l'une quelconque des revendications précédentes, dans lequel la mesure optique comprend une mesure d'absorption,
notamment à au moins un nombre d'onde compris entre 500 $cm^{-1}$ et 1500 $cm^{-1}$ et/ou à au moins une longueur d'onde comprise entre 200 nm et 400 nm, de préférence à au moins un nombre d'onde compris entre 600 $cm^{-1}$ et 800 $cm^{-1}$ et/ou compris entre 940 $cm^{-1}$ et 1050 $cm^{-1}$ et/ou compris entre 1100 $cm^{-1}$ et 1400 $cm^{-1}$ et/ou compris entre 1750 $cm^{-1}$ et 1850 $cm^{-1}$ et/ou à au moins une longueur d'onde comprise entre 225 nm et 375 nm ou
notamment à au moins une longueur d'onde comprise entre 1350 nm et 1970 nm ou aux pics d'absorption de 1873 nm / 1882 nm et à 1894 nm / 1903 nm.

**19.** Procédé selon la revendication 18, dans lequel la mesure d'absorption est effectuée au moyen d'un spectroscope à temps de déclin de cavité, d'un spectroscope Lambert-Beer, d'un spectroscope à passes multiples, d'un spectroscope ultraviolet à longueur d'onde unique, d'un spectroscope infrarouge à longueur d'onde unique, d'un spectroscope infrarouge à transformée de Fourier, d'un spectroscope Raman, ou d'un spectroscope photo-acoustique.

**20.** Procédé selon l'une quelconque des revendications 18 à 19, dans lequel une largeur à mi-hauteur du signal d'absorption est comprise entre 40 $cm^{-1}$ et 120 $cm^{-1}$ et/ou comprise entre 50 nm et 100 nm sous une pression du fluide d'isolation comprise entre 1 bar et 10 bars et à une température du fluide d'isolation de 20°C.

**21.** Procédé selon l'une quelconque des revendications précédentes, dans lequel la mesure optique comprend une mesure d'émission de fluorescence, notamment à au moins une longueur d'onde d'émission de fluorescence comprise entre 350 nm et 600 nm.

**22.** Procédé selon l'une quelconque des revendications précédentes, dans lequel le procédé est mis en oeuvre pendant un fonctionnement régulier de l'appareil électrique (1), notamment dans lequel une tension de fonctionnement, notamment > 1 kV, de préférence > 50 kV, est appliquée aux bornes d'une partie électriquement active (60) de l'appareil électrique (10) pendant la réalisation de la mesure optique et/ou de la mesure chromatographique en phase gazeuse.

**23.** Procédé selon l'une quelconque des revendications précédentes, dans lequel une pression du fluide d'isolation (10) dans le compartiment (11) pendant la réalisation de la mesure optique et/ou de la mesure chromatographique en phase gazeuse est une pression de fonctionnement pour l'appareil électrique (10), et notamment dans lequel la pression du fluide d'isolation est > 1 bar, et plus particulièrement > 3 bars, et encore plus particulièrement > 5 bars, à une température du fluide d'isolation de 20°C.

**24.** Procédé selon l'une quelconque des revendications précédentes, dans lequel la mesure chromatographique en phase gazeuse est effectuée au moyen d'un chromatographe en phase gazeuse multicolonne (30).

**25.** Procédé selon l'une quelconque des revendications précédentes, comprenant en outre au moins une étape de procédé du groupe consistant à :

- faire croître la première concentration ($c_A$) du premier constituant fluide (A) au moyen d'une injection d'une certaine quantité du premier constituant fluide (A) à partir d'un réservoir de constituants (50) dans le compartiment (11),
- faire croître la deuxième concentration ($c_B$) du deuxième constituant fluide (B) au moyen d'une injection d'une certaine quantité du deuxième constituant fluide (B) à partir d'un réservoir de constituants (50) dans le compartiment (11),
- réduire une concentration d'au moins un contaminant dans le fluide d'isolation (10), notamment au moyen d'un filtre (51),
- évaporer une quantité condensée du premier et/ou du deuxième constituant fluide (A, B), notamment au moyen d'un élément chauffant (52), et
- condenser une certaine quantité du premier et/ou du deuxième constituant fluide (A, B) et/ou d'un contaminant, notamment au moyen d'un refroidisseur (53).

**26.** Procédé selon l'une quelconque des revendications précédentes dans lequel le premier constituant fluide (A) et le deuxième constituant fluide (B) sont des ingrédients voulus du fluide d'isolation (10).

**27.** Procédé selon l'une quelconque des revendications précédentes, comprenant une étape de procédé supplémentaire consistant à

- mesurer une humidité dans le compartiment (11) de l'appareil électrique (1), notamment en utilisant au moins l'un des éléments du groupe comprenant

  * un capteur d'humidité capacitif (700),
  * un capteur d'humidité résistif (700),
  * un résonateur oscillant (700) revêtu d'une couche hygroscopique,
  * un capteur de conductivité thermique (700),
  * un ou le capteur optique (700, 20),
  * et des combinaisons de ceux-ci.

**28.** Procédé selon la revendication 5 et selon la revendication 27, dans lequel le groupe d'états de fonctionnement possibles comprend en outre

- un état inexploitable en raison d'un niveau d'humidité trop élevé dans le fluide d'isolation (10), et
- un état de maintenance des gaz nécessaire pour réduire un niveau d'humidité dans le fluide d'isolation (10).

**29.** Appareil électrique (1), notamment appareillage de commutation à moyenne tension ou haute tension isolé par un gaz, comprenant
au moins un compartiment (11) rempli d'un fluide d'isolation (10) comprenant au moins un premier constituant fluide (A) ayant une première concentration ($c_A$) et au moins un deuxième constituant fluide (B) ayant une deuxième concentration ($c_B$),
un capteur optique (20) permettant d'effectuer une mesure optique représentative de la première concentration ($c_A$) et/ou un chromatographe en phase gazeuse (30) permettant d'effectuer une mesure chromatographique en phase gazeuse représentative de la première concentration ($c_A$), et
une unité d'analyse et de commande (40) permettant de mettre en oeuvre un procédé selon l'une quelconque des revendications 1-28 précédentes, notamment dans lequel l'appareil électrique (1) comprend en outre une interface (41) permettant de connecter l'appareil électrique (1) à un dispositif externe de remplissage de fluide d'isolation (42) et de transmettre les première et deuxième concentrations ($c_A$, $c_B$) au dispositif de remplissage de fluide d'isolation (42).

**30.** Appareil électrique (1) selon la revendication 29, comprenant en outre un orifice pour fluide d'isolation (600), notamment un orifice pour fluide d'isolation auto-obturant (600),
dans lequel l'orifice pour fluide d'isolation (600) est en communication fluide avec le compartiment (11) de l'appareil électrique (1), et
dans lequel le capteur optique (20) et/ou le chromatographe en phase gazeuse (30) est ou sont apte(s) à pouvoir être connecté(s), notamment à pouvoir être connecté(s) de manière réversible, au compartiment (11) de l'appareil électrique (1) par l'orifice pour fluide d'isolation (600).

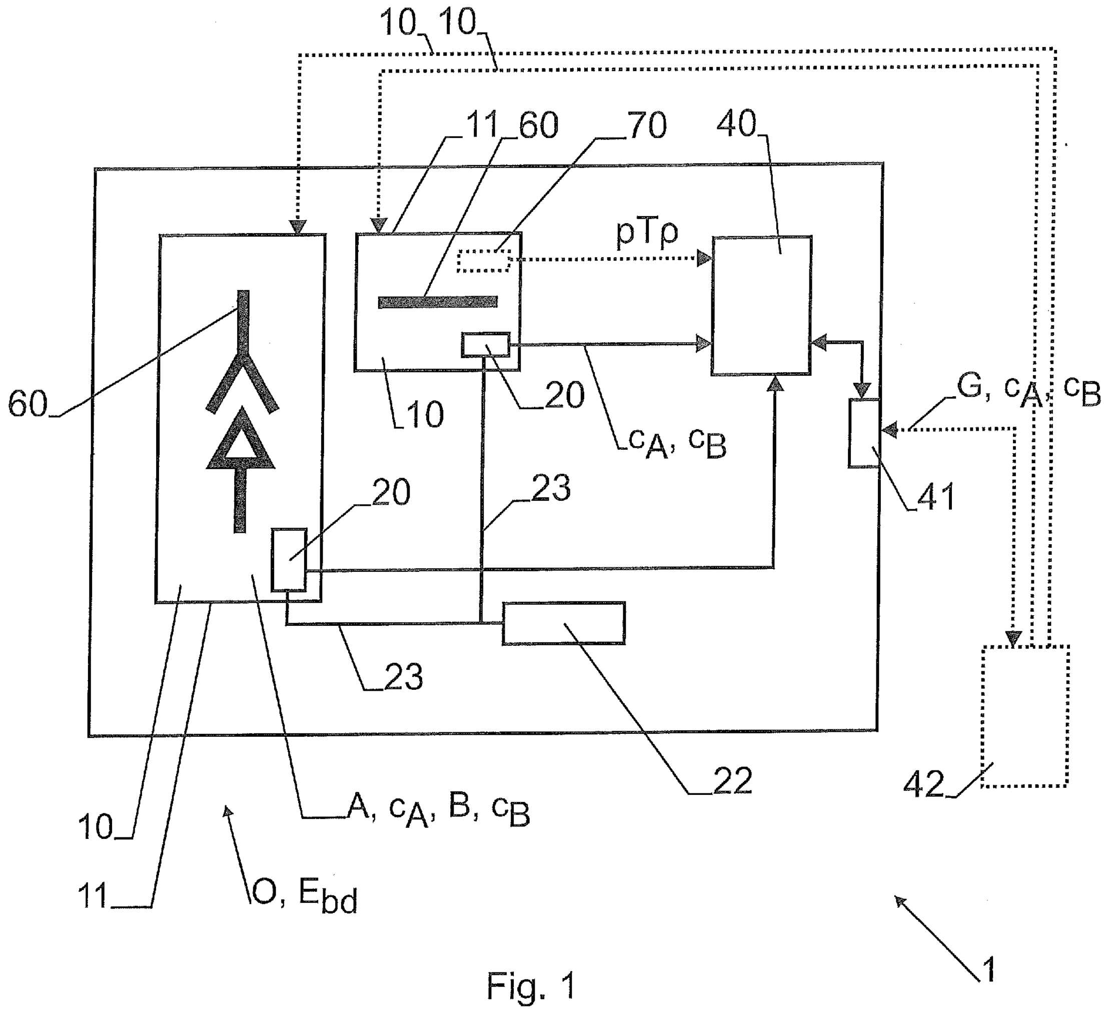
10
10
11
60
70
40
pTρ
60
10
20
G, $c_A$, $c_B$
$c_A$, $c_B$
20
23
41
23
22
42
10
A, $c_A$, B, $c_B$
11
O, $E_{bd}$
1

Fig. 1

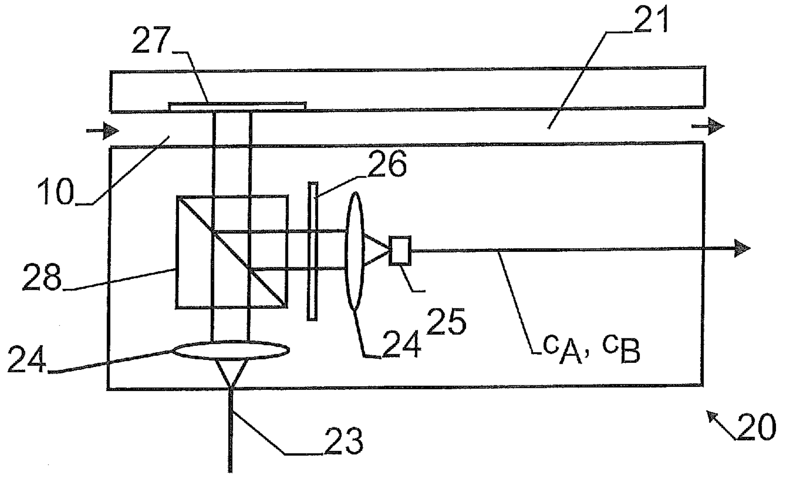
27
21
10
26
28
25
24
24
$c_A$, $c_B$
23
20

Fig. 2

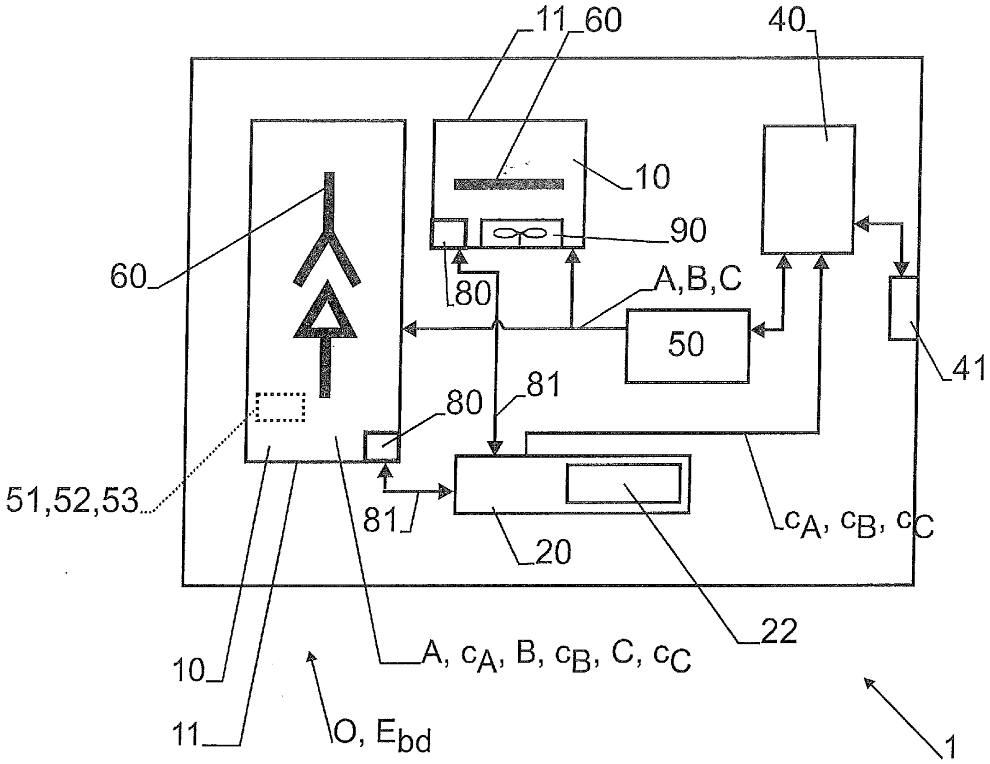
11
60
40
10
90
60
A,B,C
80
50
41
81
80
51,52,53
81
20
$c_A$, $c_B$, $c_C$
22
10
A, $c_A$, B, $c_B$, C, $c_C$
11
O, $E_{bd}$
1

Fig. 3

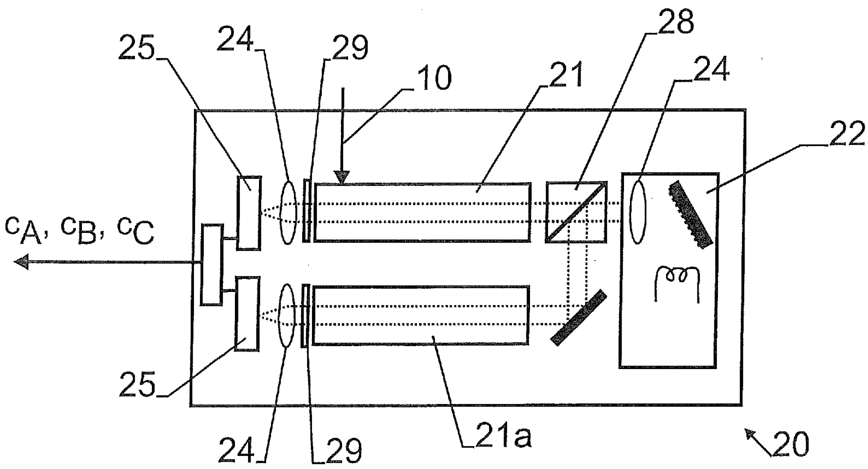
25
24
29
10
21
28
24
22
$c_A$, $c_B$, $c_C$
25
24
29
21a
20

Fig. 4

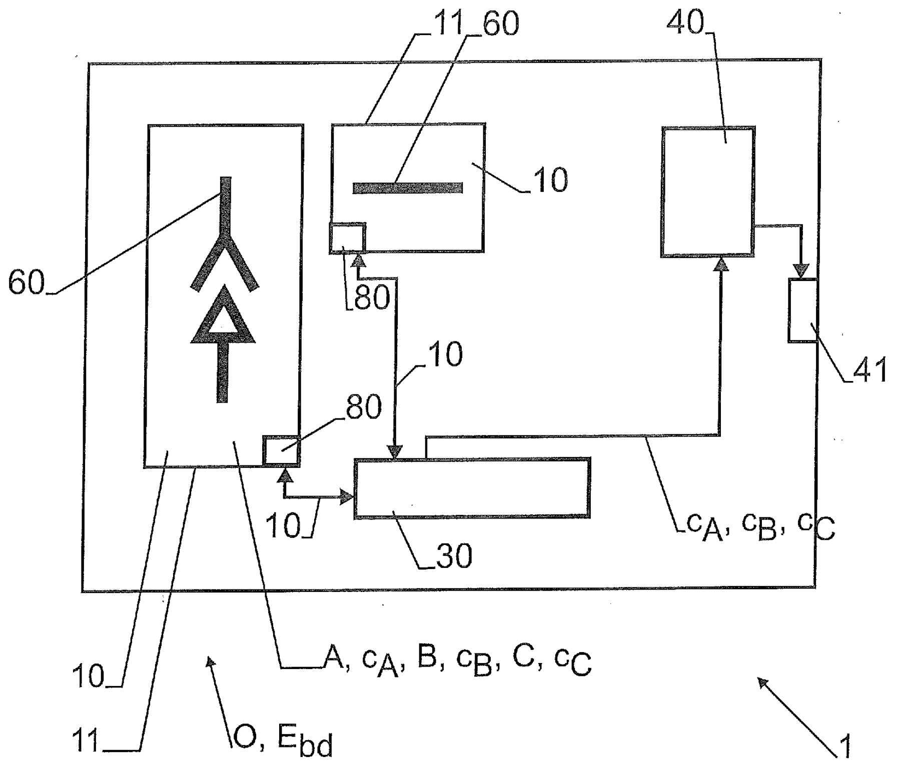
11
60
40
10
60
80
10
41
80
10
30
$c_A$, $c_B$, $c_C$
10
A, $c_A$, B, $c_B$, C, $c_C$
11
O, $E_{bd}$
1

Fig. 5

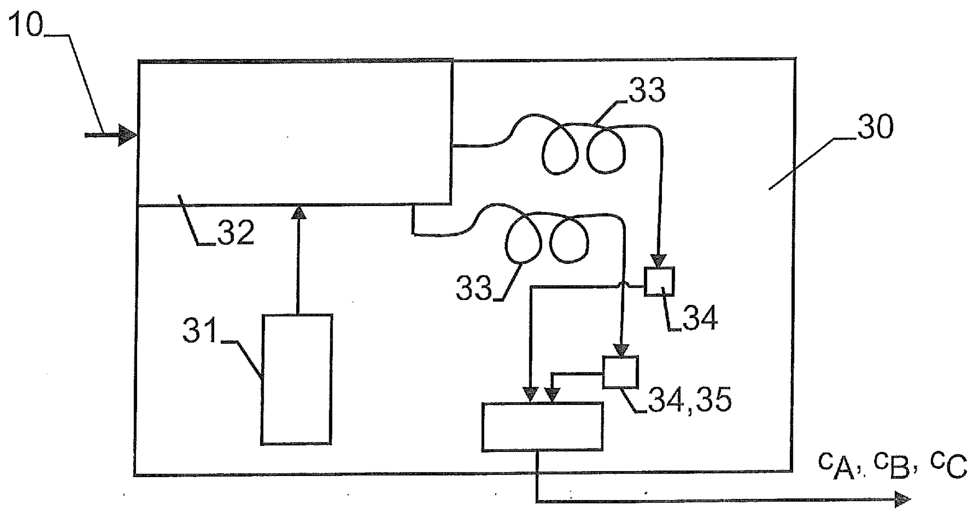
10
33
30
32
33
34
31
34,35
$c_A$, $c_B$, $c_C$

Fig. 6

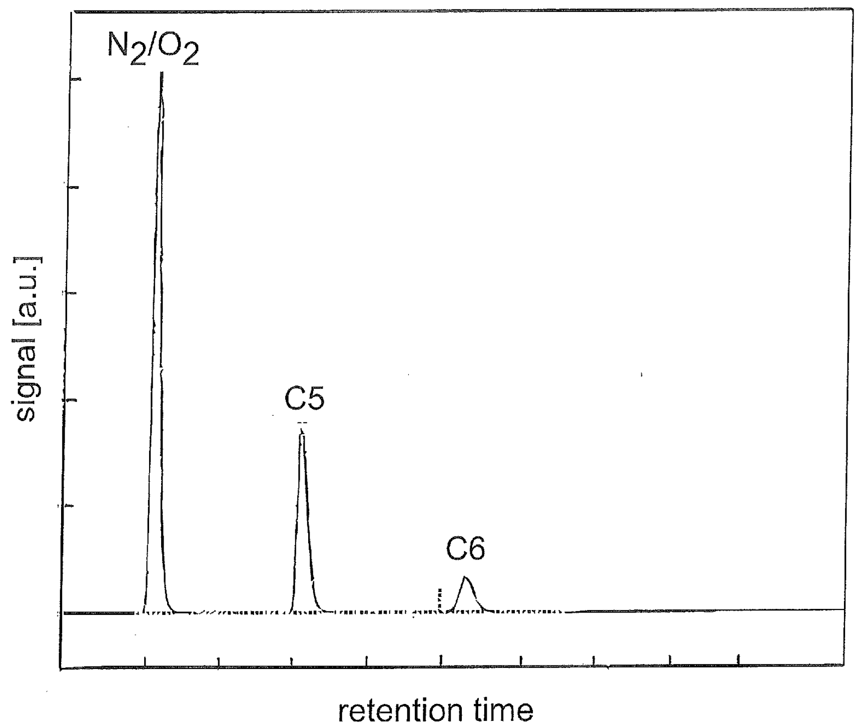
N2/O2
C5
C6
signal [a.u.]
retention time

**Fig. 7**

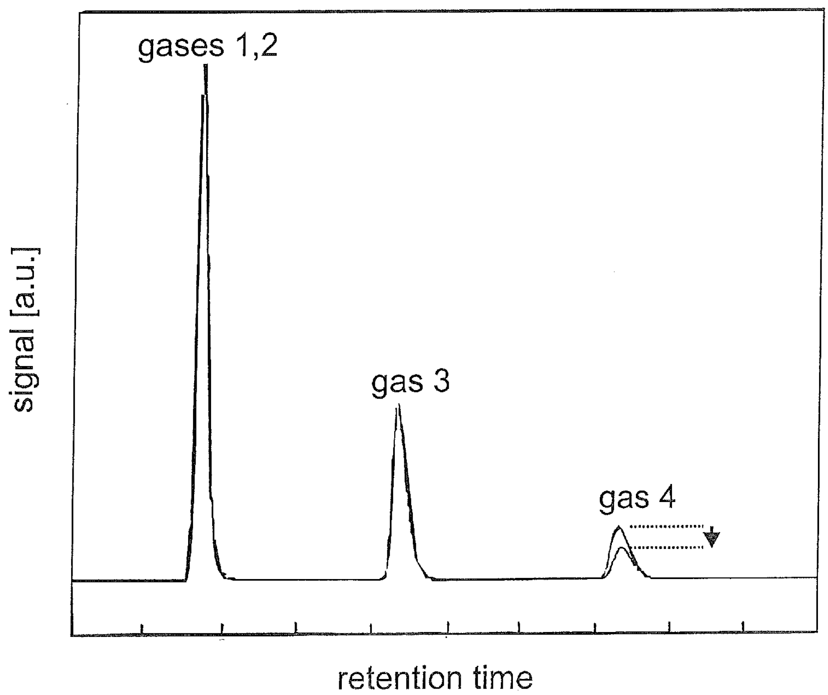
gases 1,2
gas 3
gas 4
signal [a.u.]
retention time

**Fig. 8**

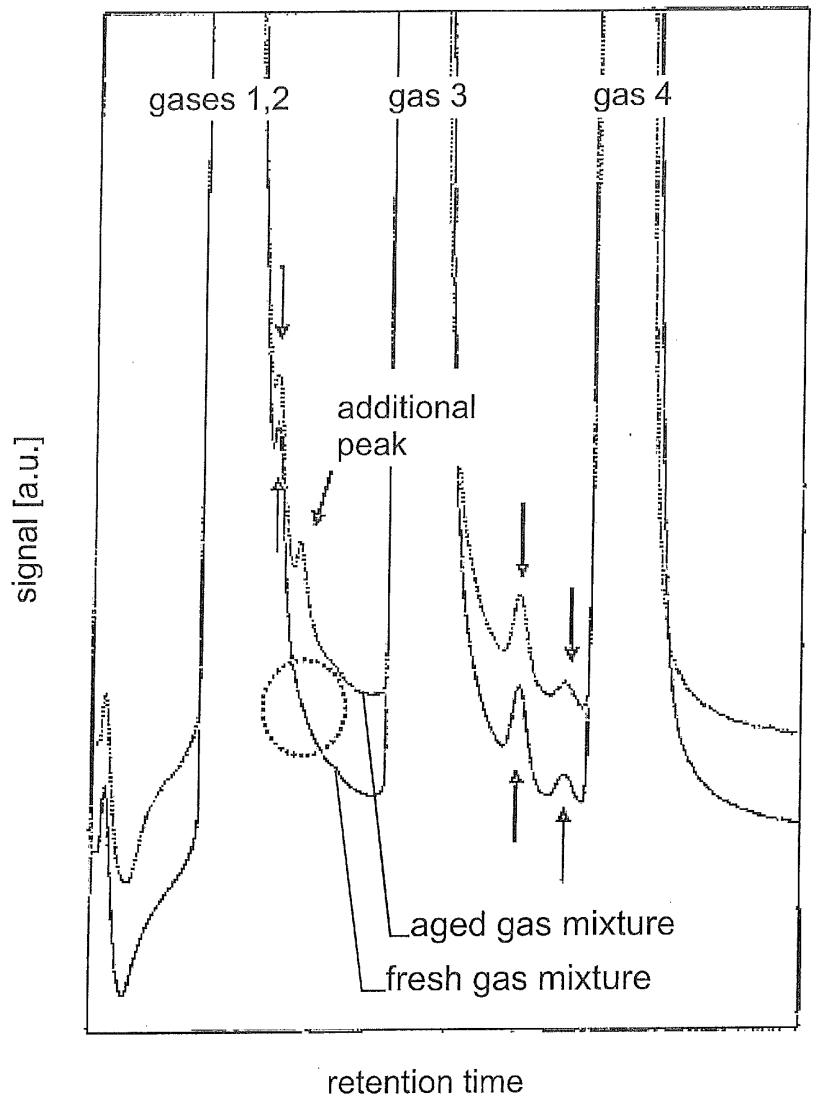
gases 1,2
gas 3
gas 4
additional peak
aged gas mixture
fresh gas mixture
signal [a.u.]
retention time

**Fig. 9**

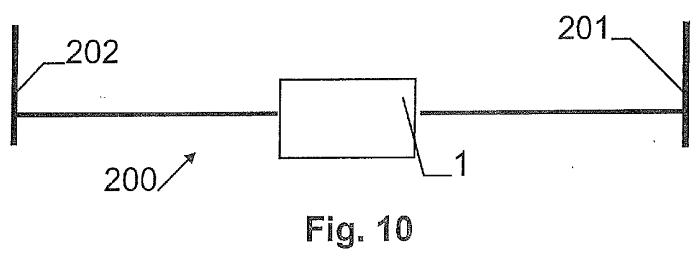
202
201
200
1

**Fig. 10**

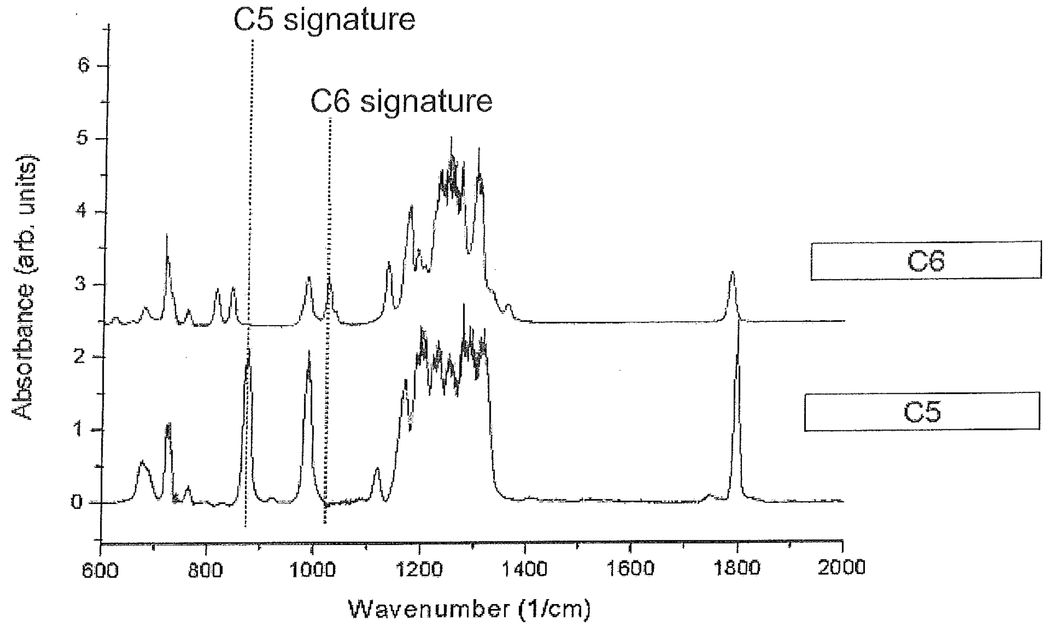
C5 signature
C6 signature
C6
C5
Absorbance (arb. units)
Wavenumber (1/cm)
0
1
2
3
4
5
6
600
800
1000
1200
1400
1600
1800
2000

**Fig. 11**

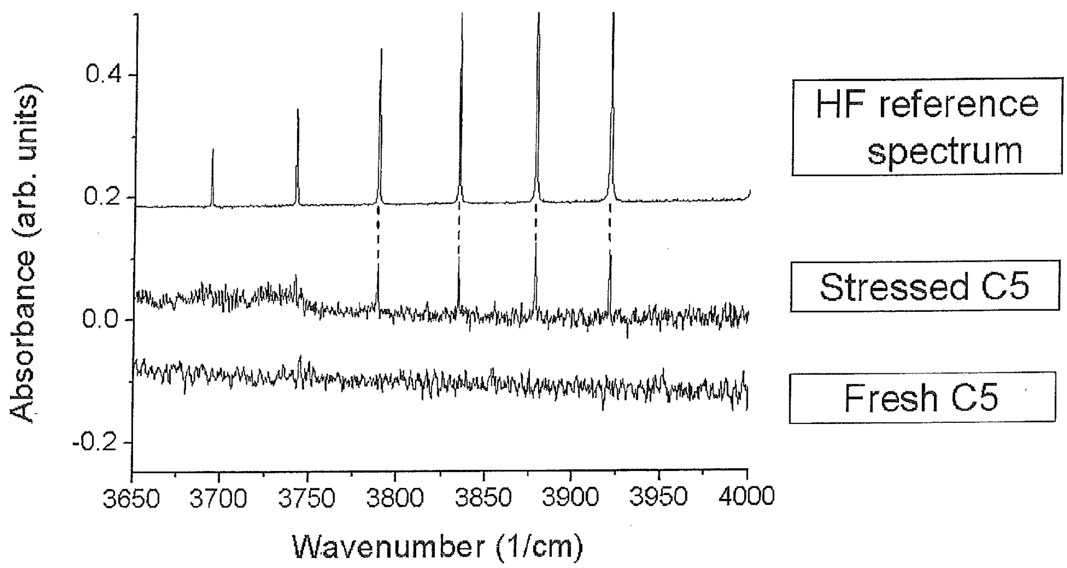
HF reference spectrum
Stressed C5
Fresh C5
Absorbance (arb. units)
Wavenumber (1/cm)
0.4
0.2
0.0
-0.2
3650
3700
3750
3800
3850
3900
3950
4000

**Fig. 12**

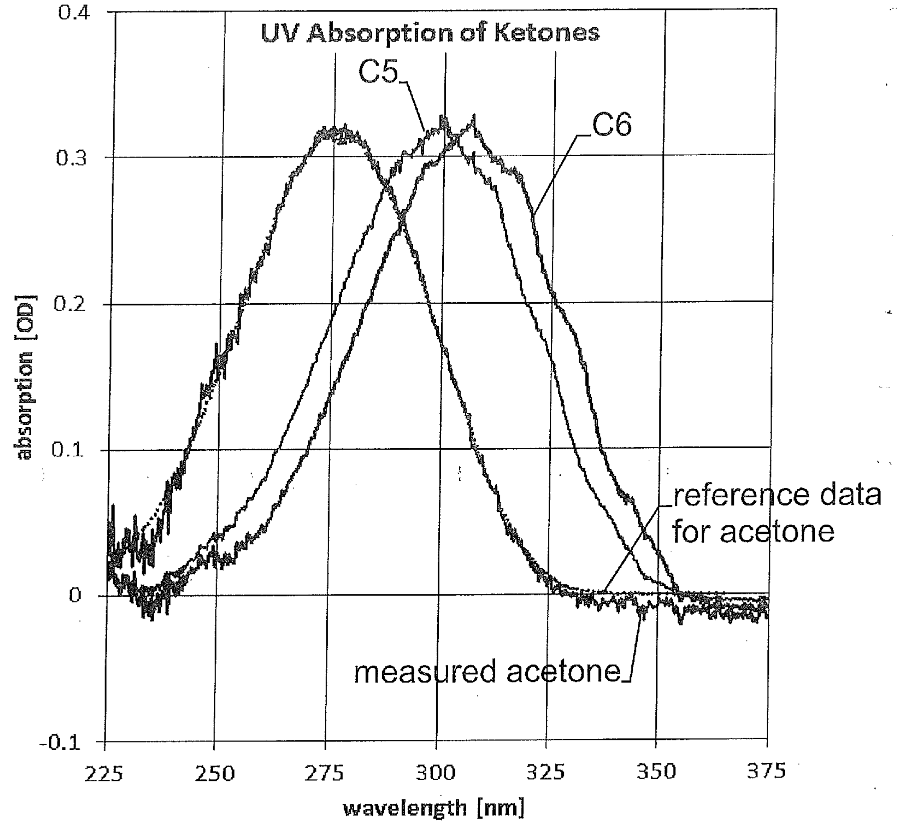
UV Absorption of Ketones
C5
C6
reference data for acetone
measured acetone
0.4
0.3
0.2
0.1
0
-0.1
absorption [OD]
225
250
275
300
325
350
375
wavelength [nm]

Fig. 13

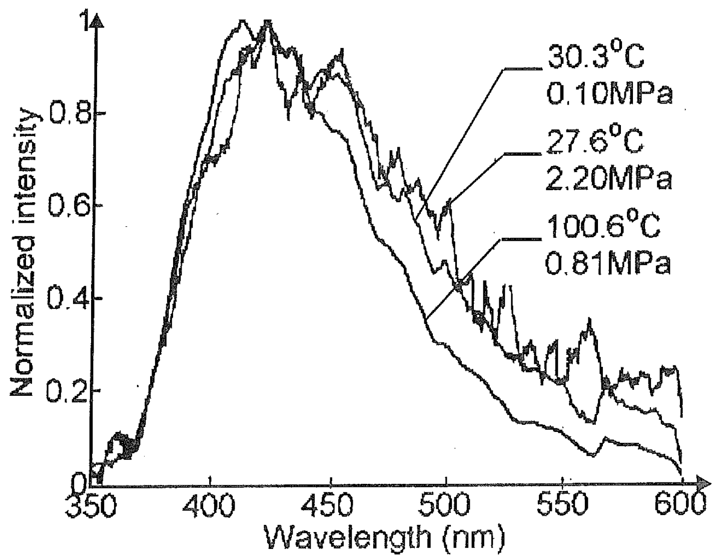
30.3°C
0.10MPa
27.6°C
2.20MPa
100.6°C
0.81MPa
Normalized intensity
1
0.8
0.6
0.4
0.2
0
350
400
450
500
550
600
Wavelength (nm)

Fig. 14

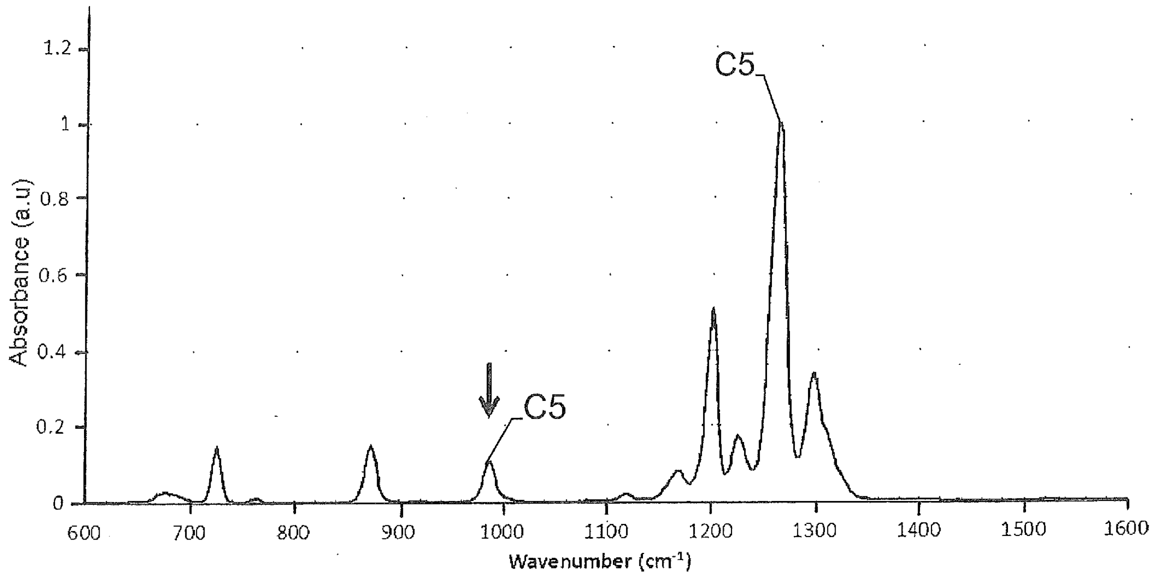
C5
C5
Absorbance (a.u)
1.2
1
0.8
0.6
0.4
0.2
0
600
700
800
900
1000
1100
1200
1300
1400
1500
1600
Wavenumber (cm⁻¹)

Fig. 15

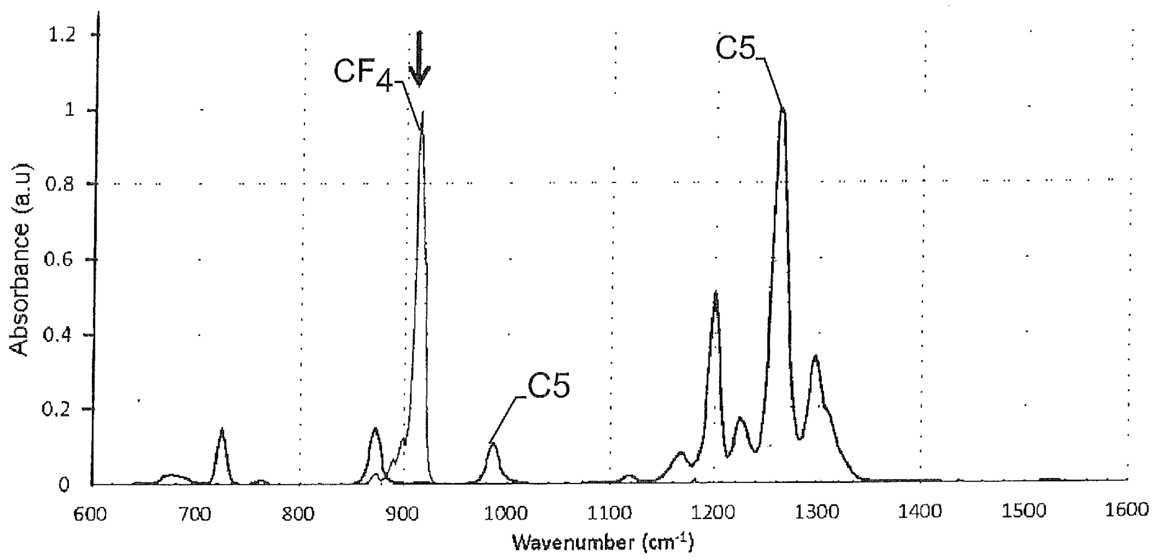
CF4
C5
C5
Absorbance (a.u)
1.2
1
0.8
0.6
0.4
0.2
0
600
700
800
900
1000
1100
1200
1300
1400
1500
1600
Wavenumber (cm⁻¹)

Fig. 16

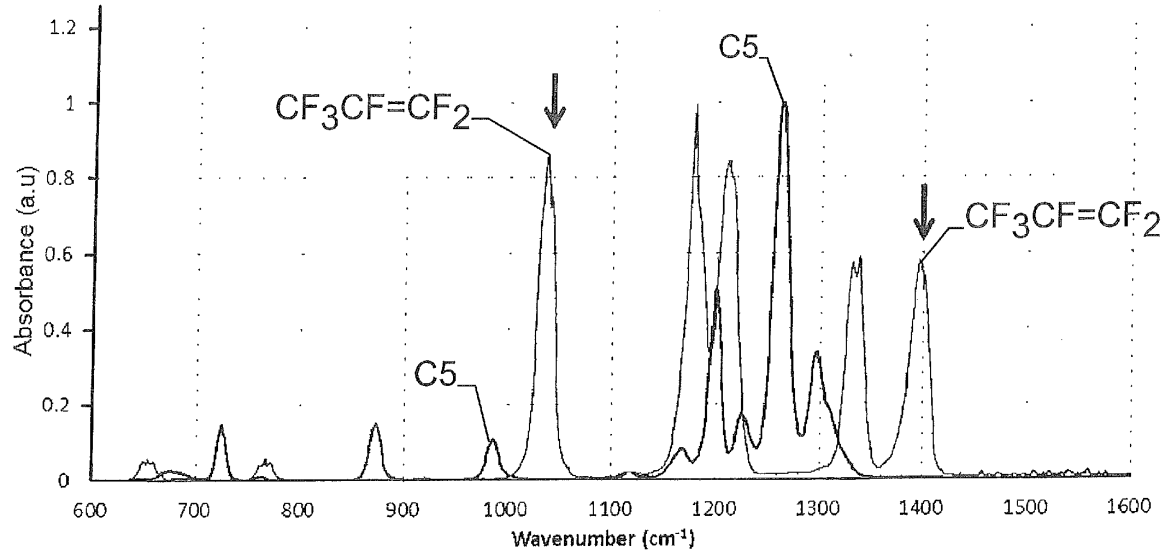
CF3CF=CF2
C5
C5
CF3CF=CF2
Absorbance (a.u)
Wavenumber (cm-1)
0
0.2
0.4
0.6
0.8
1
1.2
600
700
800
900
1000
1100
1200
1300
1400
1500
1600

Fig. 17

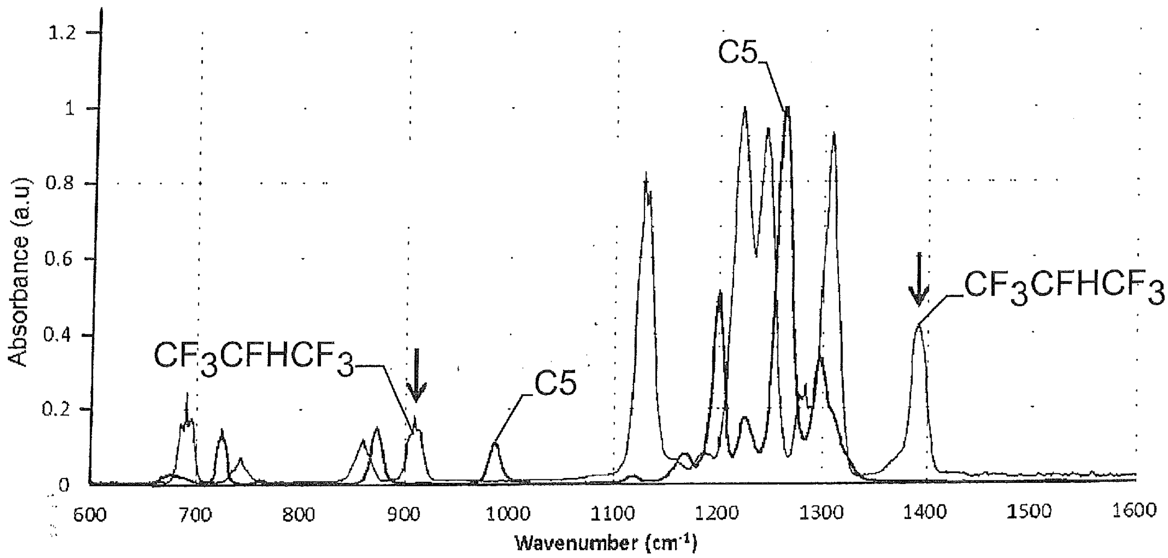
C5
CF3CFHCF3
CF3CFHCF3
C5
Absorbance (a.u)
Wavenumber (cm-1)
0
0.2
0.4
0.6
0.8
1
1.2
600
700
800
900
1000
1100
1200
1300
1400
1500
1600

Fig. 18

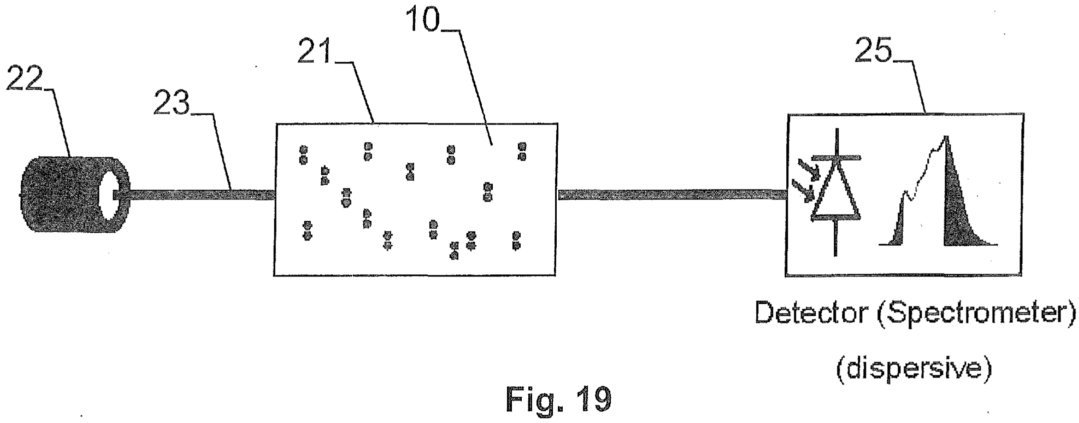
10
21
22
23
25
Detector (Spectrometer)
(dispersive)

Fig. 19

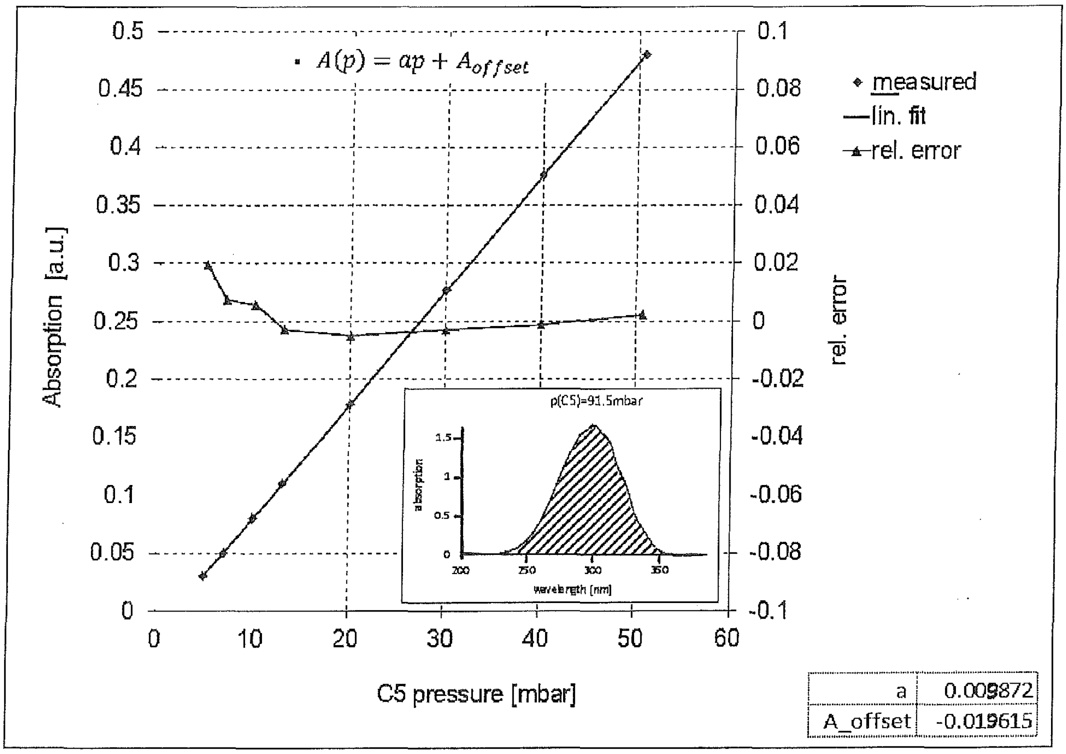
$A(p) = ap + A_{offset}$
measured
lin. fit
rel. error
Absorption [a.u.]
rel. error
C5 pressure [mbar]
0.5
0.45
0.4
0.35
0.3
0.25
0.2
0.15
0.1
0.05
0
0.1
0.08
0.06
0.04
0.02
0
-0.02
-0.04
-0.06
-0.08
-0.1
0
10
20
30
40
50
60
p(C5)=91.5mbar
absorption
wavelength [nm]
a 0.009872
A_offset -0.019615

Fig. 20

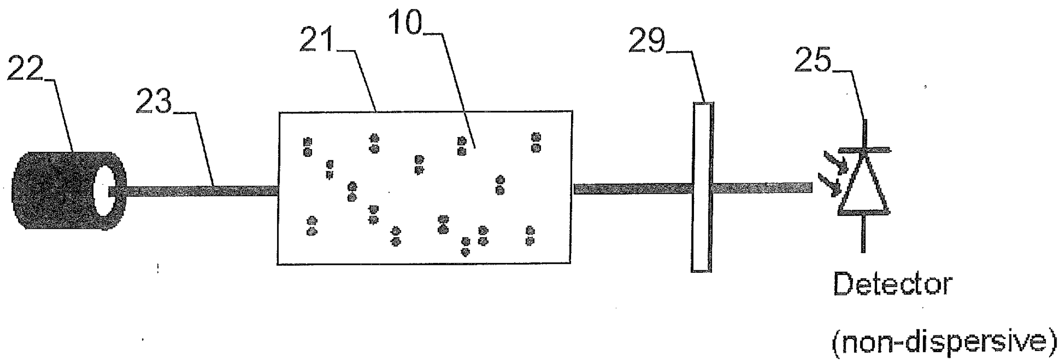
22
23
21
10
29
25
Detector
(non-dispersive)

Fig. 21

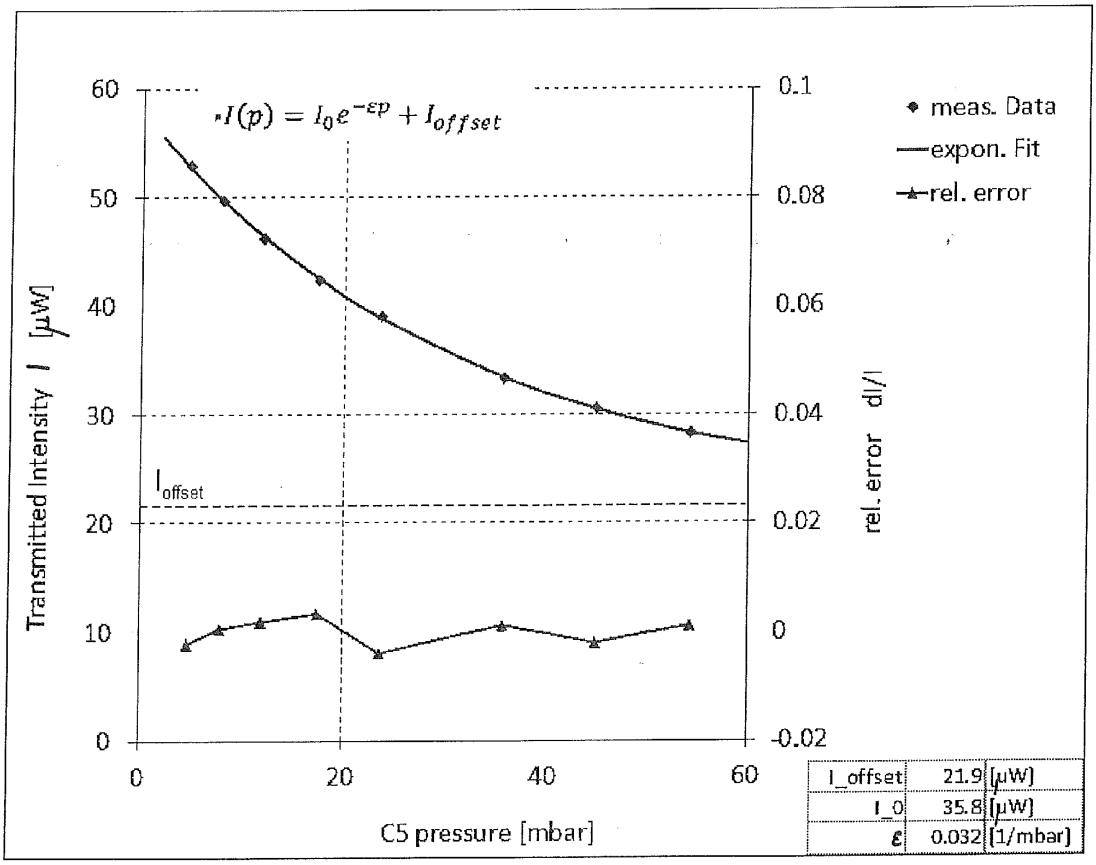
$I(p) = I_0 e^{-\varepsilon p} + I_{offset}$
meas. Data
expon. Fit
rel. error
Transmitted Intensity I [µW]
rel. error dI/I
$I_{offset}$
C5 pressure [mbar]
I_offset 21.9 [µW]
I_0 35.8 [µW]
ε 0.032 [1/mbar]

Fig. 22

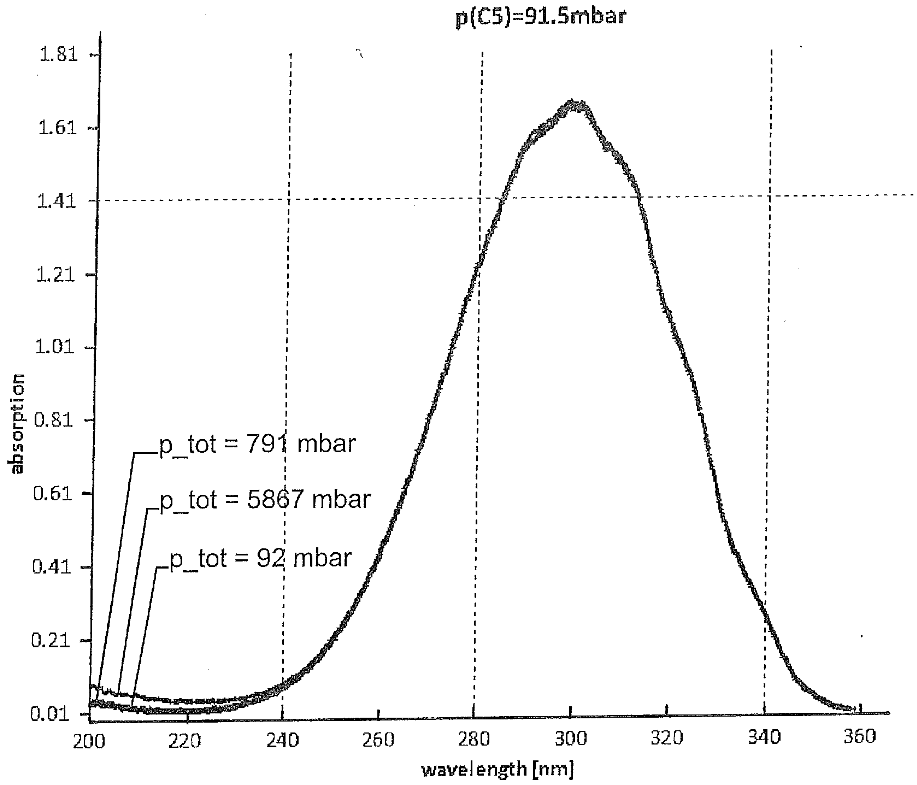
p(C5)=91.5mbar
1.81
1.61
1.41
1.21
1.01
0.81
0.61
0.41
0.21
0.01
absorption
p_tot = 791 mbar
p_tot = 5867 mbar
p_tot = 92 mbar
200
220
240
260
280
300
320
340
360
wavelength [nm]

Fig. 23

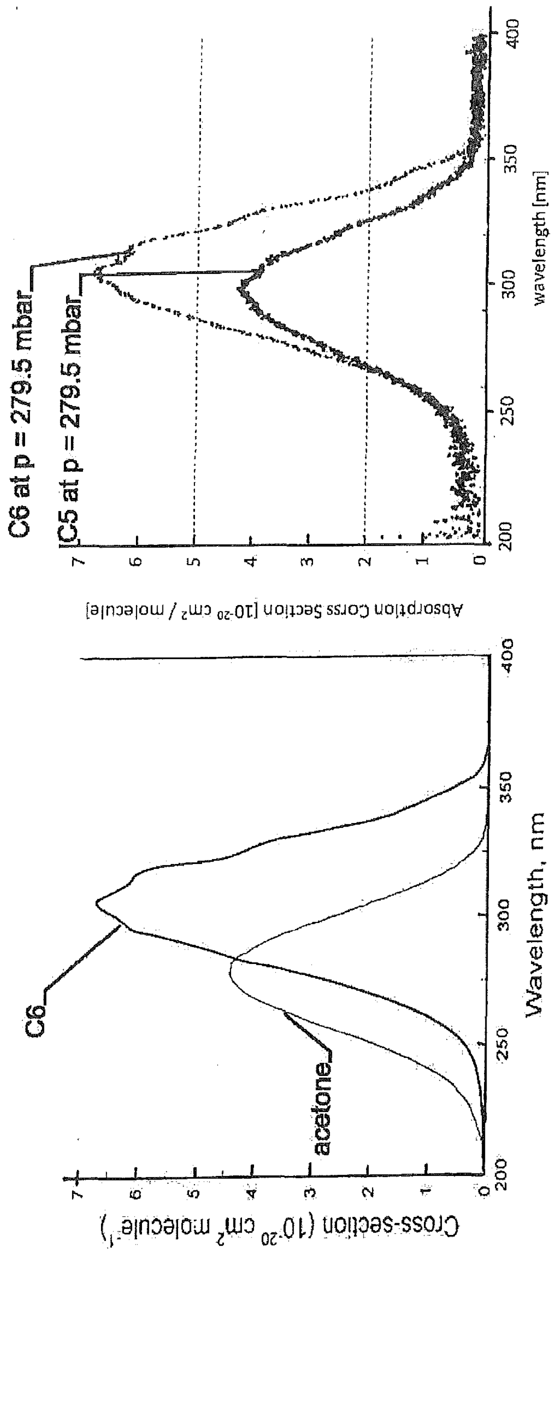
C6 at p = 279.5 mbar
C5 at p = 279.5 mbar
Absorption Corss Section [10-20 cm2 / molecule]
wavelength [nm]
C6
acetone
Cross-section (10-20 cm2 molecule-1)
Wavelength, nm


Fig. 24

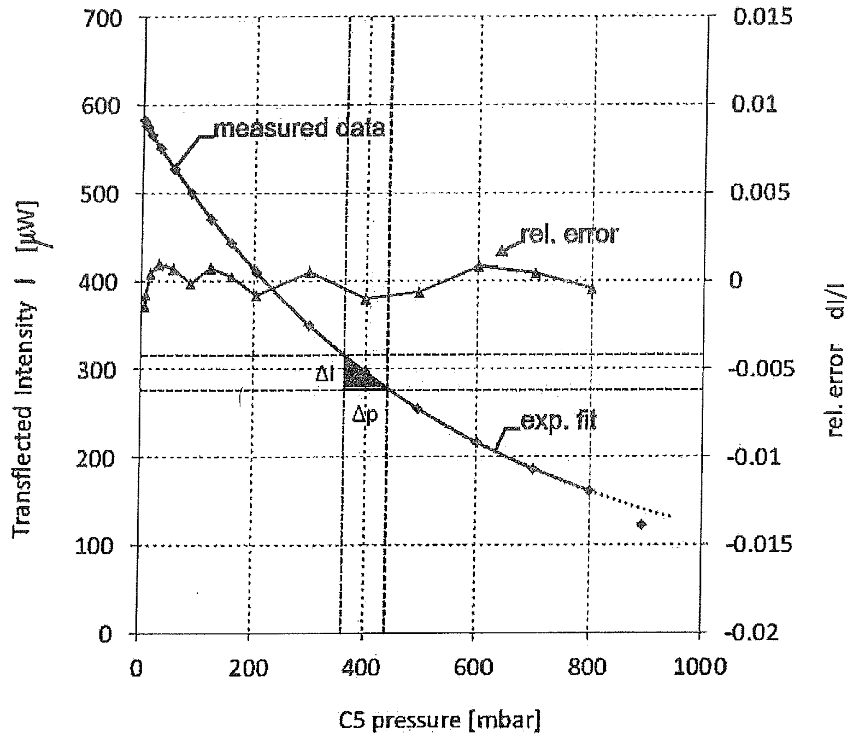
700
600
500
400
300
200
100
0
0.015
0.01
0.005
0
-0.005
-0.01
-0.015
-0.02
0
200
400
600
800
1000
measured data
rel. error
ΔI
Δp
exp. fit
Transflected Intensity I [μW]
rel. error dI/I
C5 pressure [mbar]

**Fig. 25**

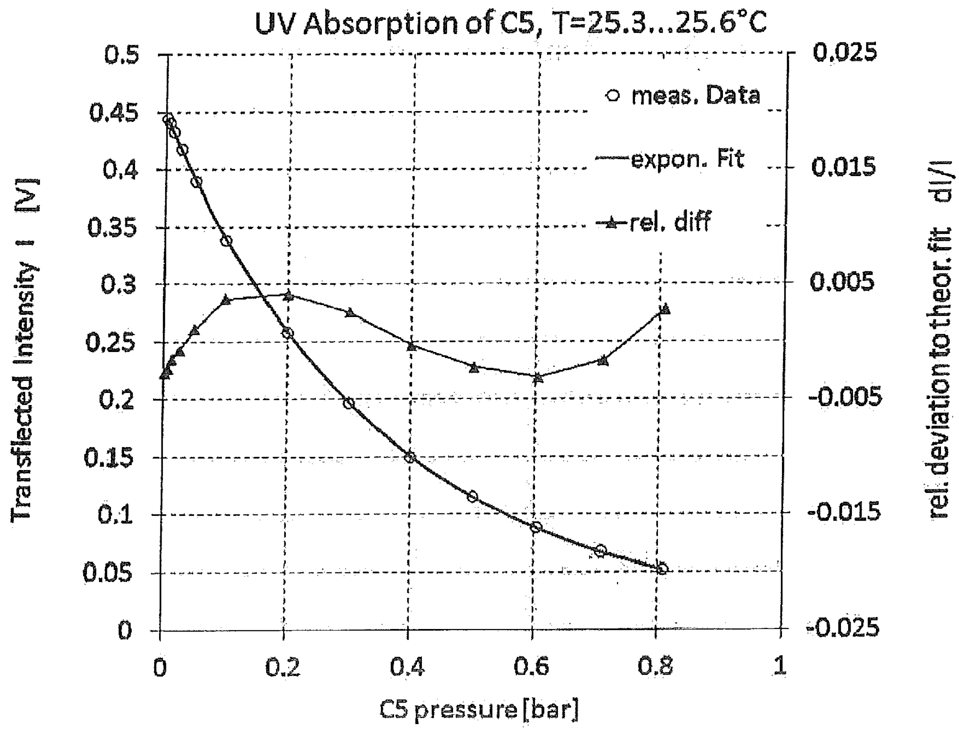
UV Absorption of C5, T=25.3...25.6°C
0.5
0.45
0.4
0.35
0.3
0.25
0.2
0.15
0.1
0.05
0
0.025
0.015
0.005
-0.005
-0.015
-0.025
0
0.2
0.4
0.6
0.8
1
meas. Data
expon. Fit
rel. diff
Transflected Intensity I [V]
rel. deviation to theor. fit dI/I
C5 pressure [bar]

**Fig. 26**

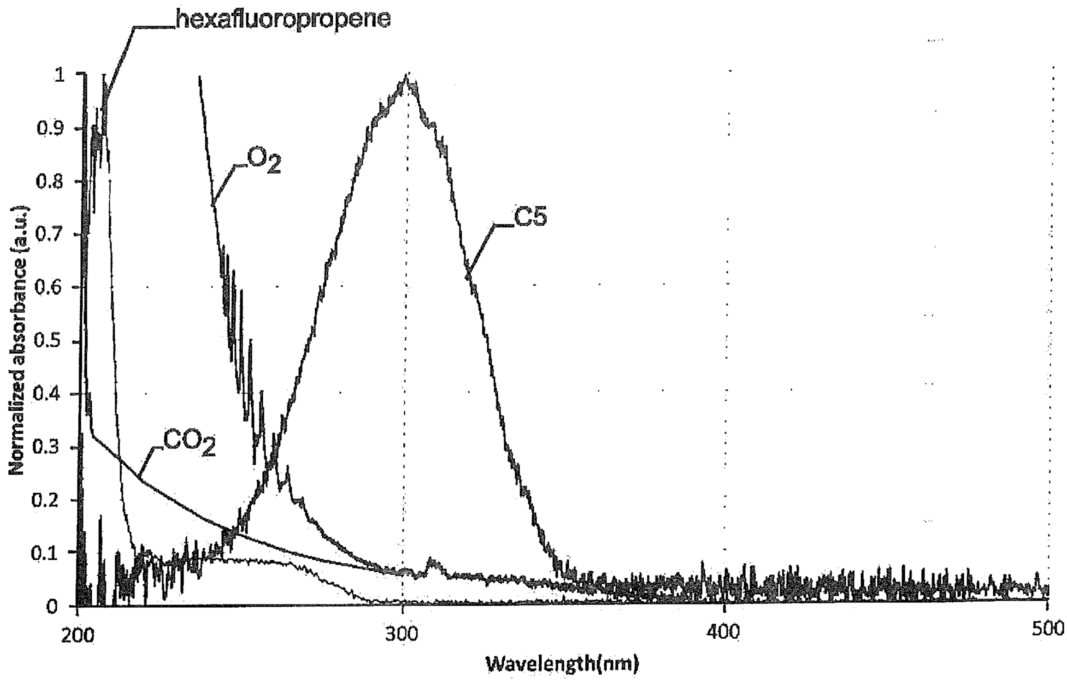
hexafluoropropene
O2
C5
CO2
Normalized absorbance [a.u.]
Wavelength(nm)
0
0.1
0.2
0.3
0.4
0.5
0.6
0.7
0.8
0.9
1
200
300
400
500

Fig. 27

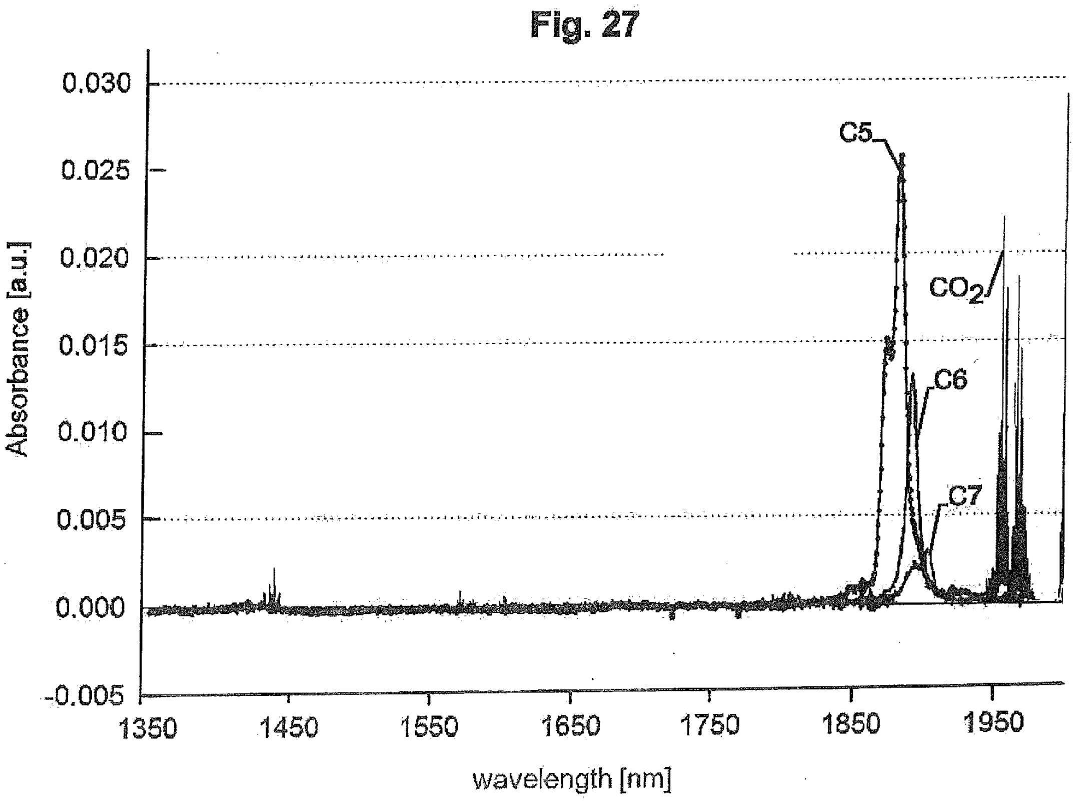
C5
CO2
C6
C7
Absorbance [a.u.]
wavelength [nm]
0.030
0.025
0.020
0.015
0.010
0.005
0.000
-0.005
1350
1450
1550
1650
1750
1850
1950

Fig. 28

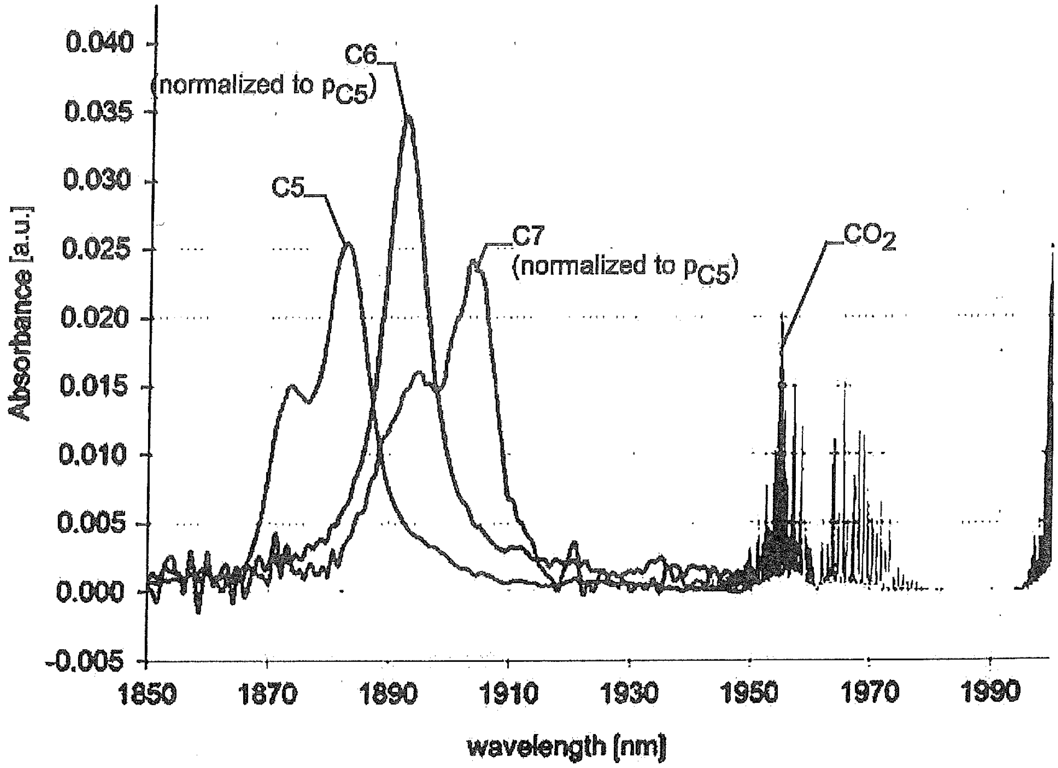
0.040
0.035
0.030
0.025
0.020
0.015
0.010
0.005
0.000
-0.005
Absorbance [a.u.]
C6
(normalized to $p_{C5}$)
C5
C7
(normalized to $p_{C5}$)
$CO_2$
1850
1870
1890
1910
1930
1950
1970
1990
wavelength (nm)

Fig. 29

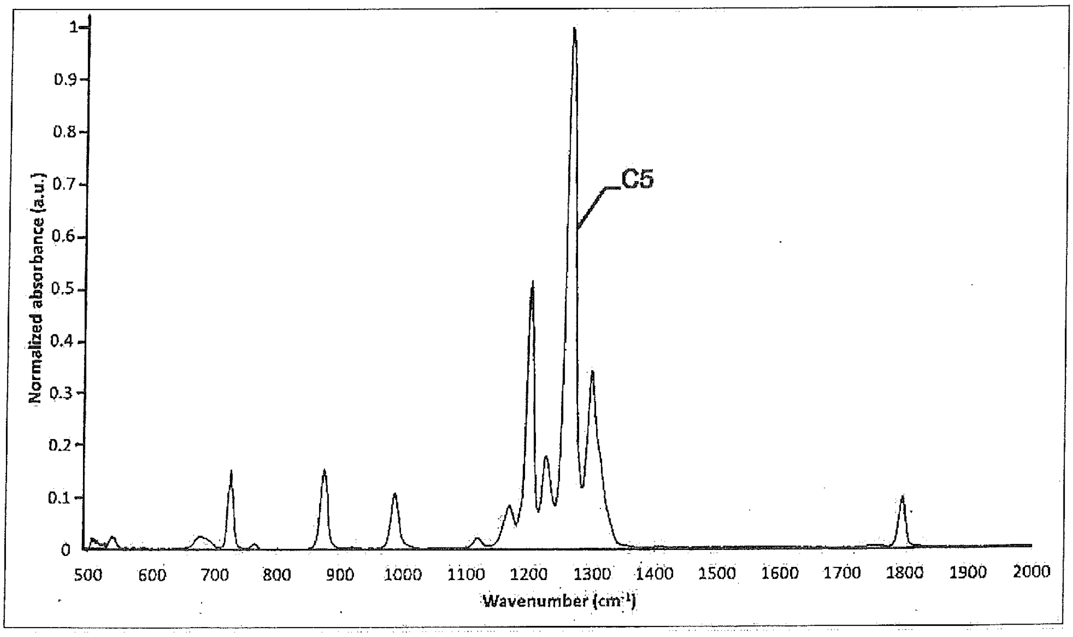
Normalized absorbance (a.u.)
1
0.9
0.8
0.7
0.6
0.5
0.4
0.3
0.2
0.1
0
C5
500
600
700
800
900
1000
1100
1200
1300
1400
1500
1600
1700
1800
1900
2000
Wavenumber ($cm^{-1}$)

Fig. 30

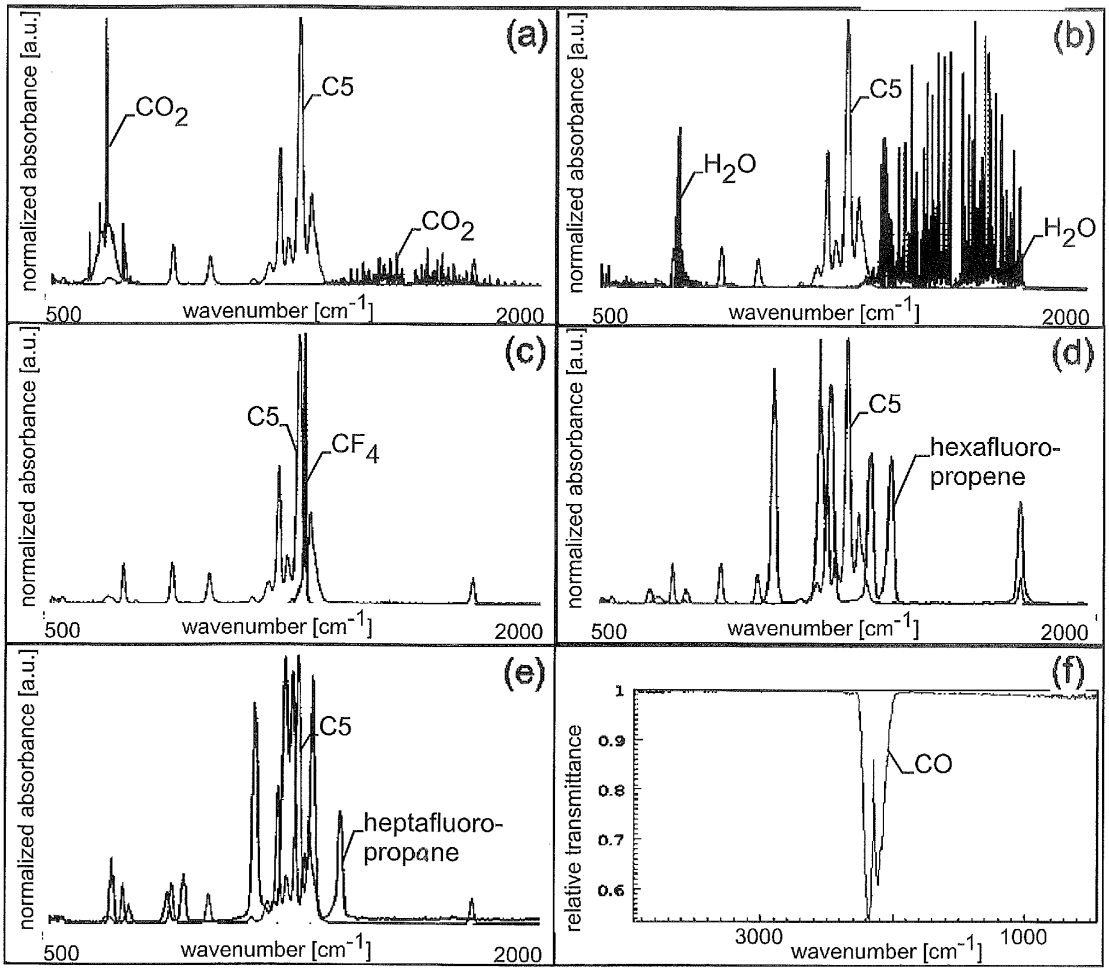
(a)
normalized absorbance [a.u.]
$CO_2$
C5
$CO_2$
500
wavenumber [cm$^{-1}$]
2000
(b)
normalized absorbance [a.u.]
$H_2O$
C5
$H_2O$
500
wavenumber [cm$^{-1}$]
2000
(c)
normalized absorbance [a.u.]
C5
$CF_4$
500
wavenumber [cm$^{-1}$]
2000
(d)
normalized absorbance [a.u.]
C5
hexafluoro-
propene
500
wavenumber [cm$^{-1}$]
2000
(e)
normalized absorbance [a.u.]
C5
heptafluoro-
propane
500
wavenumber [cm$^{-1}$]
2000
(f)
relative transmittance
1
0.9
0.8
0.7
0.6
CO
3000
wavenumber [cm$^{-1}$]
1000

Fig. 31

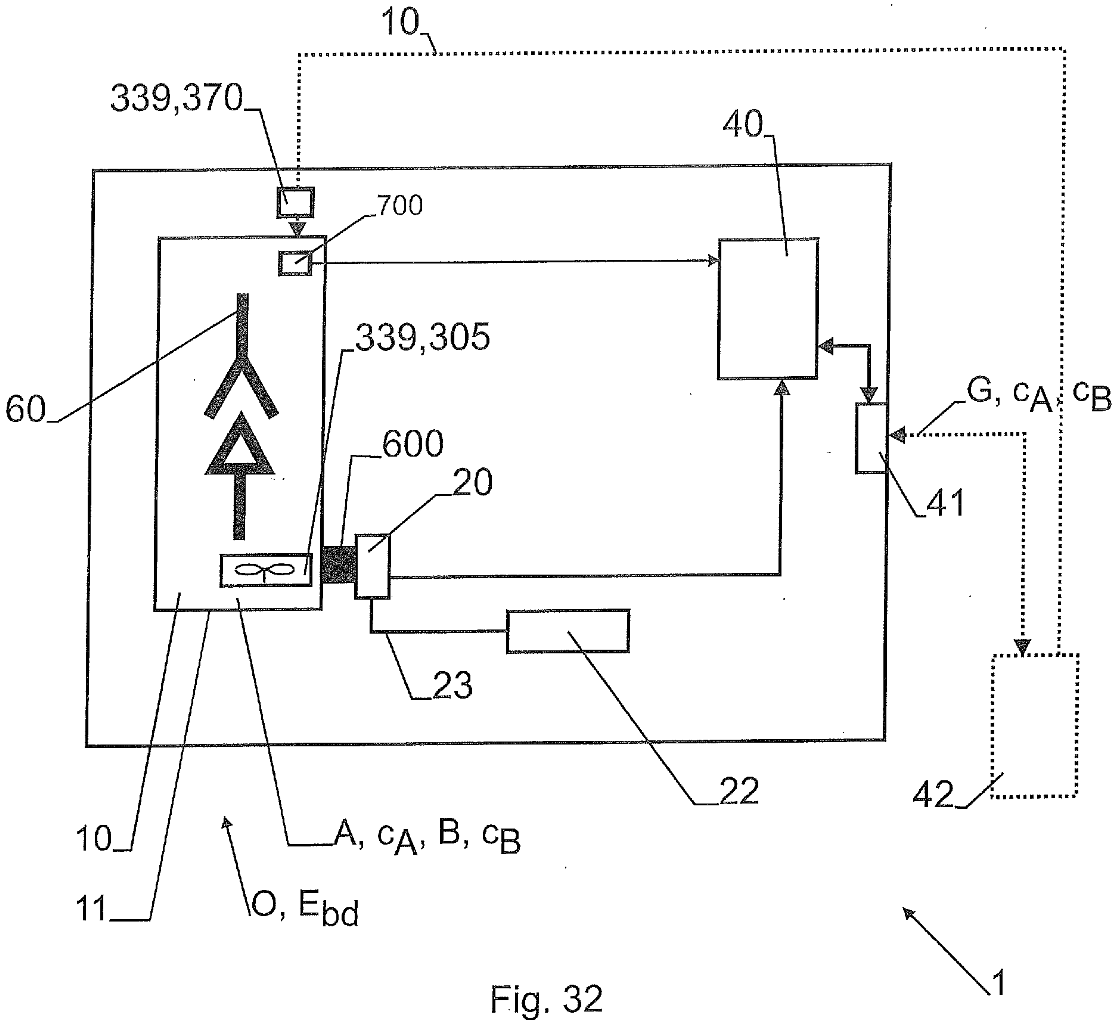
10
339,370
40
700
339,305
60
G, $c_A$, $c_B$
600
20
41
23
22
42
10
A, $c_A$, B, $c_B$
11
O, $E_{bd}$
1

Fig. 32

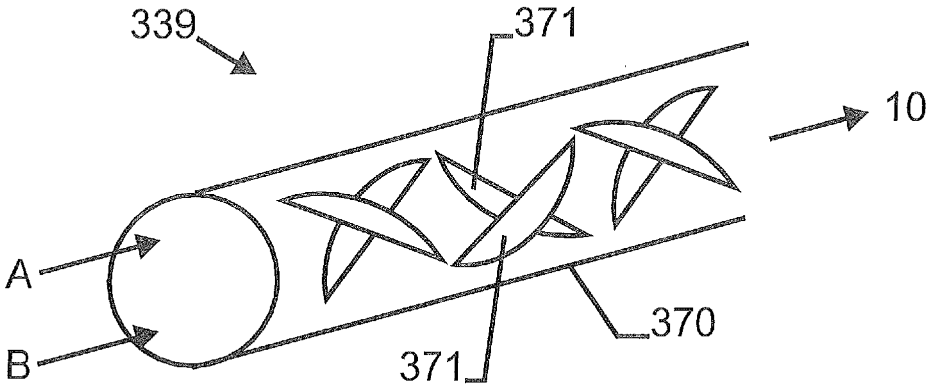


Fig. 33

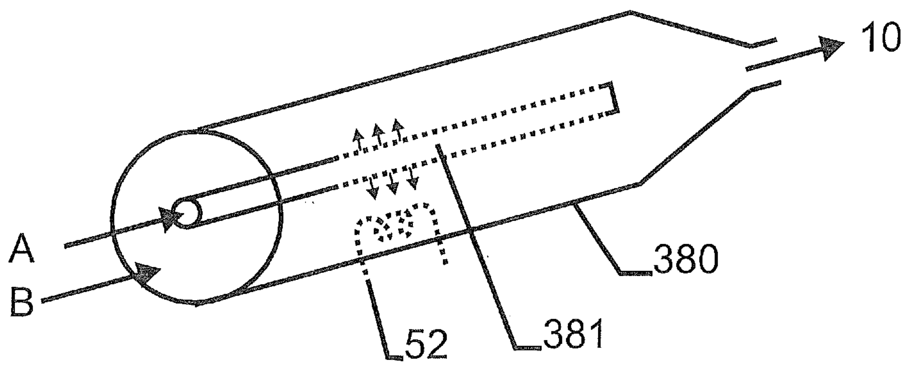


Fig. 34

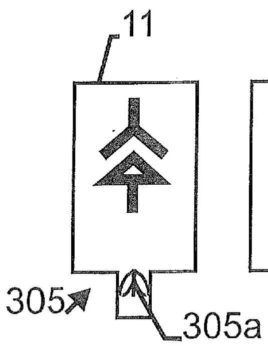

Fig. 35a

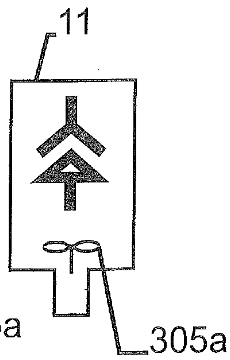

Fig. 35b

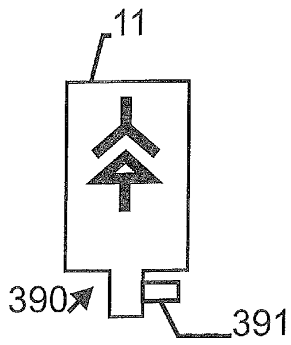

Fig. 36

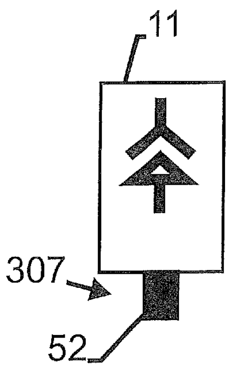

Fig. 37

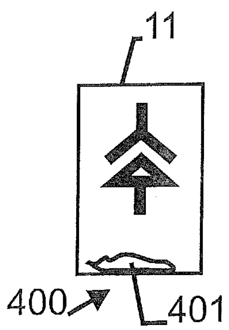

Fig. 38a

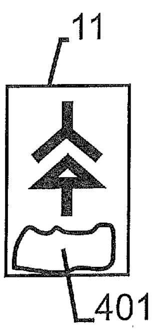

Fig. 38b

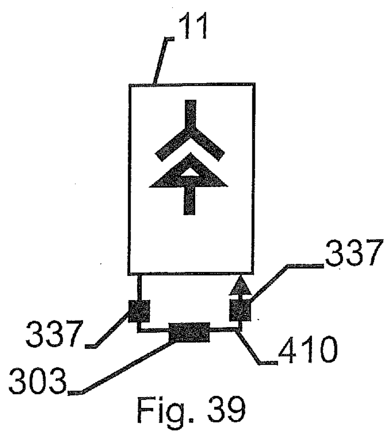

Fig. 39

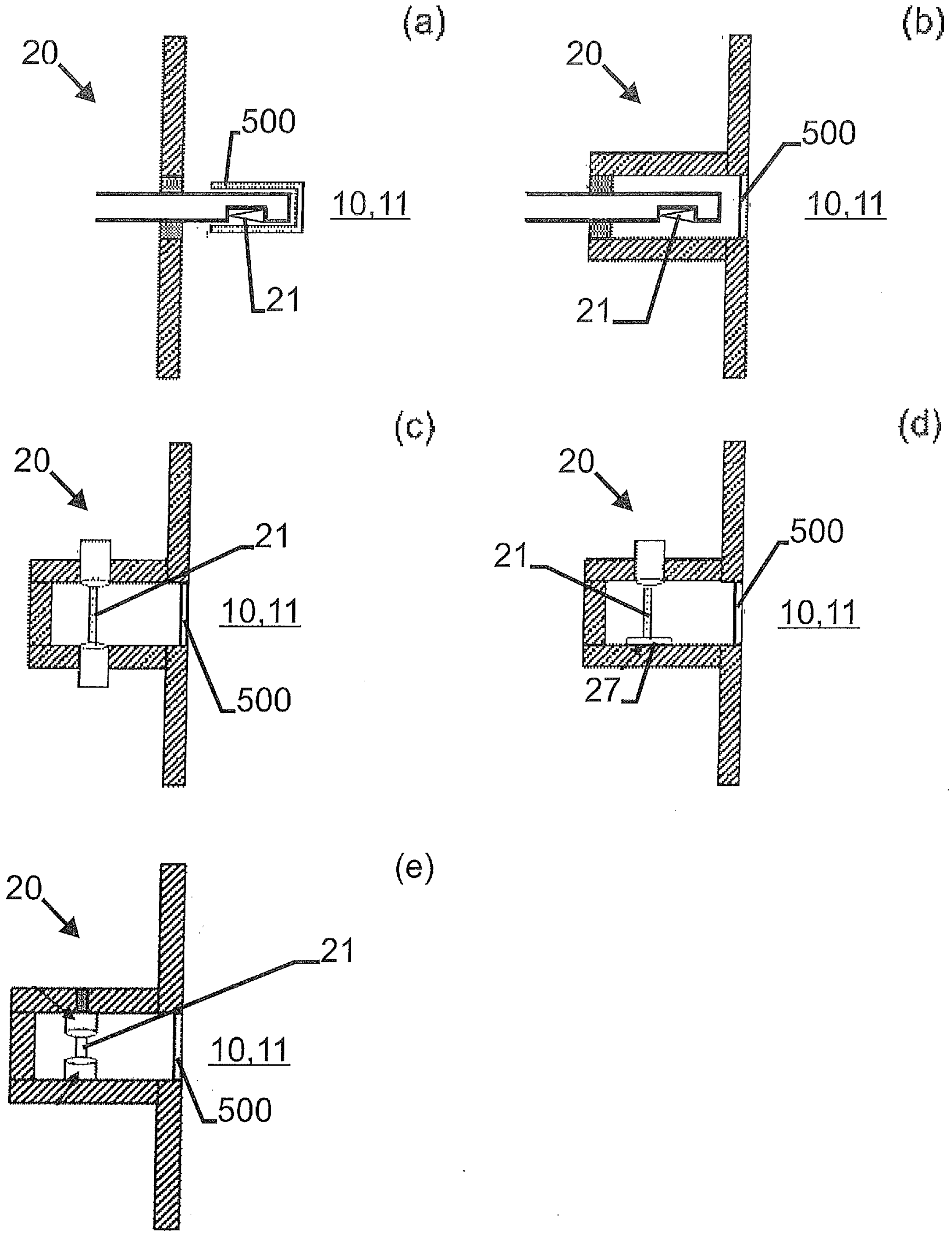
(a)
20
500
10,11
21
(b)
20
500
10,11
21
(c)
20
21
10,11
500
(d)
20
500
21
10,11
27
(e)
20
21
10,11
500

Fig. 40

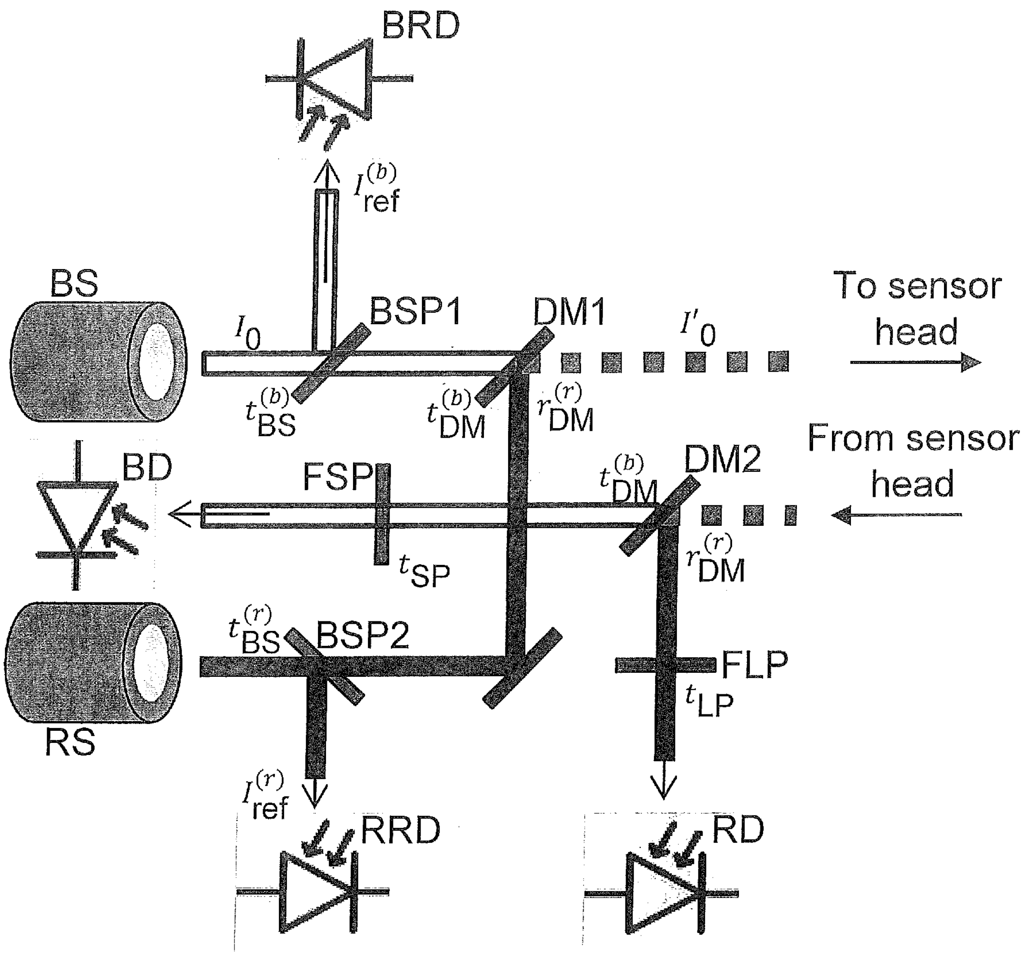
BRD
$I_{ref}^{(b)}$
BS
$I_0$
BSP1
DM1
$I'_0$
To sensor head
$t_{BS}^{(b)}$
$t_{DM}^{(b)}$
$r_{DM}^{(r)}$
From sensor head
BD
FSP
$t_{DM}^{(b)}$
DM2
$t_{SP}$
$r_{DM}^{(r)}$
$t_{BS}^{(r)}$
BSP2
FLP
$t_{LP}$
RS
$I_{ref}^{(r)}$
RRD
RD

Fig. 41

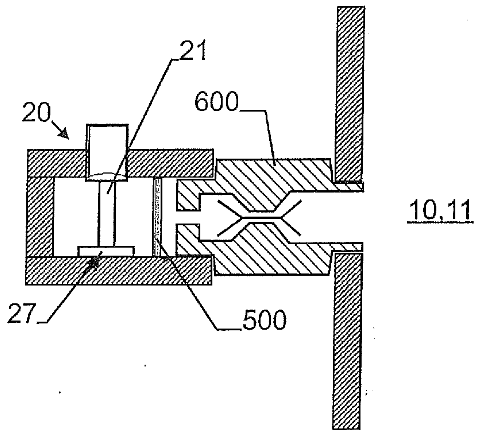
21
20
600
10,11
27
500

Fig. 42

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20020095262 A1
- US 7184895 B2
- US 5218212 A
- US 2008135817 A1
- US 4052555 A
- DE 202009009305 U1
- GB 2126790 A


### Non-patent literature cited in the description


- **R. KURTE et al.** Application of infrared spectroscopy to monitoring gas insulated high-voltage equipment: electrode material-dependent SF6 decomposition. *Anal. Bioanal. Chem.,* 2002, vol. 373, 639-646
- **J. GUSTAVSSON ; C. SEGAL.** Characterization of a Perfluorinated Ketone for LIF Applications. *46th AIAA Aerospace Sciences Meeting and Exhibit,* 07 January 2008